(19) Europäisches Patentamt
European Patent Office
Office européen des brevets

(11) EP 4 682 714 A1

(12) **EUROPEAN PATENT APPLICATION**
published in accordance with Art. 153(4) EPC

(43) Date of publication:
**21.01.2026 Bulletin 2026/04**

(21) Application number: **23927607.4**

(22) Date of filing: **04.12.2023**

(51) International Patent Classification (IPC):
***G06F 9/48*** *(2006.01)* ***G06F 9/46*** *(2006.01)*
***G06F 9/50*** *(2006.01)*

(52) Cooperative Patent Classification (CPC):
**G06F 9/46; G06F 9/48; G06F 9/50**

(86) International application number:
**PCT/JP2023/043343**

(87) International publication number:
**WO 2024/190002 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.03.2023 PCT/JP2023/009937**

(71) Applicant: **NTT, Inc.**
**Tokyo 100-8116 (JP)**

(72) Inventors:
- **SAITO, Shogo**
  **Musashino-shi, Tokyo 180-8585 (JP)**
- **ITO, Yoshito**
  **Musashino-shi, Tokyo 180-8585 (JP)**
- **FUJIMOTO, Kei**
  **Musashino-shi, Tokyo 180-8585 (JP)**

(74) Representative: **Dehns**
**10 Old Bailey**
**London EC4M 7NG (GB)**

(54) **TASK SCHEDULER DEVICE, TASK SCHEDULING METHOD, AND PROGRAM**

(57) A task scheduler device (100, 100A, 200, and 200A) includes each application dedicated instruction ratio acquisition unit (110) that acquires an execution ratio of a dedicated instruction specialized for specific calculation, of each application that operates on a server, an intra-CPU calculator configuration information recording unit (150) that records the number of intra-CPU calculators as the number of instructions executable at the same time, a core allocation determination unit (120) that determines a core allocation destination to a same physical core, using the execution ratio of the dedicated instruction and the number of intra-CPU calculators, and a core allocation unit (160) that allocates logical cores (21 and 22) in which each process is operable, based on an identifier of the process and an identifier of the logical core (21 and 22), regarding the core allocation destination determined by the core allocation determination unit (120).

**Fig. 2**

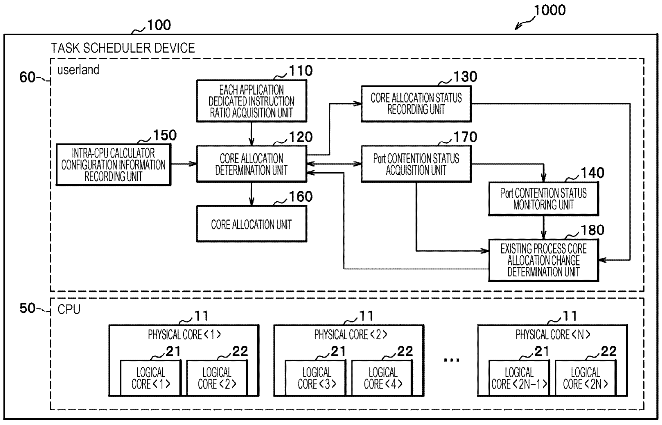


EP 4 682 714 A1

## Description

Technical Field

The present invention relates to a task scheduler device, a task scheduling method, and a program.

Background Art

In a virtual radio access network (vRAN) and artificial intelligence (AI) inference technology, calculation executed by a CPU is frequently used. For example, in an application that executes signal and media processing on the CPU (for example, vRAN L1 signal processing or Deep-Learning), for arithmetic processing with a high throughput, a single instruction multiple data (SIMD) extended instruction set (for example, Intel SSE/AVX512, "Intel" is registered trademark) of the CPU is frequently used.

As existing art, there is a technology for securing fairness, by allocating certain CPU times respectively to every process (Non Patent Literature 1).

[Instruction Contention in SMT Technology]

Simultaneous multi-threading (SMT) such as Intel Hyper Threading is a technology that makes a calculator for a microinstruction of a CPU shared between logical cores to increase an operation rate of the calculator. On the other hand, depending on an instruction type, execution of the microinstructions in a core contends, and performance deteriorates (referred to as "Port Contention event"). Specifically, vector arithmetic microinstructions frequently used in the vRAN have a small number of arithmetic units mounted in the core and are likely to contend with each other.

An instruction contention in the SMT technology is described with reference to Figs. 41 to 43.

Fig. 41 is a diagram illustrating a configuration of a CPU including a SIMD unit that executes a microinstruction in a core.

As illustrated in Fig. 41, a CPU 1 includes four physical cores (CPU core) 11. Here, the physical core 11 is a single CPU core that simultaneously executes two or more processing.

As in an enlarged diagram in Fig. 41, the physical core 11 includes a logical core 21 (logical core <1>) and a logical core 22 (logical core <2>) that execute two threads for each core, a decoder 23 that converts a machine language read from registers 21a and 22a of the logical cores 21 and 22 into the microinstruction, and a plurality of ports P0 to P6, and an intra-CPU calculator 25 (for example arithmetic logic unit (ALU), and ALD/static timing analysis (STA), numeric _std of VHDL (STD)) from each of the ports Port0 to Port6.

As described above, the vector arithmetic microinstructions have a small number of arithmetic units mounted in the core and are likely to contend. For example, in Xeon ("Xeon" is registered trademark) of the Skylake generation, four calculators are used for general-purpose calculation. Whereas, the SIMD has two calculators for each of add/mul ("/" indicates "or") and one for shift.

As indicated by a broken line box "a" in the enlarged diagram in Fig. 41, a general-purpose instruction (Scalar) has many calculators and has a high degree of parallelism. Therefore, resources hardly contend.

On the other hand, as indicated in a broken line box "b" in the enlarged diagram in Fig. 41, a VECTOR instruction (SIMD) has a smaller number of calculators and has a low parallelism degree. Therefore, the resource contention is likely to occur.

In this way, in the SIMD calculation of the CPU frequently used in the vRAN and AI inference, an event occurs in which the logical cores 21 and 22 contend with each other in the same physical core 11 having the SMT configuration to deteriorate in performance.

Fig. 42 is a diagram illustrating a configuration of the CPU in a case where the microinstruction in Fig. 41 is the general-purpose instruction (Scalar). The upper diagram in Fig. 42 is a diagram for describing an operation of the intra-CPU calculator 25 that executes the general-purpose instruction, and the lower diagram in Fig. 42 is a diagram illustrating parallel execution of the logical cores 21 and 22 in the upper diagram in Fig. 42. An execution part of the microinstruction is indicated by a thick frame (hereinafter, described in the same manner).

As illustrated in the upper diagram in Fig. 42, a large number of intra-CPU calculators 25 execute the general-purpose instructions, and for the general-purpose instruction, a contention is less likely to occur. Therefore, as illustrated in the lower diagram in Fig. 42, the logical cores 21 and 22 can execute the general-purpose instructions in parallel, and performance deterioration is small.

Fig. 43 is a diagram illustrating a configuration of the CPU in a case where the microinstruction in Fig. 41 is SIMD calculation. The upper diagram in Fig. 43 is a diagram for describing an operation of the intra-CPU calculator 25 that executes the VECTOR instruction (SIMD), and the lower diagram in Fig. 43 is a diagram illustrating parallel execution of the logical cores 21 and 22 in the upper diagram in Fig. 43.

As indicated by a reference sign c in the upper diagram in Fig. 43, regarding the VECTOR instruction (SIMD), a smaller number of intra-CPU calculators 25 execute the SIMD instruction (only one port P5), and a contention is likely to occur. Therefore, as illustrated in the lower diagram in Fig. 43, it is difficult to execute the logical cores 21 and 22 in parallel, and the performance is likely to deteriorate. In order to avoid this, it is necessary to consider a combination of the processes. However, there has been only the technology of Non Patent Literature 1 that allocates certain CPU times respectively to every process.

A gap between the existing art and requirements is described next, using the Linux ("Linux" is registered trademark) completely fair scheduler (CFS) in Non Patent Literature 1 as an example.

Fig. 44 is a diagram illustrating a core allocation status. The same components as those in Fig. 41 are denoted with the same reference signs.

Non Patent Literature 1 is a technology for securing fairness, by allocating certain CPU times respectively to every process. Therefore, because Non Patent Literature 1 does not consider a contention between dedicated instructions for respective processes (refer to reference sign d in Fig. 44), a "requirement 1: a CPU processing time required for each process is allocated" is not satisfied.

Citation List

Non Patent Literature

Non Patent Literature 1: Linux CFS Scheduler, The Linux Kernel6.2.0, [online], [retrieved on March 1, 2023], the Internet <URL : https://www.kernel.org/doc/html/latest/scheduler/sched-design-CFS.html>

Non Patent Literature 2: srsRAN workerpool,[online], [retrieved on November 1, 2023], the Internet<URL :https://docs.srsran.com/projects/project/en/latest/knowledge _base/source/gnb_components/source/index.html>

Summary of Invention

Technical Problem

As described above, there is a problem that, because Non Patent Literature 1 does not consider the contention between the dedicated instructions for respective processes, it is not possible to allocate the CPU processing time required for each process, the number of execution cores becomes excessive, and wasteful power consumption occurs.

The present invention has been made in view of such a background, and an object of the present invention is to achieve both of securing performance between dedicated instructions and performance between dedicated instruction types and reducing the number of cores in order to save power.

Solution to Problem

In order to solve the above problem, a task scheduler device is disclosed, which includes a dedicated instruction ratio acquisition unit that acquires an execution ratio of a dedicated instruction specialized for specific calculation, of each application that operates on a server, an intra-CPU calculator configuration information recording unit that records the number of intra-CPU calculators as the number of instructions executable at the same time, a core allocation determination unit that determines a core allocation destination to a same physical core, using the execution ratio of the dedicated instruction from the dedicated instruction ratio acquisition unit and the number of intra-CPU calculators from the intra-CPU calculator configuration information recording unit, and a core allocation unit that allocates a logical core in which each process is operable, based on an identifier of the process and an identifier of the logical core, to the core allocation destination determined by the core allocation determination unit.

Advantageous Effects of Invention

According to the present invention, it is possible to achieve both of securing performance between dedicated instructions and performance between dedicated instruction types and reducing the number of cores and thereby to save power.

Brief Description of Drawings

Fig. 1 is a schematic configuration diagram of a computing system including a task scheduler device according to a first embodiment of the present invention.

Fig. 2 is a configuration diagram of the task scheduler device according to the first embodiment of the present invention.

Fig. 3 is a configuration diagram in which the task scheduler device according to the first embodiment of the present invention is arranged in a VM/container.

Fig. 4 is a diagram illustrating, in a form of a table, a structure of a management database included in each application dedicated instruction ratio acquisition unit of the task scheduler device according to the first embodiment of the present invention.

Fig. 5 is a diagram illustrating a table of a contention degree between applications referred by a core allocation determination unit of the task scheduler device according to the first embodiment of the present invention.

Fig. 6 is a diagram illustrating, in a form of a table, a structure of a management database included in a core allocation status recording unit of the task scheduler device according to the first embodiment of the present invention.

Fig. 7 is a diagram illustrating an example of a table in a case where an intra-CPU calculator configuration information recording unit of the task scheduler device according to the first embodiment of the present invention manages each port information.

Fig. 8 is a diagram illustrating an example of a table in a case where the intra-CPU calculator configuration information recording unit of the task scheduler device according to the first embodiment of the present invention records only a maximum parallelism degree of each instruction.

Fig. 9 is a flowchart illustrating an operation of each unit of the task scheduler device according to the first embodiment of the present invention at the time when a new application is activated.

Fig. 10 is a flowchart illustrating a determination logic (part 1) of the core allocation determination unit of the task scheduler device according to the first embodiment of the present invention.

Fig. 11 is a diagram illustrating a calculation example of a load amount in the flowchart in Fig. 10.

Fig. 12 is a diagram illustrating a calculation example of a core contention degree in the flowchart in Fig. 10.

Fig. 13 is a flowchart illustrating the determination logic (part 2) of the core allocation determination unit of the task scheduler device according to the first embodiment of the present invention.

Fig. 14 is a diagram for describing RAN L1 task allocation described in Non Patent Literature 2.

Fig. 15 is a diagram for describing a basic concept of the present invention.

Fig. 16 is a configuration diagram of a task scheduler device according to a second embodiment of the present invention.

Fig. 17 is a configuration diagram of a task scheduler device of the present invention applied to a vRAN DU system.

Fig. 18 is a configuration diagram in which the task scheduler device according to the second embodiment of the present invention is arranged in a VM/container.

Fig. 19 is a diagram illustrating a table of a data structure example of each task dedicated instruction usage ratio recording unit of the task scheduler device according to the second embodiment of the present invention.

Fig. 20 is a diagram illustrating a data structure table of a data structure example of a low latency requirement recording unit of the task scheduler device according to the second embodiment of the present invention.

Fig. 21 is a diagram illustrating a data structure table of a data structure example of each task load amount recording unit of the task scheduler device according to the second embodiment of the present invention.

Fig. 22 is a diagram illustrating a required isolation degree and core number table derived by each-task-required isolation degree and core number calculation unit of a core allocation determination unit of the task scheduler device according to the second embodiment of the present invention.

Fig. 23 is a diagram illustrating a required isolation degree and core number table used for a vRAN derived by each-task-required isolation degree and core number calculation unit of the core allocation determination unit of the task scheduler device according to the second embodiment of the present invention.

Fig. 24 is a diagram for describing a derivation example of the required isolation degree and core number table of the task scheduler device according to the second embodiment of the present invention.

Fig. 25 is a diagram illustrating a correspondence relationship between a priority group and each task type, used in a case where each-task-required isolation degree and core number calculation unit of the task scheduler device according to the second embodiment of the present invention groups priorities of task execution in advance.

Fig. 26 is a diagram illustrating a correspondence relationship between a priority group for each task type and an allocated core used by the task scheduler device according to the second embodiment of the present invention.

Fig. 27 is a diagram for describing task allocation in a case where the task scheduler device according to the second embodiment of the present invention does not group the task execution

Fig. 28 is a diagram for describing the task allocation in a case where the task scheduler device according to the second embodiment of the present invention groups the task execution.

Fig. 29 is a flowchart illustrating a core allocation decision sequence of the task scheduler device according to the second embodiment of the present invention.

Fig. 30 is a flowchart illustrating a sequence at a time of task processing of the task scheduler device according to the second embodiment of the present invention.

Fig. 31 is a flowchart illustrating a core allocation decision sequence of a core allocation decision unit of the task scheduler device according to the second embodiment of the present invention.

Fig. 32 is a configuration diagram of <First Modification> of the task scheduler device according to the second embodiment of the present invention.

Fig. 33 is a flowchart illustrating the core allocation decision sequence of the task scheduler device illustrated in Fig. 32.

Fig. 34 is a configuration diagram of <Second Modification> of the task scheduler device according to the second embodiment of the present invention.

Fig. 35 is a flowchart illustrating the core allocation decision sequence of the task scheduler device illustrated in Fig. 34.

Fig. 36 is a configuration diagram of <Third Modification> of the task scheduler device according to the second embodiment of the present invention.

Fig. 37 is a flowchart illustrating the core allocation decision sequence of the task scheduler device illustrated in Fig. 36.

Fig. 38 is a configuration diagram of <Fourth Modification> of the task scheduler device according to the second embodiment of the present invention.

Fig. 39 is a flowchart illustrating the core allocation decision sequence of the task scheduler device illustrated in Fig. 38.

Fig. 40 is a hardware configuration diagram illustrating an example of a computer that implements functions of the task scheduler device of a computing system according to the first and second embodiments of the present invention.

Fig. 41 is a diagram illustrating a configuration of a CPU including a SIMD unit that executes a microinstruction in a core.

Fig. 42 is a diagram illustrating a configuration of a CPU in a case where the microinstruction in Fig. 41 is a general-purpose instruction (Scalar).

Fig. 43 is a diagram illustrating a configuration of a CPU in a case where the microinstruction in Fig. 41 is SIMD calculation.

Fig. 44 is a diagram illustrating a core allocation status by the existing technology.

Description of Embodiments

A task scheduler device and the like in a mode for carrying out the present invention (hereinafter, referred to as "the present embodiment") is described below with reference to the drawings.

(First Embodiment)

[Overview]

Fig. 1 is a schematic configuration diagram of a computing system including a task scheduler device according to a first embodiment of the present invention. The same components as those in Fig. 41 are denoted with the same reference signs.

The first embodiment is an example applied to a CPU as a computing system. In addition to the CPU, the present embodiment is similarly applicable to a processor such as a graphic processing unit (GPU), a field programmable gate array (FPGA), and an application specific integrated circuit (ASIC).

As illustrated in Fig. 1, a computing system 1000 includes a task execution request unit 30, an application instruction ratio management unit 40, a task scheduler device 100, and physical cores (processor) 11 and 12 on the CPU (physical core <1>, physical core <2>).

The task execution request unit 30 requests the task scheduler device 100 to execute a task.

The application instruction ratio management unit 40 manages application information and is called by the task scheduler device 100.

The application information (example: vRAN task group) is, for example, as follows.

· Pre-coding (vector multiplication M tenths, vector shift N tenths)
· Demap
· Logger Process (general-purpose instruction 10 tenths)
· QR-Decompression

- Phase Noise Estimation
- Eigen Beamforming
- Pre-Coding
- De-mapping

The computing system 1000 executes dedicated instructions that are specialized for specific calculation, including SIMD instructions or dedicated instructions for encryption. The computing system 1000 includes the task scheduler device 100 that allocates an execution process of a dedicated instruction to a logical core using hardware multi-threading that makes one physical core appear as a plurality of logical cores in a pseudo manner.

The physical core 11 (physical core <1>) includes a logical core 21 (logical core <1>) and a logical core 22 (logical core <2>) that execute two threads. The logical core 21 executes a Pre-coding process, and the logical core 22 executes a De-mapping process.

The physical core 12 (physical core <2>) includes a logical core 21 (logical core <1>) and a logical core 22 (logical core <2>) that execute two threads. The logical core 21 executes the Pre-coding process, and the logical core 22 executes a logger process.

<Management of Application Information>

The task scheduler device 100 manages types and frequencies of instructions of each application, in a table (described below).

<Management of CPU Hardware Information>

The task scheduler device 100 manages information regarding the number of arithmetic units and a configuration for each instruction type of the CPU, in a table (Fig. 11 described below).

At a time of scheduling, each process is allocated to the logical core, so that processes to be executed do not contend, under the management of the application information and management of CPU hardware information.

The task scheduler device 100 is a core allocation scheduler that allocates the logical cores 21 and 22, so as to be a combination with no contention, in consideration of an execution ratio of the SIMD instruction (described below). When a process in which instructions contend is executed, the task scheduler device 100 allocates the process to another physical core (reference sign aa in Fig. 1), and allocates a process in which instruction execution is less likely to contend to a remaining logical core (reference sign bb in Fig. 1).

[Configuration of Task Scheduler Device]

Fig. 2 is a configuration diagram of the task scheduler device according to the first embodiment of the present invention.

As illustrated in Fig. 2, the task scheduler device 100 is a core allocation scheduler in a server and includes a CPU 50 that is hardware (HW), the physical cores 11 (processor, physical core <1>, physical core <2>, ..., and physical core <N>) on the CPU 50, and a userland 60.

The task scheduler device 100 includes, in the userland 60, each application dedicated instruction ratio acquisition unit 110, a core allocation determination unit 120, a core allocation status recording unit 130, a Port contention status monitoring unit 140, an intra-CPU calculator configuration information recording unit 150, a core allocation unit 160, a Port contention status acquisition unit 170, and an existing process core allocation change determination unit 180.

<CPU 50>

The CPU 50 includes the physical cores 11 (physical core <1>, physical core <2>, ..., and physical core <N>). The physical cores 11 (physical core <1>, physical core <2>,..., and physical core <N>) include the logical core <1> and the logical core <2> that execute two threads for each physical core, by using hyper threading that makes one physical core appear as two physical cores in a pseudo manner. Here, the physical core <1> includes the logical core <1> and the logical core <2>, the physical core <2> includes a logical core <3> and a logical core <4>, and the physical core <N> includes a logical core <2N - 1> and a logical core <2N>.

<Each Application Dedicated Instruction Ratio Acquisition Unit 110>

The each-application-dedicated instruction ratio acquisition unit 110 acquires an execution ratio of the dedicated instruction (ratios at which various dedicated instructions are executed), of each application that operates on the server.

Specifically, the each-application dedicated instruction ratio acquisition unit 110 records an expected value of the ratio at which each of various dedicated instructions is executed, of each application that operates on the server (example using expected value is described below). Data acquired by the each-application dedicated instruction ratio acquisition unit 110 includes a ratio of each instruction included in a log at a time of compilation for creating each of various applications and a type of the application (various processing types such as Pre-coding or Demap, AI inference applications, and others, among vRAN signal processing applications). The each-application dedicated instruction ratio acquisition unit 110 registers (records) these pieces of data before a system is activated.

<<Other Examples>>

A control target may be each of VM/containers, instead of processes, and an expected value of an execution ratio of a dedicated instruction for each VM/container may be recorded (Fig. 3).

<Core Allocation Determination Unit 120>

The core allocation determination unit 120 determines a core allocation destination to the same physical core, using the execution ratio of the dedicated instruction acquired by the each-application dedicated instruction ratio acquisition unit 110 and the number of intra-CPU calculators by the intra-CPU calculator configuration information recording unit 150.

The core allocation determination unit 120 allocates each process to the logical core so that the processes to be executed do not contend.

The core allocation determination unit 120 allocates the logical core so as to make a combination in which performance between the dedicated instructions does not contend and performance between types of the dedicated instructions does not contend.

The core allocation determination unit 120 preferentially allocates a process that executes a general-purpose instruction to a physical core to which a process for executing the dedicated instruction is allocated.

The core allocation determination unit 120 selects, from among the logical cores, a logical core in which a process with the lowest contention degree operates for a process to be newly activated.

In a case where the process in which the instructions contend is executed, the core allocation determination unit 120 allocates the process to another physical core and allocates "a process in which instruction execution is less likely to contend" to the remaining logical core. As the "process in which the instruction execution is less likely to contend," a "process mainly using a general-purpose instruction," for example, a management process of calculation results or a log storing process is exemplified as an example. For example, in a case of Fig. 7 described below, because the general-purpose instruction can be executed by four Ports 0, 1, 5, and 6, the number of options at the time of execution is large, and thus the general-purpose instruction does not contend with an encryption related instruction allocated only to the Port 0 and a vector shift instruction allocated only to the Port 5.

The core allocation determination unit 120 is activated by a trigger that is an activation of a new application or detection of the contention by the existing process core allocation change determination unit 180, determines the core allocation destination based on an execution ratio of a dedicated instruction of the new process and an execution status of a dedicated instruction by a CPU core at the time of activation, and instructs the core allocation unit 160 to perform core allocation.

<<Input>>

The core allocation determination unit 120 receives an identifier of an application that is newly activated.

The core allocation determination unit 120 acquires an expected value of an execution ratio of a dedicated instruction of an application to be activated, from the each-application dedicated instruction ratio acquisition unit 110.

The core allocation determination unit 120 acquires the number of calculators corresponding to each instruction of the CPU, from the intra-CPU calculator configuration information recording unit 150.

The core allocation determination unit 120 acquires a Port contention status at the time of an application activation request, from the Port contention status acquisition unit 170.

<<Output>>

The core allocation determination unit 120 notifies the core allocation status recording unit 130 of a determination result of core allocation.

The core allocation determination unit 120 notifies the core allocation unit 160 of the identifier of the newly activated application and a number list of logical cores to be allocated.

<<Other Examples>>

A mechanism may be used in which a contention degree of a combination between the tasks is stored as a table in advance, a list of processes allocated to each core is acquired from the core allocation status recording unit 130, and the core is allocated in a combination with the lowest contention degree.

At this time, it is assumed that the contention degree of the combination between the tasks (Fig. 5) has been tested and registered before the system is executed. Note that, as in a variation in Fig. 8 described below, am embodiment may be used in which allocation is determined, by considering only a maximum parallelism degree of instructions, in spite of calculation of the contention degree for each port.

<Core Allocation Status Recording Unit 130>

The core allocation status recording unit 130 records a correspondence relationship between each logical core and a process allocated to the core.

<<Input>>

The core allocation status recording unit 130 acquires and updates a core allocation status from the core allocation determination to a new process by the core allocation determination unit 120.

<<Other Examples>>

An embodiment may be used in which the latest core allocation status is periodically acquired from an OS scheduler and the core allocation status updated (for example, updated using taskset command of Linux).

<Port Contention Status Monitoring Unit 140>

The Port contention status monitoring unit 140 periodically acquires a Port contention status of each physical core from the Port contention status acquisition unit 170, and in a case where the contention degree exceeds a certain numerical value, the port contention status monitoring unit 140 notifies the existing process core allocation change determination unit 180 of a number of a physical core with a high contention degree.

<<Input>>

The Port contention status monitoring unit 140 acquires the Port contention status of each physical core, from the Port contention status acquisition unit 170.

<<Output>>

The Port contention status monitoring unit 140 notifies the existing process core allocation change determination unit 180 of a number of a physical core in which a Port contention occurs.

<Intra-CPU Calculator Configuration Information Recording Unit 150>

The intra-CPU calculator configuration information recording unit 150 records the number of intra-CPU calculators as the number of executable instructions for each Port, which is the number of instructions that can be executed at the same time (an example of table is illustrated in Fig. 8 described below). The intra-CPU calculator configuration information recording unit 150 takes a form in which the number of executable instructions for each Port is recorded, like the table in Fig. 8 described below.

<<Input/Output>>

Data of the intra-CPU calculator configuration information recording unit 150 is statically recorded before the system starts and does not have an update function.

<<Other Examples>>

As in Fig. 8 described below, the intra-CPU calculator configuration information recording unit 150 takes a form for recording only parallelism degrees of various instructions.

<Core Allocation Unit 160>

The core allocation unit 160 allocates the logical cores 21 and 22 in which each process can operate, based on an identifier of the process and identifiers of the logical cores 21 and 22, as the core allocation destination determined by the core allocation determination unit 120.

Specifically, the core allocation unit 160 sets a logical core in which various processes can operate to an OS kernel, using a Linux taskset command that can designate a number of a core in which the process operates.

<<Other Examples>>

The above functions of the core allocation unit 160 of the task scheduler device 100 may be implemented in the OS kernel in a form of being integrated with a process scheduling function.

<Port Contention Status Acquisition Unit 170>

The Port contention status acquisition unit 170 acquires a contention state of each instruction execution Port, from a hardware monitor installed on the CPU. The hardware monitor of the acquisition destination corresponds to a performance monitoring counter (PMC) of the Intel CPU.

<Existing Process Core Allocation Change Determination Unit 180>

The existing process core allocation change determination unit 180 determines a change of an existing process core allocation, based on an acquired number of the physical core in which a contention occurs, the Port contention status of the physical core to be determined, and a process allocation status to each core.

<<Input>>

The existing process core allocation change determination unit 180 receives the number of the physical core in which the contention occurs, from the Port contention status monitoring unit 140.

The existing process core allocation change determination unit 180 acquires the Port contention status of the physical core, from the Port contention status acquisition unit 170.

The existing process core allocation change determination unit 180 acquires the process allocation status to each core, from the core allocation status recording unit 130.

<<Output>>

The existing process core allocation change determination unit 180 notifies the core allocation determination unit 120 of a list of the identifiers of the processes and the identifiers of the logical cores, as a correspondence relationship in new core allocation.

Configurations serving as premises of the computing system 1000 are summarized as follows.

The computing system 1000 has a configuration in which the CPU 50 on a computer (hereinafter, server) supports a general-purpose instruction and a dedicated instruction (SIMD) specialized for specific calculation.

- <u>Server</u>

The server (task scheduler device 100) is equipped with the CPU (processor). The CPU has one or more physical cores. The CPU supports a hardware multi-threading technology and can make a single physical core appear as a plurality of logical cores.

- Process in which application operates on server

There are the following two types of processes operating on the server (task scheduler device 100).

1. Dedicated instruction execution process
2. General-purpose instruction execution process

- Scheduler

There are a plurality of types of processes operating on the server (task scheduler device 100), and respective ratios at which the dedicated instructions are executed are different from each other.

[Application Example 1 to Task Scheduler Device VM Configuration]

Although Fig. 2 is an example in which the entire task scheduler device 100 is contained in the OS, the entire task scheduler device 100 does not need to be included in the OS.

Under the background of advances in a virtualization technology achieved through the network functions virtualization (NFV), systems are being constructed and operated for each of services. Furthermore, a mode referred to as service function chaining (SFC) is becoming a mainstream, in which, based on the above-described mode of constructing a system for each service, service functions are divided into units of reusable modules and are operated on independent virtual machine (VM: virtual machine, container, etc.) environments, and thereby the service functions are used as needed like components to improve operability.

Fig. 3 is a configuration diagram in which a task scheduler device 100A is arranged in a VM/container. The same components as those in Fig. 2 are denoted with the same reference signs.

The task scheduler device 100A includes the CPU 50, the physical cores (processor) 11 (physical core 1, physical core 2, ..., and physical core N) on the CPU 50, a virtual machine monitor (VMM) 70 on the OS/VM, and a container/VM 80.

The OS/VMM 70 virtualizes a computer and operates a plurality of different OSs in parallel without interfering with each other. The OS/VMM 70 can create a virtual machine (VM) that behaves as a physical computer for software and operate various types of OSs thereon.

The task scheduler device 100A includes, in the OS/VMM 70, the core allocation determination unit 120, the core allocation status recording unit 130, the Port contention status monitoring unit 140, the intra-CPU calculator configuration information recording unit 150, the core allocation unit 160, the Port contention status acquisition unit 170, and the existing process core allocation change determination unit 180.

The container/VM 80 includes a container/VM 1, a container/VM 2, and a container/VM 3, and each of the container/VMs 1 to 3 includes the each-application dedicated instruction ratio acquisition unit 110. The each-application dedicated instruction ratio acquisition unit 110 records (register in advance) an expected value of a ratio at which various dedicated instructions are executed, of each application that operates on each of the container/VMs 1 to 3 and provides the expected value to the core allocation determination unit 120 arranged in the OS/VMM 70.

In a case where the virtual machine (VM), the container, or the like is used in order to allocate cores across the container/VMs, a core allocation function is aggregated outside of an instance of each container/VM such as an OS/VMM, and allocation processing across the container/VMs is enabled. At this time, in each container/VM, only a function for acquiring a dedicated instruction ratio of each process is arranged.

[Table of Each Application Dedicated Instruction Ratio Acquisition Unit 110]

Fig. 4 is a diagram illustrating, as a table, a structure of a management database included in the each-application dedicated instruction ratio acquisition unit 110.

The database illustrated in Fig. 4 records an instruction type (for example, vector addition, vector multiplication, general-purpose instruction, encryption related instruction, and the like) and an expected value of an execution ratio (calculation of expected value is described below with reference to Fig. 11), for each application name (for example, Signal_proc_1, Logger, or the like).

[Table of Core Allocation Determination Unit 120]

Fig. 5 is a diagram illustrating a table of a contention degree between applications referred by the core allocation determination unit 120.

The database in Fig. 5 records a contention degree associated with correspondence between an application 1 (for example, Signal_proc_1, Signal_proc_2, or the like) and an application 2 (for example, Signal_proc_2, Logger, and the like).

[Table of Core Allocation Status Recording Unit 130]

Fig. 6 is a diagram illustrating, as a table, a structure of a management database included in the core allocation status recording unit 130.

The database illustrated in Fig. 6 records each core identifier (core ID, for example, logical core 1, logical core 2, or the like), a physical core number (for example, physical core 1, physical core 2, or the like), and an allocated process identifier.

[Management Table of Each Port Information of Intra-CPU Calculator Configuration Information Recording Unit 150]

Fig. 7 is a diagram illustrating a table example in a case where the intra-CPU calculator configuration information recording unit 150 manages each port information.

The table illustrated in Fig. 7 stores a list of instructions (for example, general-purpose instruction, vector multiplication, vector addition, vector general-purpose instruction, encryption related instruction, and the like) for each Port number. For example, a list of instructions of an intra-CPU calculator connected to a Port number "0" includes "general-purpose instruction, vector multiplication, vector addition, vector general-purpose instruction, and encryption related instruction," a list of instructions of an intra-CPU calculator connected to a Port number "2" includes only "memory related instruction," and a list of instructions of an intra-CPU calculator connected to a Port number "6" includes "general-purpose instruction".

[Management Table Recording Only Maximum Parallelism Degree of Each Instruction of Intra-CPU Calculator Configuration Information Recording Unit 150]

Fig. 8 is a diagram illustrating a table example in a case where the intra-CPU calculator configuration information recording unit 150 records only the maximum parallelism degree of each instruction.

The table illustrated in Fig. 8 stores a maximum parallel execution degree for various instructions (for example, vector addition, vector multiplication, vector shift, vector general-purpose instruction, encryption related instruction, and the like). For example, in a case where various instructions are "encryption related instruction," the maximum parallel execution degree is "1" which is the minimum, and in a case where various instructions are "general-purpose instruction," the maximum parallel execution degree is "4" which is the maximum.

Hereinbelow, an operation of the computing system 1000 configured as described above is described.

[Task Scheduler Device When New Application Is Activated]

Fig. 9 is a flowchart illustrating an operation of each unit of the task scheduler device 100 at the time when a new application is activated.

This flow is started by activating a new process.

In step S1, the core allocation determination unit 120 is activated by a trigger of the activation of the new application or the detection of the contention by the existing process core allocation change determination unit 180, determines the core allocation destination, based on the execution ratio of the dedicated instruction of the new process and the dedicated instruction execution status of the CPU core at the time of activation, and instructs the core allocation unit 160 to perform core allocation. That is, the core allocation determination unit 120 inquires of the each-application dedicated instruction ratio acquisition unit 110 about the execution ratio of the dedicated instruction, by being triggered by the activation of the new process. Furthermore, the core allocation determination unit 120 inquires of the intra-CPU calculator configuration information recording unit 150 about the core allocation destination. Furthermore, the core allocation determination unit 120 inquires of the Port contention status acquisition unit 170 about the contention state of each instruction execution Port. Moreover, the core allocation determination unit 120 acquires the core allocation status from and updates it between the core allocation status recording unit 130. A broken line box in Fig. 9 indicates processing of each unit that has received the inquiry or the like from the core allocation determination unit 120.

In step S11, the each-application dedicated instruction ratio acquisition unit 110 acquires an execution ratio of a dedicated instruction (ratios at which various dedicated instructions are executed) of each application that operates on the server.

In step S12, the intra-CPU calculator configuration information recording unit 150 records the number of intra-CPU calculators, as the number of executable instructions for each Port.

In step S13, the Port contention status acquisition unit 170 acquires the contention state of each instruction execution Port, from the hardware monitor mounted on the CPU.

In step S14, the core allocation status recording unit 130 records a correspondence relationship between each logical core and a process allocated to the core.

In step S2, the core allocation determination unit 120 receives the identifier of the application that is newly activated, sets a logical core in which various processes can operate, based on the identifier of the process and the identifier of the logical core, and ends the processing of this flow.

[Determination Logic (part 1) of Core Allocation Determination Unit 120]

Figs. 10 to 12 are diagrams for describing a determination logic (part 1) of the core allocation determination unit 120. Fig. 10 is a flowchart of the determination logic (part 1) of the core allocation determination unit 120, Fig. 11 is a diagram illustrating a calculation example of a load amount in the flowchart in Fig. 10, and Fig. 12 is a diagram illustrating a calculation example of a core contention degree in the flowchart in Fig. 10.

In step S21, the core allocation determination unit 120 acquires a ratio of an execution target instruction, from the each-application dedicated instruction ratio acquisition unit 110. For example, as illustrated in the upper diagram in Fig. 11, the core allocation determination unit 120 acquires a Port number for each instruction type and a ratio of the execution target instruction.

In step S22, the core allocation determination unit 120 acquires configuration information of the intra-CPU calculator, from the intra-CPU calculator configuration information recording unit 150.

In step S23, the core allocation determination unit 120 calculates a load amount (expected value) of each port. As indicated by a reference sign cc in Fig. 11, the core allocation determination unit 120 equally divides the ratio of the calculation by each Port. Specifically, in Fig. 11, Port numbers "0, 1, 5, 6" are allocated to the instruction type "general-purpose instruction" illustrated in the upper diagram in Fig. 11, and the ratio of the execution target instruction is "0.4". In this case, as illustrated in the lower diagram in Fig. 11, the load amount (expected value) of each port is calculated by dividing the ratio "0.4" of the execution target instruction by the number of Ports "4", for each of the Port numbers "0, 1, 5, 6". Here, the Port number "5" is allocated to the instruction type "vector-shift" illustrated in the upper diagram in Fig. 11, and the ratio of the execution target instruction is "0.6". That is, for the Port number "5", the Port numbers "0, 1, 5, 6" of the "general-purpose instruction" and the Port number "5" of the "vector shift" overlap. Therefore, the load amount (expected value) of the Port number "5" is as in the following expression.

$$0.7\ (= 0.6/1 + 0.4/4)$$

In step S24, the core allocation determination unit 120 acquires a Port contention status (Port contention degree) from the Port contention status acquisition unit 170. Here, the core allocation determination unit 120 acquires a current contention degree for the Port number illustrated in Fig. 12.

In step S25, the core allocation determination unit 120 calculates "each instruction contention degree of each core," by multiplying the expected value (load amount) of the load of each Port acquired by the each-application dedicated instruction ratio acquisition unit 110 by the Port contention status of the core allocation status recording unit 130 corresponding to each instruction. The core allocation determination unit 120 totals the above and sets the above as a "contention degree with each core".

Hereinafter, specific description is made.

The core allocation determination unit 120 multiplies the expected value (load amount) of the load for each Port by a value indicating the Port contention status and calculates each Port contention degree.

The core allocation determination unit 120 totals the contention degrees of all the Ports and sets the contention degree as the contention degree of the core. In a case where a current contention degree for the Port number illustrated in Fig. 12 is acquired, the core contention degree is as in the following expression.

Core contention degree = $0.1 \times 0.3 + 0.1 \times 0.4 + 0.7 \times 0.2 + 0.1 \times 0.1$

A first term $0.1 \times 0.3$ in the above expression represents the Port 0, a second term $0.1 \times 0.3$ represents the Port 1, a third term $0.1 \times 0.3$ represents the Port 5, and a fourth term $0.1 \times 0.3$ represents the Port 6.

In step S26, the core allocation determination unit 120 selects a core with the lowest contention degree (core contention degree). In a case where a process in which instructions contend is executed, the core allocation determination unit 120 allocates the process to another physical core and ends the processing of this flow.

[Determination Logic (part 2) of Core Allocation Determination Unit 120]

Fig. 13 is a flowchart illustrating the determination logic (part 2) of the core allocation determination unit 120. Furthermore, the contention degree between the applications in the flowchart in Fig. 13 is indicated by the table of the contention degree between the applications in Fig. 5.

In step S31, the core allocation determination unit 120 acquires the process allocation status to each logical core, from the core allocation status recording unit 130.

In step S32, the core allocation determination unit 120 selects a "logical core in which a process with the lowest contention degree operates" for a process that is newly activated, from among the logical cores (refer to table of contention degree between applications in Fig. 5). In a case where the process in which the instructions contend is executed, the core allocation determination unit 120 allocates the process in which the instruction execution is less likely to contend to the remaining logical core and ends the processing of this flow.

[Effects of First Embodiment]

As described above, the task scheduler device 100 (Figs. 2 and 3) includes the each-application dedicated instruction ratio acquisition unit 110 (Figs. 2 and 3) that acquires the execution ratio of the dedicated instruction specialized for specific calculation, of each application that operates on the server, the intra-CPU calculator configuration information recording unit 150 (Figs. 2 and 3) that records the number of intra-CPU calculators as the number of instructions that can be executed at the same time (for example, the number of executable instructions for each Port), the core allocation determination unit 120 (Figs. 2 and 3) that determines the core allocation destination to the same physical core, using the execution ratio of the dedicated instruction from the each-application dedicated instruction ratio acquisition unit 110 and the number of intra-CPU calculators of the intra-CPU calculator configuration information recording unit 150, and the core allocation unit 160 (Figs. 2 and 3) that allocates the logical cores 21 and 22 in which each process can operate, based on the identifier of the process and the identifiers of the logical cores 21 and 22, as the core allocation destination determined by the core allocation determination unit 120. For example, in the computing system 1000 (Figs. 1 to 3) that executes the dedicated instruction, the task scheduler device 100 (Figs. 2 and 3) allocates the execution process of the dedicated instruction (SIMD instruction) to the logical cores 21 and 22, using the hardware multi-threading that makes the single physical core 11 appear as the plurality of logical cores 21 and 22 in a pseudo manner.
In this way, the task scheduler devices 100 and 100A can perform core application in a combination with no contention, from the ratio of the dedicated instruction of each application and the number of intra-CPU calculators. That is, there is the plurality of types of processes for operating on a server machine, and ratios of executing the dedicated instruction are different from each other. However, the server can minimize the number of execution physical cores while allocating a CPU time required for each process, for a process group including a dedicated instruction execution process.
The requirements to be achieved are summarized as follows.

- Requirement 1: (performance) [CPU processing time required for each process is allocated]
- Requirement 2: (saving energy) [the number of execution cores required to execute each process is minimized (minimizing the number of execution cores) ]

The task scheduler devices 100 and 100A can achieve the requirements 1 and 2 described above.
As a result, the task scheduler devices 100 and 100A can achieve both of securing the performances of the dedicated instructions and the performances between the dedicated instruction types and reducing the number of cores to save power.
In the task scheduler devices 100 and 100A (Figs. 2 and 3), the core allocation determination unit 120 allocates each process to the logical core, so that the processes to be executed do not contend.
In this way, the task scheduler devices 100 and 100A can achieve both of securing the performance and reducing the number of cores and can save power, by allocating the CPU processing time required for each process.
In the task scheduler devices 100 and 100A (Figs. 2 and 3), the core allocation determination unit 120 allocates the logical core so as to make the combination in which the dedicated instruction and the performance between the dedicated instruction types do not contend.
In this way, the task scheduler devices 100 and 100A can minimize the number of execution cores by performing the process allocation in consideration of the performance contention between the dedicated instructions and between the dedicated instruction types, by considering the contention of the dedicated instructions between the processes.
In the task scheduler devices 100 and 100A (Figs. 2 and 3), the core allocation determination unit 120 preferentially allocates the process that executes the general-purpose instruction, to the physical core to which the process for executing the dedicated instruction is allocated.
In this way, the task scheduler devices 100 and 100A can satisfy the "requirement 1: a CPU processing performance required for each process is allocated within a certain time," by preferentially allocating the process for executing the general-purpose instruction, to the physical core to which the process for executing the dedicated instruction is allocated. Furthermore, in the task scheduler devices 100 and 100A, because the "dedicated instruction process" and other processes operate in parallel in the physical core in which the dedicated instruction process operates, the number of operation cores can be reduced, and the "requirement 2: the number of execution cores is minimized" can be satisfied.
In the task scheduler devices 100 and 100A (Figs. 2 and 3), the core allocation determination unit 120 selects, from among the logical cores 21 and 22, the logical core in which the process with the lowest contention degree for the process to be newly activated operates.
In this way, the task scheduler devices 100 and 100A can allocate the process in which the instruction execution is less likely to contend for the process that is newly activated, by allocating the logical core in which the process with the lowest contention degree operates, to the process that is newly activated.

In the task scheduler devices 100 and 100A (Figs. 2 and 3), in a case where the process in which the instructions contend is executed, the core allocation determination unit 120 allocates the process to another physical core and allocates the process in which the instruction execution is less likely to contend to the remaining logical core.

In this way, when the process in which the instructions contend is executed, the task scheduler devices 100 and 100A allocate the process to another physical core, and allocates the process in which the instruction execution is less likely to contend to the remaining logical core. As a result, even in a case where the process in which the instructions contend is executed, the task scheduler devices 100 and 100A can achieve both of securing the performance and reducing the number of cores and can save power, by allocating the process in which the instruction execution is less likely to contend, to the logical core.

The computing system 1000 (Figs. 1 to 3) is a computer system in which a CPU (processor) on a server supports general-purpose instructions and dedicated instructions specialized for specific calculation (SIMD calculation instructions or dedicated instructions for encryption).

The above processor can be similarly applied to a processor such as a GPU/FPGA/ASIC, in addition to the CPU, in a case where the processor has a SIMD calculation execution core identifying function.

Note that the dedicated instruction may be any instruction as long as it is an instruction specialized for specific calculation. In the first embodiment, as an example, a SIMD instruction or a dedicated instruction for encryption is used, but the SIMD/encryption is merely an example, and application to a dedicated instruction other than SIMD/encryption is similarly possible.

Furthermore, in the computing system 1000 (Figs. 1 to 3) that executes the dedicated instruction, it is sufficient that the task scheduler device 100 (Figs. 2 and 3) use the hardware multi-threading that makes the single physical core 11 appear as the plurality of logical cores 21 and 22 in a pseudo manner, and the task scheduler device 100 is not limited to a mode for necessarily allocating the execution process of the dedicated instruction (SIMD instruction) to the logical cores 21 and 22.

(Second Embodiment)

In the first embodiment, logical cores are allocated so as to make a combination in which performances of the logical cores do not contend (Port contention: refer to reference sign c in the upper diagram in Fig. 43), in the same physical core. That is, in the first embodiment, in a case where the process in which the instructions contend is executed, the core allocation determination unit 120 (Fig. 2) of the task scheduler device 100 allocates the process in which the instruction execution is less likely to contend to the remaining logical core (S32 in Fig. 13). This makes it possible to achieve both of securing performance and reducing the number of cores and to save power.

The second embodiment exemplifies an effective use of a back core (core on a back side forming a pair with a front core, among a pair of logical cores existing in the same physical core, by SMT), as one of effective allocation methods according to the first embodiment. The second embodiment performs core allocation in consideration of characteristics of each task (low latency and/or the number of required cores), in addition to "dedicated instruction processing contention in the CPU" in the first embodiment.

<Effective Use of Back Core>

The following description is given of the reason the effective use of the back core is needed.

Fig. 14 is a diagram for describing RAN L1 task allocation described in Non Patent Literature 2. Fig. 14 simplifies and illustrates an example of a CPU core of an SMT architecture in a case where a microinstruction is a SIMD calculation.

A CPU 1 illustrated in Fig. 14 includes four physical cores 11 ("physical four cores," hereinbelow, same physical core 11) and a pair of logical cores existing in the same physical core 11 ("logical eight cores," refer to ○ in Fig. 14), by the SMT. For example, the CPU 1 shares the same physical core 11 by the logical cores 0 and 5. In this case, in the pair of the logical cores 0 and 5 existing in the same physical core 11, the logical core 0 is a "front core" of the same physical core 11, and the logical core 5 is a "back core" of the same physical core 11. Incidentally, in the first embodiment, for example, a general-purpose instruction process is allocated to the logical core 0 of the same physical core 11, and a SIMD process is allocated to the logical core 5, so as to make a combination in which performances of the logical cores do not contend, in the same physical core.

Non Patent Literature 2 describes that there is a configuration in which L1 processing tasks are classified into three types including Uplink, Downlink, and PDSCH, and a core is allocated to a processing thread corresponding to each task.

A case where the technology of Non Patent Literature 2 is applied to the CPU core of the SMT architecture illustrated in Fig. 14 is described.

As indicated by a reference sign dd in Fig. 14, in a pair of the logical cores 2 and 7 existing in the same physical core 11, the Uplink processing task is allocated to the logical core 2 that is the front core to be set as an "Uplink processing core". No processing task is allocated to the logical core 7, which is the back core.

Furthermore, as indicated by a reference sign ee in Fig. 14, in a pair of the logical cores 3 and 8 existing in the same physical core 11, the Downlink processing task is allocated to the logical core 3 that is the front core to be set as a "Downlink processing core," and as indicated by a reference sign ff in Fig. 14, the PDSCH processing task is allocated to the logical core 8 that is the back core to be set as a "PDSCH processing core". That is, regarding the logical cores 3 and 8 existing in the same physical core 11, the Downlink processing task is allocated to the logical core 3 that is the front core, and the PDSCH processing task is allocated to the logical core 8 that is the back core. However, no processing task is allocated to the logical cores 0 and 5 existing in the same physical core 11, the logical cores 1 and 6 existing in the same physical core 11, and the logical cores 4 and 9 existing in the same physical core 11.

In the first embodiment, a contention between the three types classified as Uplink/DownLink/PDSCH indicated in Non Patent Literature 2 is not considered. Therefore, as indicated by the reference sign ff in Fig. 14, in a case where the logical core 8 (back core) of the logical cores 3 and 8 existing in the same physical core 11 is allocated, there is a possibility that the processing contends and a processing performance is insufficient in the same physical core 11.

In the first embodiment, regarding the three types classified as Uplink/DownLink/PDSCH processing, if each task can occupy the physical core, "the requirement 1 (performance) to complete processing before a processing deadline required by each task" is satisfied.

On the other hand, as indicated by the reference sign ff in Fig. 14, in a case where the SMT is used, in some cases, the processing performance is insufficient and a low latency cannot be satisfied. Therefore, it is considered that "the requirement 2: (calculation resource) the number of execution cores required for execution of each task is minimum (SMT can be utilized)" is not satisfied.

<Basic Concept of Present Invention>

A basic concept of the present invention is described.

Fig. 15 is a diagram for describing the basic concept of the present invention. The same components as those in Fig. 14 are denoted with the same reference signs.

The CPU 1 illustrated in the lower diagram in Fig. 15 includes 12 same physical cores 11 ("physical 12 cores") and a pair of logical cores existing in the same physical core 11 by the SMT ("logical 24 cores," refer to ○ in Fig. 15).

A thick ○ in Fig. 15 indicates a logical core to which a task is allocated, among the "logical 24 cores". Moreover, types of shading and hatching in the thick ○ in Fig. 15 indicate different task requirements. For example, the shading in the thick ○ in Fig. 15 is tasks of U-plane signal processing and C-plane signal processing (heavy) with a high SIMD usage rate and a high load. The hatching in the thick ○ in Fig. 15 indicates tasks of U-plane signal processing and C-plane signal processing (light) with a low SIMD usage rate and a low load.

In the second embodiment, core allocation is performed in consideration of requirements of each task (low latency and/or the number of required cores), in addition to the SIMD calculation contention.

As illustrated in the upper diagram in Fig. 15, characteristics of a task to be allocated to a logical core are divided into two task requirements based on a SIMD usage rate, a load, or the like and are pooled (pool 201 and pool 202).

The pool 201 of the task (pool <1> of task) pools tasks with a high SIMD usage rate or a high load and cannot perform Hyper Threading. Such tasks are, for example, the U-plane signal processing and the C-plane signal processing (heavy).

The pool 202 of the task (pool <2> of task) pools tasks that can coexist in the same physical core, with the other tasks. The pool 202 of the task (pool <2> of task) pools a task with a low SIMD usage rate or a low load and can perform Hyper Threading. Such tasks are, for example, the C-plane signal processing (light) and other processing.

In the second embodiment, the CPU 1 illustrated in the lower diagram in Fig. 15 allocates logical cores 4, 6, 8, 10, and 12 that are front cores of the logical cores existing in the same physical core 11 to the pool 201 (pool <1> of task) illustrated in the upper diagram in Fig. 15 (arrow gg in Fig. 15). Processing tasks executed by the logical cores 4, 6, 8, 10, and 12 are, for example, the C-plane signal processing (heavy).

Furthermore, a logical core 14 that is a front core of the logical core existing in the same physical core 11 is allocated to the pool 202 (pool <1> of task) of the task illustrated in the upper diagram in Fig. 15 (arrow hh in Fig. 15) that is the C-plane signal processing (light), for example. Here, the logical core 14 that is the front core of the logical core existing in the same physical core 11 is a task that has a low SIMD usage rate and a low load and can perform the Hyper Threading. Therefore, even if processing is allocated to a logical core 38 that is a back core, the processing does not contend, and a processing performance is not insufficient. In Fig. 15, the processing task C-plane signal processing (light) of the logical core 38 that is the back core of the front core of the logical core 14 is allocated to the pool 202 (pool <2> of task, arrow ii in Fig. 15).

In this way, the back core (logical core 38 that is back core) is used for a task that can be processed in time even if Hyper Threading is used, so as to improve a CPU usage rate.

[Configuration of Task Scheduler Device]

Fig. 16 is a configuration diagram of the task scheduler device according to the second embodiment of the present invention. The same components as those in Fig. 2 are denoted with the same reference signs, and redundant description is omitted.

A task scheduler device 200 illustrated in Fig. 16 can be applied to the computing system 1000 in Fig. 1.

As illustrated in Fig. 16, the task scheduler device 200 is a core allocation scheduler in a server and includes a CPU 50 that is hardware (HW), physical cores (physical core <1>, physical core <2>, ..., and physical core <N>) 11 (processor) on the CPU 50, and a userland (userland) 60.

For example, in the computing system 1000 (Fig. 1) that executes a dedicated instruction specialized for specific calculation, the task scheduler device 200 allocates an execution process of the dedicated instruction to a logical core, using hardware multi-threading that makes a single physical core appear as a plurality of logical cores in a pseudo manner.

The task scheduler device 200 includes, in the userland 60, the each-application dedicated instruction ratio acquisition unit 110, each task dedicated instruction usage ratio recording unit 210, a low latency requirement recording unit 211, each task load amount recording unit 212, each-task-required isolation degree recording unit 213, a core allocation determination unit 220, each-task-required isolation degree and core number calculation unit 221 (required isolation degree calculation unit), a core allocation decision unit 222, a task processing unit 230, a task queue unit 240, a core allocation unit 260, a core allocation status recording unit 130, a Port contention status monitoring unit 140, an intra-CPU calculator configuration information recording unit 150, a Port contention status acquisition unit 170, and an existing process core allocation change determination unit 180.

Each functional unit of the each task dedicated instruction usage ratio recording unit 210, the low latency requirement recording unit 211, the each task load amount recording unit 212, the each-task-required isolation degree recording unit 213, the core allocation determination unit 220, the each-task-required isolation degree and core number calculation unit 221, the core allocation decision unit 222, the task processing unit 230, the task queue unit 240, and the core allocation unit 260 is described after an example of a variation of an entire configuration (Figs. 17 and 18).

[Application Example to vRAN DU System Configuration of Task Scheduler Device]

Although Fig. 16 illustrates a configuration example in which the task scheduler device 200 is included in the userland (userland) 60, each functional unit can be contained in the OS. For example, an application example to a vRAN DU system is described.

A virtual radio access network (vRAN) is described hereinbelow.

A radio access system for mobile communication is required to have strict delay requirements and high throughput, and thus, a base station (Base Band Unit (BBU)) that performs radio signal processing is generally supported by dedicated hardware (dedicated device).

In recent years, with spread and expansion of a general-purpose server (Intel Architecture (IA) server), performance of the general-purpose server has been dramatically improved, and the general-purpose server can be obtained at low cost due to mass production. As a result, a vRAN in which radio signal processing of the base station (BBU) in the radio access system such as long term evolution (LTE) or five generation (5G) is executed by the general-purpose server has been studied.

In the vRAN, the general-purpose server that is inexpensive and available in large quantities can be used as hardware of the BBU, so that it is possible to construct a BBU pool by setting up a plurality of general-purpose servers in advance by setting up a server rack with a regional data center (DC) or a communication building within several tens km from an antenna as an aggregation base (this concept may be referred to as centralized-RAN (C-RAN)).

The BBU pool allows preparation of a plurality of pieces of base station hardware (general-purpose servers) in advance, and thus has a potential advantage of enabling flexible operation such as quick hardware replacement (switching) at a time of hardware failure and dynamic scale-out/in according to an increase or a decrease in traffic.

<Example of Same Time Slot Allocation in Units of Antennas>

In the radio access system, in some cases, it is possible to separate base station functions into a radio unit (RU)/a distributed unit (DU)/a centralized unit (CU).

An accommodated user may be allocated to the same time slot in units of antennas (alternatively, in RU units in a case of configuration in which RU and vDU are separated in vRAN system compliant with Open-RAN (O-RAN)). This makes it possible to increase a time during which the antenna/RU can sleep when the antenna/RU has a sleepable function.

Fig. 17 is a configuration diagram of a task scheduler device 200A applied to the vRAN DU system. The same components as those in Fig. 16 are denoted with the same reference signs, and redundant description is omitted.

As illustrated in Fig. 17, the task scheduler device 200A is a core allocation scheduler in a server and includes the CPU 50 that is hardware (HW), the physical cores 11 (processor, physical core <1>, physical core <2>,..., and physical core <N>) on the CPU 50, a vRAN application 60A, and an OS 70A.

The task scheduler device 200A includes the each task dedicated instruction usage ratio recording unit 210, the low latency requirement recording unit 211, the each task load amount recording unit 212, the each-task-required isolation degree recording unit 213, the core allocation determination unit 220, the each-task-required isolation degree and core number calculation unit 221, the core allocation decision unit 222, the task processing unit 230, and the task queue unit 240, in the vRAN application 60A. Note that the task processing unit 230 may include a plurality of task processing units (not illustrated).

Furthermore, in the task scheduler device 200A, the OS 70A includes the core allocation unit 260.

In the task scheduler device 200A applied to the vRAN DU system, a relationship between a task and an execution core is in a form of having a management function in the vRAN application 60A, not the OS.

[Application Example 2 to Task Scheduler Device VM Configuration]

Fig. 18 is a configuration diagram in which a task scheduler device 200B is arranged in a VM/container. The same components as those in Fig. 3 are denoted with the same reference signs, and redundant description is omitted.

The task scheduler device 200B includes the CPU 50, the physical cores 11 (processor, physical core 1, physical core 2, ..., and physical core N) on the CPU 50, a virtual machine monitor (VMM) 70 on the OS/VM, and the container/VM 80.

The task scheduler device 200B includes a container/VM 1 and a container/VM 2 in the container/VM 80, and each of the container/VMs 1 and 2 includes the each-task-required isolation degree recording unit 213, the each-task-required isolation degree and core number calculation unit 221, the core allocation decision unit 222, the task processing unit 230, and the task queue unit 240.

In a case where the virtual machine (VM), the container, or the like is used, in order to allocate cores across the container/VMs, a core allocation function is aggregated outside of an instance of each container/VM such as an OS/VMM, and allocation processing across the container/VMs is enabled.

In the above, the entire configuration diagram of the task scheduler device (configuration in which each functional unit is included in the vRAN application (Fig. 16), a variation of the vRAN DU system (Fig. 17), and a variation of the container/VM (Fig. 18)) has been described.

Next, each functional unit of the task scheduler device in Figs. 16 to 18 is described.

[Each Functional Unit of Task Scheduler Device]

<Each Task Dedicated Instruction Usage Ratio Recording Unit 210>

The each task dedicated instruction usage ratio recording unit 210 records each task dedicated instruction usage ratio indicating a ratio of using a dedicated instruction in the CPU, during the execution of each task.

Fig. 19 is a diagram illustrating a table 310 of a data structure example (data configuration example) of the each task dedicated instruction usage ratio recording unit 210.

The data structure table 310 of the each task dedicated instruction usage ratio recording unit 210 records a ratio of the dedicated instruction for each task type. For example, the task type includes 1: parallel calculation degree (high) of user data (information regarding user, information collected from user, or the like, including device data) processing, 2: parallel calculation degree (low) of user data processing, 3: control data (numerical data, character string data, or data such as list) processing, 4: synchronization signal processing (duplexing or multiplexing essential for wireless communication including 5G network and each packet-based timing synchronization processing such as frequency synchronization, phase synchronization, and time synchronization), 5: configuration processing (setting processing of server, network device, OS, software, or the like). Furthermore, the ratio of the dedicated instruction is set within a range of 1.0 to 0.0 (1.0 is high and 0.0 is low). For example, the ratio of the dedicated instruction of 1: the parallel calculation degree (high) of the user data processing in Fig. 19 is 0.8. Furthermore, the ratio of the dedicated instruction of 3: the control data processing is 0.8. These two tasks have a high ratio of the dedicated instruction (SIMD usage rate and load are high). On the other hand, the ratio of the dedicated instruction of the task of 5: the configuration processing is 0.1 that is low, and has a low SIMD usage rate and a low load.

Data of the data structure table 310 may be registered in the each task dedicated instruction usage ratio recording unit 210 of the task scheduler device 200 of the computing system 1000 in advance or may be calculated and updated by the task scheduler device 200 based on data indicating whether or not to execute the dedicated instruction obtained by the CPU during execution.

<Low Latency Requirement Recording Unit 211>

The low latency requirement recording unit 211 records a low latency requirement (low latency), required for the execution of each task. Specifically, the low latency requirement recording unit 211 records a low latency requirement, required for execution of each L1 task.

Fig. 20 is a diagram illustrating a data structure table 320 of a data structure example (data configuration example) of the low latency requirement recording unit 211.

The data structure table 320 of the low latency requirement recording unit 211 records the low latency requirement (here, each L1 task low latency requirement) for each task type. For example, the task type includes 1: parallel calculation degree (high) of user data processing, 2: parallel calculation degree (low) of user data processing, 3: control data processing, 4: synchronization signal processing, and 5: configuration processing. Furthermore, the ratio of the dedicated instruction is set within a range of 1.0 to 0.0 (1.0 is high and 0.0 is low). For example, the low latency requirement of 1: the parallel calculation degree (high) of the user data processing in Fig. 20 is 1.0 that is the strictest low latency requirement, and the low latency requirement of 2: the parallel calculation degree (low) of the user data processing is 0.8 that is the second strictest low latency requirement. The task of 5: the configuration processing has a low latency requirement of 0.1.

As can be seen by comparing data of the data structure table 320 of the low latency requirement recording unit 211 illustrated in Fig. 20 with the data of the data structure table 310 of the each task dedicated instruction usage ratio recording unit 210 illustrated in Fig. 19, the ratio of the dedicated instruction in the data structure table 310 and the low latency requirement in the data structure table 320 have similar tendencies, but not the same. For example, the task type 2: the parallel calculation degree (low) of the user data processing has a low ratio of the dedicated instruction of 0.2 (Fig. 19) and a high low latency requirement of 0.8 (Fig. 20).

Here, because the ratio of the dedicated instruction of the data structure table 310 of the each task dedicated instruction usage ratio recording unit 210 and the low latency requirement of the data structure table 320 have similar tendencies, the each-task-required isolation degree and core number calculation unit 221 (described below) of the core allocation determination unit 220 can calculate a required isolation degree (described below), with a mode of only acquiring each task dedicated instruction usage ratio of the each task dedicated instruction usage ratio recording unit 210 (refer to the each-task-required isolation degree calculation unit in "claim 2"). The present embodiment includes the low latency requirement recording unit 211 that records the low latency requirement, required for the execution of each task, and the each-task-required isolation degree and core number calculation unit 221 (described below) calculates a more accurate required isolation degree, by calculating the required isolation degree based on the required isolation degree of each task and the low latency requirement (refer to "claim 8").

The data of the data structure table 310 is registered in the low latency requirement recording unit 211 of the task scheduler device 200 of the computing system 1000, in advance.

<Each Task Load Amount Recording Unit 212>

The each task load amount recording unit 212 records a load amount required for the calculation of each task. For example, the each task load amount recording unit 212 records a load amount required for calculation of each L1 task.

Fig. 21 is a diagram illustrating a data structure table 330 of a data structure example (data configuration example) of the each task load amount recording unit 212.

The data structure table 330 of the each task load amount recording unit 212 records a load amount for each task type (in range of one to five, one is small, and five is large). For example, the task type includes 1: parallel calculation degree (high) of user data processing, 2: parallel calculation degree (low) of user data processing, 3: control data processing, 4: synchronization signal processing, and 5: configuration processing. Furthermore, the load amount is set within a range of one to five (one is small and five is large). In general, regarding the load amount for each task type, as in a case of the low latency requirement illustrated in Fig. 20, the load amount is larger in order of 1: the parallel calculation degree (high) of the user data processing (load amount and low latency requirement have positive correlation relationship).

Data of the data structure table 330 of the each task load amount recording unit 212 is registered in the low latency requirement recording unit 211 of the task scheduler device 200 of the computing system 1000, in advance.

<Role of Each Table>

In the present embodiment, the each-task-required isolation degree and core number calculation unit 221 of the core allocation determination unit 220 (Figs. 16 to 18) derives a required isolation degree and core number table 340 (Fig.

22), by combining the data of the data structure table 310 of the each task dedicated instruction usage ratio recording unit 210, the data of the data structure table 320 of the low latency requirement recording unit 211, and the data of the data structure table 330 of the each task load amount recording unit 212. The derivation of the required isolation degree and core number table 340 of the each task load amount recording unit 212 is described below with reference to Fig. 24.

Incidentally, as described above, because the low latency requirement in the data structure table 320 of the low latency requirement recording unit 211 (Fig. 20) and the load amount in the data structure table 330 of the each task load amount recording unit 212 (Fig. 21) have similar tendencies, a combination of the data structure table 310 of the each task dedicated instruction usage ratio recording unit 210 illustrated in Fig. 19 and the low latency requirement in the data structure table 320 of the low latency requirement recording unit 211 (Fig. 20) or a combination of the data structure table 310 of the each task dedicated instruction usage ratio recording unit 210 illustrated in Fig. 19 and the load amount in the data structure table 330 of the each task load amount recording unit 212 (Fig. 21) may be used.

<Each-task-required isolation degree recording unit 213>

The each-task-required isolation degree recording unit 213 (Figs. 16 to 18) records the required isolation degree and core number table 340 (Fig. 22) derived by the each-task-required isolation degree and core number calculation unit 221 (Figs. 16 to 18) of the core allocation determination unit 220 and a required isolation degree and core number table 350 (Fig. 23) used for the vRAN.

Fig. 22 is a diagram illustrating the required isolation degree and core number table 340 derived by the each-task-required isolation degree and core number calculation unit 221 of the core allocation determination unit 220.

As illustrated in Fig. 22, the required isolation degree and core number table 340 records a required isolation degree and the number of required cores for each task type. The "required isolation degree" is a concept used by the present inventors first. The "required isolation degree" determines whether or not another task can be executed in the same physical core. More specifically, the "required isolation degree" determines how many percents of the single physical core needs to be occupied. The "number of required cores" is determined from the load amount according to the task type and is the number of CPU cores required for the task.

For example, in Fig. 22, in a case where the task type is 1: the parallel calculation degree (high) of the user data processing, the required isolation degree is 0.8, and the number of required cores is four. Therefore, at the time of core allocation, this task needs four logical cores, and the required isolation degree is 0.8. Therefore, the logical cores in the same physical core are almost occupied. Here, because the required isolation degree of each of 4: the synchronization signal processing and 5: the configuration processing is 0.1, there is still a possibility of performing allocation as the back core of the same physical core. However, it is considered to avoid the allocation from a viewpoint of processing stability or the like.

On the other hand, in Fig. 22, in a case where the task type is 2: the parallel calculation degree (low) of the user data processing, the required isolation degree is 0.2, and the number of required cores is three. Therefore, as the back core of the same physical core, all or a part of 3: the control data processing, 4: the synchronization signal processing, and 5: the configuration processing can be allocated.

Fig. 23 is a diagram illustrating the required isolation degree and core number table 350 used for the vRAN derived by the each-task-required isolation degree and core number calculation unit 221 of the core allocation determination unit 220.

As illustrated in Fig. 23, the required isolation degree and core number table 350 used for the vRAN records the number of required cores and the required isolation degree for each task type. The required isolation degree used for the vRAN is whether or not SMT coexistence in the same physical core is possible. In Fig. 23, regarding the task type including the parallel calculation degree (high) of the user data processing and the control data processing, the required isolation degree is 1.0, and the logical core of the same physical core cannot be allocated (SMT coexistence is not possible). In this example, the number of required cores of these two tasks is five.

<Core Allocation Determination Unit 220>

The core allocation determination unit 220 has a function similar to that of the core allocation determination unit 120 (Figs. 2 and 3) according to the first embodiment. In a case where the process in which the instructions contend is executed, the core allocation determination unit 120 (Figs. 2 and 3) allocates the process in which the instruction execution is less likely to contend to the remaining logical core ("SIMD calculation contention"). That is, similarly to the core allocation determination unit 120 (Figs. 2 and 3), the core allocation determination unit 220 determines the core allocation destination to the same physical core, using the execution ratio of the dedicated instruction of the each-application dedicated instruction ratio acquisition unit 110 and the number of intra-CPU calculators of the intra-CPU calculator configuration information recording unit 150.

In addition to the above functions, the core allocation determination unit 220 includes each functional unit of the each-task-required isolation degree and core number calculation unit 221 and the core allocation decision unit 222.

<Each-task-required isolation degree and core number calculation unit 221>

The each-task-required isolation degree and core number calculation unit 221 calculates a required isolation degree indicating how many percents of the single physical core the CPU core to be executed needs to occupy. In the present embodiment, the each-task-required isolation degree and core number calculation unit 221 calculates the required isolation degree, based on the required isolation degree and the low latency requirement of each task.
Furthermore, the each-task-required isolation degree and core number calculation unit 221 acquires the load amount from the each task load amount recording unit 212 and calculates the number of physical cores required for execution, based on the acquired load amount. Then, the each-task-required isolation degree and core number calculation unit 221 calculates the required isolation degree and the number of physical cores required for the execution for the CPU core executed in the task processing unit 230 .
The required isolation degree described above indicates how many percents of the single physical core needs to be occupied. That is, it is necessary to allocate a task to the single physical core so as not to exceed 1.0 in total. For example, in a case of 1.0, it is not possible to execute another task in the same physical core, and a case of 0.0 indicates that there is no restriction.
Specifically, the each-task-required isolation degree and core number calculation unit 221 performs indexation on the required isolation degree between 0.0 to 1.0 while setting 1.0 as the maximum value, and the core allocation decision unit 222 prohibits the execution of the another task in the same physical core in a case where the required isolation degree is 1.0 and selects a single or a plurality of core numbers for the single physical core so that the required isolation degree does not exceed 1.0 in total and allocates the task to the single physical core.
The calculation of the required isolation degree by the each-task-required isolation degree and core number calculation unit 221 and the re-setting of the core allocation may be repeatedly performed at certain time intervals.
The each-task-required isolation degree and core number calculation unit 221 has a <table management form> that calculates (derive) the required isolation degree and the number of required cores, based on the table values of the each task dedicated instruction usage ratio recording unit 210, the low latency requirement recording unit 211, and the each task load amount recording unit 212, for each task and a <grouping form> that groups priorities of task execution in advance.
In the <table management form>, the each-task-required isolation degree and core number calculation unit 221 derives the required isolation degree and core number tables 340 and 350 (Figs. 22 and 23), based on the data structure table 310 (Fig. 19) of the each task dedicated instruction usage ratio recording unit 210, the data structure table 320 (Fig. 20) of the low latency requirement recording unit 211, and the data structure table 330 (Fig. 21) of the each task load amount recording unit 212. Furthermore, a derivation procedure is described below (Fig. 24).
In the <grouping form>, the each-task-required isolation degree and core number calculation unit 221 groups and stores the priority of the task execution for each task type in advance as a task execution group. Specifically, the each-task-required isolation degree and core number calculation unit 221 allocates a corresponding core, using a table indicating a correspondence relationship with the priority group for each task type (Figs. 25 and 26). Furthermore, a grouping procedure is described below (Figs. 27 and 28).

<Core Allocation Decision Unit 222>

The core allocation decision unit 222 selects a required number of physical cores that satisfy a required isolation degree, based on the required isolation degree for each task.
In a case where the required isolation degree is a predetermined maximum value, the core allocation decision unit 222 prohibits the execution of the another task in the same physical core, and selects a single or a plurality of core numbers within a range where the required isolation degree does not exceed the maximum value and allocates the task to the single physical core.
In the present embodiment, the core allocation decision unit 222 selects the required number of physical cores that satisfy the required isolation degree, based on the required isolation degree and the number of physical cores of each task. For example, in a case where the required isolation degree is 1.0, a physical core in which another task is not executed is selected, and a task allocation instruction is issued.
That is, in a case where the required isolation degree is 1.0, the core allocation decision unit 222 prohibits the execution of the another task in the same physical core and selects the single or the plurality of core numbers so that the required isolation degree does not exceed one in total, and allocates the task to the single physical core.
An operation sequence of the core allocation decision unit 222 is described below.
As another mode, in addition to the method for selecting the specific core number, as in the <grouping form> (Figs. 25 and 26), a form may be used in which the CPU cores are divided into a plurality of groups in advance and each task is executed by the CPU core to which each group belongs. In a case of the <grouping form>, the core allocation decision unit 222 selects a corresponding core number and allocates the task to the CPU core to which the task execution group belongs.

The core allocation decision unit 222 selects the core number and allocates the task to a pair of logical cores existing in the same physical core, by the SMT.

<Task Processing Unit 230>

The task processing unit 230 repeatedly acquires the task from the task queue unit 240 and executes processing if there is a task. The task processing unit 230 is executed by any one of the CPU cores. There is a plurality of types of the task processing unit 230, and a task that can be processed by each task processing unit 230 is different. For example, in an example of the virtual radio access network (vRAN) for realizing radio signal processing by software, there is software according to each signal processing task such as the "control data processing," the "synchronization signal processing," or the "user data processing".

<Task Queue Unit 240>

The task queue unit 240 is a data recording unit that manages a task processed by the CPU. Each task includes two items including a processing type and processing target data. A management structure of a task being executed, such as a process management data structure in a task scheduler of the OS may be used.

<Core Allocation Unit 260>

The core allocation unit 260 allocates a logical core in which each process can operate, based on the identifier of the process and the identifier of the logical core, to the core allocation destination determined by the core allocation determination unit 220.

The core allocation unit 260 sets the logical core in which various processes can operate, based on the identifier of the process and the identifier of the logical core.

A taskset command that can designate a core number in which the process operates in the Linux for an OS kernel corresponds.

The core allocation unit 260 sets the CPU core that executes each task, based on a core selection result of the core allocation decision unit 222. As an example, the taskset command in the Linux OS is exemplified.

Furthermore, a variation of the core allocation decision unit 222 is as follows, in a case where the "method for allocating the task to the corresponding group" as in the <grouping form> (Figs. 25 and 26) is selected. That is, the core allocation unit 260 sets the CPU core in a form of using a cgroups command that defines the CPU core and the processing time as a resource group in advance and makes each execution task managed by the OS belong to each group.

[Derivation Example of Required Isolation Degree and Core Number Table 340 (Fig. 22)]

A derivation example of the required isolation degree and core number table 340 is described. Note that this is an example of the <table management form>.

Fig. 24 is a diagram for describing the derivation example of the required isolation degree and core number table 340 (Fig. 22).

The each-task-required isolation degree and core number calculation unit 221 (Figs. 16 to 18) of the core allocation determination unit 220 derives the required isolation degree and core number table 340 (Fig. 22), using the data structure table 310 (Fig. 19) of the each task dedicated instruction usage ratio recording unit 210, the data structure table 320 (Fig. 20) of the low latency requirement recording unit 211, and the data structure table 330 (Fig. 21) of the each task load amount recording unit 212.

As indicated by an arrow jj in Fig. 24, the "required isolation degree" in the required isolation degree and core number table 340 is calculated, based on the "ratio of the dedicated instruction" in the data structure table 310 of the each task dedicated instruction usage ratio recording unit 210 and "each task low latency requirement" in the data structure table 320 of the low latency requirement recording unit 211 (arrow kk in Fig. 24). Specifically, the each-task-required isolation degree and core number calculation unit 221 calculates the "required isolation degree" for each task type, by multiplying the table value of the data structure table 310 of the each task dedicated instruction usage ratio recording unit 210 by the table value of the data structure table 320 of the low latency requirement recording unit 211, for each task type. For example, in a case where the task type is 1: the parallel calculation degree (high) of the user data processing, 0.8 (ratio of dedicated instruction) $\times$ 1.0 (each task low latency requirement) = 0.8 (required isolation degree) is calculated.

As indicated by a broken arrow ll in Fig. 24, the "load amount" in the data structure table 330 of the each task load amount recording unit 212 is used as "the number of required cores" in the required isolation degree and core number table 340, for each task type.

Similarly, the each-task-required isolation degree and core number calculation unit 221 derives the required isolation degree and core number table 350 (Fig. 23) used for the vRAN.

As described above, the required isolation degree and core number table 340 (lower diagram in Fig. 24) is derived. The derived required isolation degree and core number table 340 (Fig. 22) and the required isolation degree and core number table 350 (Fig. 23) used for the vRAN are stored in the each-task-required isolation degree recording unit 213 (Figs. 16 to 18).

[Pre-grouping of Priority of Task Execution <Grouping Form>]

The <grouping form> for grouping the priorities of the task execution in advance is described.

Fig. 25 is a diagram illustrating a correspondence relationship between a priority group and each task type, used in a case where the each-task-required isolation degree and core number calculation unit 221 groups the priorities of the task execution in advance. Fig. 26 is a diagram illustrating a correspondence relationship between the priority group in Fig. 25 for each task type and the allocated core.

As illustrated in Fig. 25, a first correspondence relationship table 360 including the task type and the priority group tabulates the task execution group for each task type in advance and stores the table. The task type includes 1: parallel calculation degree (high) of user data processing, 2: parallel calculation degree (low) of user data processing, 3: control data processing, 4: synchronization signal processing, and 5: configuration processing. The task execution group includes an isolated and high priority group, a middle priority group, and a low priority group. In Fig. 25, 1: the parallel calculation degree (high) of the user data processing and 2: the parallel calculation degree (low) of the user data processing that are the task type are grouped into the isolated and high priority group of the task execution group. Furthermore, 3: the control data processing that is the task type is grouped into the middle priority group of the task execution group. Furthermore, 4: the synchronization signal processing and 5: the configuration processing that are the task type are grouped into the low priority group of the task execution group.

As illustrated in Fig. 26, a second correspondence relationship table 370 including the task execution group and the corresponding core number tabulates the task execution group and the corresponding core number in advance and stores the table. In Fig. 26, the isolated and high priority group is allocated to core numbers 0 to 3, the middle priority group is allocated to core numbers 4 and 10, and the low priority group is allocated to a core number 6 (refer to core numbers 0 to 3, core numbers 4 and 10, and core number 6 of logical cores indicated by ○ in Fig. 27 described below).

In this way, the each-task-required isolation degree and core number calculation unit 221 first refers to the first correspondence relationship table 360 and determines the task execution group from the task type, and refers to the second correspondence relationship table 370 and determines the core number from the task execution group.

[Grouping Task Execution <Grouping Form>]

Workings and effects in a case of grouping the task execution and a case of not grouping the task execution are compared and described.

Fig. 27 is a diagram for describing task allocation in a case where the task execution is not grouped. Fig. 28 is a diagram for describing task allocation in a case where the task execution is grouped.

The CPU 1 illustrated in Figs. 27 and 28 includes six same physical cores 11 ("physical six cores") and a pair of the logical cores existing in the same physical core 11 ("logical 12 cores," refer to ○ in Figs. 27 and 28).

In a case where the task execution is not grouped as illustrated in Fig. 27, the tasks 1 to 5 (1: parallel calculation degree (high) of user data processing, 2: parallel calculation degree (low) of user data processing, 3: control data processing, 4: synchronization signal processing, and 5: configuration processing) are allocated to the logical core as follows. That is, as illustrated in Fig. 27, in a case where the task execution is not grouped, task allocation in which the physical cores are isolated as possible is needed, in accordance with a task that needs to be isolated. In this case, six physical cores 11 are required. As indicated by thick ○ in Fig. 27, the tasks 1 to 5 are allocated to the logical cores of the six physical cores 11 (all "front cores").

In a case where the task execution is grouped as illustrated in Fig. 28, the task execution group is grouped into the isolated and high priority group, the middle priority group, and the low priority group (Fig. 25), and the corresponding core number is allocated to the task execution group (Fig. 26).

As illustrated in the lower diagram in Fig. 28, the tasks 1 and 2 (1: parallel calculation degree (high) of user data processing and 2. parallel calculation degree (low) of user data processing) are the isolated and high priority group (Fig. 25) and allocated to the logical cores with the corresponding core numbers 0 to 3 as the task that needs to be isolated, with reference to the second correspondence relationship table 370 in Fig. 26 (refer to thick ○ hatching in Fig. 28).

Furthermore, the task 3 (3: control data processing) is the middle priority group (Fig. 25) and is allocated to the logical cores of the corresponding core numbers 4 and 10 (refer to thick ○ and reverse hatching in Fig. 28), with reference to the second correspondence relationship table 370 in Fig. 26. Here, because the middle priority group is the task that does not need to be isolated, the middle priority group allocated cores can be housed in the same physical core 11, and are allocated to the logical core ("front core") with the core number 4 and the logical core ("back core") with the core number 10 in the same physical core 11. That is, the middle priority group allocated cores (task 3 (3: control data processing)) are allocated to the logical core ("front core") with the core number 4 and the logical core ("back core") with the core number 10 in the same physical core 11.

Furthermore, the task 5 (5: configuration processing) is the low priority group, and is a task that does not need to be isolated, similarly to the middle priority group. Therefore, the task 5 (5: configuration processing) is allocated to the logical core ("back core") with the core number 10 of the same physical core 11 (refer to thick ○ shading in Fig. 28).

Therefore, to the logical core ("back core") with the core number 10 of the same physical core 11, in addition to the task 3 (3: control data processing), the task 5 (5 configuration processing) is also allocated.

In this way, in a case where the task execution is grouped, the tasks that need to be isolated (1: parallel calculation degree (high) of user data processing and 2. parallel calculation degree (low) of user data processing) are allocated to the "front core" of the logical core of the physical core 11. Furthermore, the tasks that do not need to be isolated (3: control data processing and 5: configuration processing) are housed in the same physical core 11. More specifically, in addition, among the tasks that do not need to be isolated, 3. the control data processing is allocated to the logical core ("front core") with the core number 4 and the logical core ("back core") with the core number 10 of the same physical core 11. Then, among the tasks that do not need to be isolated, 5: the configuration processing is allocated to the logical core ("back core") with the core number 10 of the same physical core 11, together with 3. the control data processing. As a result, as indicated by thick ○ hatching/reverse hatching in Fig. 28, the task execution group in Fig. 26 is satisfied by the five physical cores, and the number of cores can be reduced.

[Core Allocation Decision Sequence]

Fig. 29 is a flowchart illustrating a core allocation decision sequence.

In step S41, in the each-task-required isolation degree and core number calculation unit 221 (Figs. 16 to 18), the CPU core to be executed calculates the "required isolation degree" and the number of physical cores required for execution, for the task processing unit 230.

For each task, an example of a calculation method from the each task dedicated instruction usage ratio recording unit 210 (Fig. 19: data structure table 310), the low latency requirement recording unit 211 (Fig. 20: data structure table 320), and the each task load amount recording unit 212 (Fig. 21: data structure table 330) is described below.

<Method for Calculating Required Isolation Degree>

Because a parallel calculation degree in the CPU core of the dedicated instruction mounted on the CPU is limited, it is desirable that a task with a high dedicated instruction usage degree have a high isolation degree (occupy physical core). Therefore, the each-task-required isolation degree and core number calculation unit 221 uses a value corresponding to each task, recorded in the "ratio of the dedicated instruction" in the data structure table 310 (Fig. 19) of the each task dedicated instruction usage ratio recording unit 210.

<Method for Calculating The Number of Required Cores>

The number of required cores is calculated according to "an amount of a load" and "low latency required for task processing completion." Therefore, the each-task-required isolation degree and core number calculation unit 221 multiplies fixed coefficients used to calculate the number of CPU cores, based on a value obtained by multiplying "each task low latency requirement" in the data structure table 320 (Fig. 20) of the low latency requirement recording unit 211 by the each value acquired from the data structure table 330 (Fig. 21) of the each task load amount recording unit 212, for each task, and calculates the number of required cores.

In step S42, the core allocation decision unit 222 (Figs. 16 to 18) selects the required number of physical cores that satisfy the required isolation degree, according to the required isolation degree and the number of required cores of each task. For example, in a case where the required isolation degree is 1.0, the core allocation decision unit 222 selects a physical core in which another task is not executed and performs an instruction to allocate the task to the selected physical core. In other words, before the required isolation degree becomes 1.0 (for example, in a case where current required isolation degree is 0.8, task for 20 percents of required isolation degree can be allocated to the same physical core before required isolation degree becomes 1.0), the core allocation decision unit 222 selects the logical core of the same physical core and performs an instruction to allocate the task to the selected logical core.

Note that, in addition to the method for selecting a specific core number, as described with reference to Figs. 25 and 26, a form may be used in which the CPU cores are divided into the plurality of groups in advance and each task is caused to be executed by the CPU core to which each group belongs.

In step S43, the core allocation unit 260 (Figs. 16 to 18) sets the CPU core that executes each task based on the core selection result of the core allocation decision unit 222 and ends the processing of this flow. The core allocation unit 260 sets the CPU core that executes each task, for example, using the taskset command in the Linux OS.

Furthermore, as a variation of the core allocation decision unit 222, as described with reference to Figs. 25 and 26, in a case where the "method for allocating the task to the corresponding group" is selected, the form of using the cgroups command that defines the CPU core and the processing time as a resource group in advance and makes each execution task managed by the OS belong to each group may be used.

[Sequence at Task Processing]

Fig. 30 is a flowchart illustrating a sequence at a time of task processing.

In step S51, the task processing unit 230 (Figs. 16 to 18) repeatedly acquires the task from the task queue unit 240 and executes the task processing if there is a task. The task processing unit 230 is executed by any one of the CPU cores. There is a plurality of types of the task processing unit 230, and a task that can be processed by the each task processing unit 230 is different. For example, in an example of the vRAN for realizing radio signal processing by software, there is software according to each signal processing task such as the "control data processing," the "synchronization signal processing," or the "user data processing".

[Core Allocation Decision Sequence of Core Allocation Decision Unit 222]

Fig. 31 is a flowchart illustrating a core allocation decision sequence of the core allocation decision unit 222.

When a program starts, the core allocation decision unit 222 (Figs. 16 to 18) confirms the 0-th CPU core and acquires a task allocation status of the CPU core in step S61.

In step S62, the core allocation decision unit 222 determines whether or not a current task allocation amount of the CPU core is larger than the required isolation degree. If the current task allocation amount of the CPU core is not larger than the required isolation degree (S62: No), the core number is incremented to confirm the + 1-th CPU core, and the procedure returns to step S61.

If the current task allocation amount of the CPU core is larger than the required isolation degree (S62: Yes), it is determined whether or not the number of cores allocated in step S63 satisfies the number of required cores for each task. If the number of allocated cores satisfies the number of required cores for each task (S63: Yes), the processing of this flow ends. If the number of allocated cores does not satisfy the number of required cores for each task (S63: No), the procedure returns to step S61.

[Modifications of Second Embodiment]

The task scheduler device according to the present embodiment can be modified as follows.

<First Modification>

Fig. 32 is a configuration diagram of <First Modification> of the task scheduler device according to the second embodiment of the present invention. The same components as those in Fig. 16 are denoted with the same reference signs, and redundant description is omitted.

The task scheduler device 200B illustrated in Fig. 32 includes the each-application dedicated instruction ratio acquisition unit 110, the each task dedicated instruction usage ratio recording unit 210, a core allocation determination unit 220B, the core allocation decision unit 222, the task processing unit 230, the task queue unit 240, the core allocation unit 260, the core allocation status recording unit 130, the Port contention status monitoring unit 140, the intra-CPU calculator configuration information recording unit 150, the Port contention status acquisition unit 170, and the existing process core allocation change determination unit 180, in the userland 60. That is, the task scheduler device 200B illustrated in Fig. 32 has a configuration in which the low latency requirement recording unit 211, the each task load amount recording unit 212, and the each-task-required isolation degree recording unit 213 are removed from the task scheduler device 200 in Fig. 16. Furthermore, the core allocation determination unit 220B of the task scheduler device 200B illustrated in Fig. 32 has a configuration in which the each-task-required isolation degree and core number calculation unit 221 is removed from the core allocation determination unit 220 in Fig. 16.

The core allocation decision unit 222 of the core allocation determination unit 220B illustrated in Fig. 32 selects a required number of physical cores, based on each task dedicated instruction usage ratio of the each task dedicated instruction usage ratio recording unit 210.

Fig. 33 is a flowchart illustrating a core allocation decision sequence of the task scheduler device 200B illustrated in Fig. 32. The same processing as that in the flow in Fig. 29 is denoted with the same step number.
When the flow starts, in step S42B, the core allocation decision unit 222 (Fig. 32) of the task scheduler device 200B selects the required number of physical cores, based on each task dedicated instruction usage ratio of the each task dedicated instruction usage ratio recording unit 210.
In step S43, the core allocation unit 260 (Fig. 32) sets the CPU core that executes each task based on the core selection result of the core allocation decision unit 222 and ends the processing of this flow.

<Second Modification>

Fig. 34 is a configuration diagram of <Second Modification> of the task scheduler device according to the second embodiment of the present invention. The same components as those in Fig. 16 are denoted with the same reference signs, and redundant description is omitted.
A task scheduler device 200C illustrated in Fig. 34 includes the each-application dedicated instruction ratio acquisition unit 110, the each task dedicated instruction usage ratio recording unit 210, the low latency requirement recording unit 211, a core allocation determination unit 220C, the core allocation decision unit 222, the task processing unit 230, the task queue unit 240, the core allocation unit 260, the core allocation status recording unit 130, the Port contention status monitoring unit 140, the intra-CPU calculator configuration information recording unit 150, the Port contention status acquisition unit 170, and the existing process core allocation change determination unit 180, in the userland 60. That is, the task scheduler device 200C illustrated in Fig. 34 has a configuration in which the each task load amount recording unit 212 and the each-task-required isolation degree recording unit 213 are removed from the task scheduler device 200 in Fig. 16. Furthermore, the core allocation determination unit 220C of the task scheduler device 200C illustrated in Fig. 34 has a configuration in which the each-task-required isolation degree and core number calculation unit 221 is removed from the core allocation determination unit 220 in Fig. 16.
The core allocation decision unit 222 of the core allocation determination unit 220C illustrated in Fig. 34 selects a required number of physical cores, based on each task dedicated instruction usage ratio of the each task dedicated instruction usage ratio recording unit 210 and the low latency requirement of the low latency requirement recording unit 211.
Fig. 35 is a flowchart illustrating a core allocation decision sequence of the task scheduler device 200C illustrated in Fig. 34. The same processing as that in the flow in Fig. 29 is denoted with the same step number.
When the flow starts, in step S42C, the core allocation decision unit 222 (Fig. 34) of the task scheduler device 200C selects the required number of physical cores, based on each task dedicated instruction usage ratio of the each task dedicated instruction usage ratio recording unit 210 and the low latency requirement of the low latency requirement recording unit 211.
In step S43, the core allocation unit 260 (Fig. 34) sets the CPU core that executes each task, based on the core selection result of the core allocation decision unit 222 and ends the processing of this flow.

<Third Modification>

Fig. 36 is a configuration diagram of <Third Modification> of the task scheduler device according to the second embodiment of the present invention. The same components as those in Fig. 16 are denoted with the same reference signs, and redundant description is omitted.
A task scheduler device 200D illustrated in Fig. 36 includes the each-application dedicated instruction ratio acquisition unit 110, the each task dedicated instruction usage ratio recording unit 210, the each task load amount recording unit 212, a core allocation determination unit 220D, the core allocation decision unit 222, the task processing unit 230, the task queue unit 240, the core allocation unit 260, the core allocation status recording unit 130, the Port contention status monitoring unit 140, the intra-CPU calculator configuration information recording unit 150, the Port contention status acquisition unit 170, and the existing process core allocation change determination unit 180, in the userland 60. That is, the task scheduler device 200D illustrated in Fig. 36 has a configuration in which the low latency requirement recording unit 211 and the each-task-required isolation degree recording unit 213 are removed from the task scheduler device 200 in Fig. 16. Furthermore, a core allocation determination unit 220D of the task scheduler device 200D illustrated in Fig. 36 has a configuration in which the each-task-required isolation degree and core number calculation unit 221 is removed from the core allocation determination unit 220 in Fig. 16.
The core allocation decision unit 222 of the core allocation determination unit 220D illustrated in Fig. 36 selects a required number of physical cores, based on each task dedicated instruction usage ratio of the each task dedicated instruction usage ratio recording unit 210 and the load amount of the each task load amount recording unit 212.
Fig. 37 is a flowchart illustrating a core allocation decision sequence of the task scheduler device 200D illustrated in Fig. 36. The same processing as that in the flow in Fig. 29 is denoted with the same step number.

When the flow starts, in step S42D, the core allocation decision unit 222 (Fig. 36) of the task scheduler device 200D selects a required number of physical cores, based on each task dedicated instruction usage ratio of the each task dedicated instruction usage ratio recording unit 210 and the load amount of the each task load amount recording unit 212.
In step S43, the core allocation unit 260 (Fig. 36) sets the CPU core that executes each task, based on the core selection result of the core allocation decision unit 222 and ends the processing of this flow.

<Fourth Modification>

Fig. 38 is a configuration diagram of <Fourth Modification> of the task scheduler device according to the second embodiment of the present invention. The same components as those in Fig. 16 are denoted with the same reference signs, and redundant description is omitted.
A task scheduler device 200E illustrated in Fig. 38 includes the each-application dedicated instruction ratio acquisition unit 110, the each task dedicated instruction usage ratio recording unit 210, the each-task-required isolation degree recording unit 213, a core allocation determination unit 220E, each-task-required isolation degree and core number calculation unit 221E (required isolation degree calculation unit), the core allocation decision unit 222, the task processing unit 230, the task queue unit 240, the core allocation unit 260, the core allocation status recording unit 130, the Port contention status monitoring unit 140, the intra-CPU calculator configuration information recording unit 150, the Port contention status acquisition unit 170, and the existing process core allocation change determination unit 180, in the userland 60. That is, the task scheduler device 200E illustrated in Fig. 38 has a configuration in which the low latency requirement recording unit 211 and the each task load amount recording unit 212 are removed from the task scheduler device 200 in Fig. 16. Furthermore, the core allocation determination unit 220E of the task scheduler device 200E illustrated in Fig. 38 includes the each-task-required isolation degree and core number calculation unit 221E and the core allocation decision unit 222.
The each-task-required isolation degree and core number calculation unit 221E of the core allocation determination unit 220E illustrated in Fig. 38 calculates the required isolation degree indicating how many percents of the single physical core the CPU core to be executed needs to occupy.
The core allocation decision unit 222 selects a required number of physical cores that satisfy a required isolation degree, based on the required isolation degree for each task.
Fig. 39 is a flowchart illustrating a core allocation decision sequence of the task scheduler device 200E illustrated in Fig. 38. The same processing as that in the flow in Fig. 29 is denoted with the same step number.
When the flow starts, in step S41E, the each-task-required isolation degree and core number calculation unit 221E (Fig. 38) of the core allocation determination unit 220E calculates the required isolation degree indicating how many percents of the single physical core the CPU core to be executed needs to occupy.
In step S42E, the core allocation decision unit 222 (Fig. 38) of the core allocation determination unit 220E selects the required number of physical cores that satisfy the required isolation degree, based on the required isolation degree of each task.
In step S43, the core allocation unit 260 (Fig. 38) records the required isolation degree derived by the each-task-required isolation degree and core number calculation unit 221E (Fig. 38) in the each-task-required isolation degree recording unit 213 (Fig. 38).

[Effects of Second Embodiment]

As described above, the task scheduler devices 200 and 200A (Figs. 16 to 18) include the each-application dedicated instruction ratio acquisition unit 110 (Figs. 16 to 18) that acquires the execution ratio of the dedicated instruction specialized for the specific calculation, of each application that operates on the server, the intra-CPU calculator configuration information recording unit 150 (Figs. 16 to 18) that records the number of intra-CPU calculators as the number of instructions executable at the same time (for example, the number of executable instructions for each Port), the core allocation determination unit 120 (Figs. 16 to 18) that determines the core allocation destination to the same physical core, using the execution ratio of the dedicated instruction of the each-application dedicated instruction ratio acquisition unit 110 and the number of intra-CPU calculators of the intra-CPU calculator configuration information recording unit 150, the core allocation unit 160 (Figs. 16 to 18) that allocates the logical cores 21 and 22 in which each process is operable, based on the identifier of the process and the identifiers of the logical cores 21 and 22, as the core allocation destination determined by the core allocation determination unit 120, the each task dedicated instruction usage ratio recording unit 210 (Figs. 16 to 18) that records each task dedicated instruction usage ratio indicating the ratio of using the dedicated instruction in the CPU, in the execution of each task, the low latency requirement recording unit 211 (Figs. 16 to 18) that records the low latency requirement, required for the execution of each task, the each task load amount recording unit 212 (Figs. 16 to 18) that records the load amount required for the calculation of each task, the each-task-required isolation degree calculation unit (the each-task-required isolation degree and core number calculation unit 221, Figs. 16 to 18) that calculates the required isolation degree indicating how many percents of the single physical core the CPU core to be executed needs to occupy, and the core allocation decision unit 222 (Figs. 16 to 18) that selects the required number of physical cores that satisfy the required isolation degree, based on the required isolation degree pf each task.

(1) Effect of satisfying the "requirement 1: CPU processing time required for each process is allocated" in a task with a high processing performance and a task in which a contention is likely to occur.
In the first embodiment, by allocating the logical core so as to make the combination in which the performances of the logical cores do not contend in the same physical core, it is possible to achieve both of securing the performance and reducing the number of cores and to save power. In the second embodiment, in addition to the effects of the first embodiment, it is possible to satisfy that "the CPU processing performance required for each task is allocated within a certain time" (satisfy "low latency requirement"), by calculating the required isolation degree, isolating the physical core, and avoiding a processing contention in the core, in the task with a high processing performance and in which the contention is likely to occur. For example, even in a case where the three types classified as Uplink/DownLink/PDSCH indicated in Non Patent Literature 2 (Fig. 14) contend, it is possible to eliminate a processing contention in the same physical core and to suppress processing performance insufficiency, by isolating the physical core and avoiding the processing contention in the core.
(2) Effect of satisfying the "requirement 2: the number of execution cores required for the execution of each task is minimum," in the task with a high processing performance or the task in which the contention is likely to occur

When the back core is used (back core is allocated), there is a possibility that the processing performance is insufficient, and this causes a delay or the like, due to the processing contention. For example, the classification into three including Uplink/DownLink/PDSCH indicated in Non Patent Literature 2 (Fig. 14) does not consider the contention. Therefore, in a case where the back core is allocated, there is a possibility that the processing contends, and the processing performance becomes insufficient.
In the present embodiment, by calculating the required task isolation degree (or claim 13: table setting in advance) for each task (for example, L1 task), a task that requires the processing performance and a task that can use the SMT are identified (leading to satisfaction of "requirement 1 (performance)". Then, for a task with a low latency requirement and a low processing performance or a task in which a contention is less likely to occur, the core (back core or the like) coexisted by the SMT is allocated. As a result, the SMT can be utilized, and the "requirement 2: the number of execution cores required for the execution of each task is minimum" can be satisfied. Furthermore, because the number of CPU execution cores that are not used is reduced by effectively using the back core, it is possible to save power.

(3) Summary

In the present embodiment, the core is allocated in consideration of the characteristics of each task (low latency and/or the number of required cores), in addition to the "dedicated instruction processing contention in the CPU" in the first embodiment. That is, by performing allocation to the back core after a processing contention is confirmed from surrounding information, it is possible to effectively use the back core without a contention. The present invention is preferably applied to a vRAN L1 scheduler considering the contention in the SMT.
The task scheduler devices 200 and 200A (Figs. 16 to 18) include the low latency requirement recording unit 211 that records the low latency requirement, required for the execution of each task, and the each-task-required isolation degree calculation unit (the each-task-required isolation degree and core number calculation unit 221, Figs. 16 to 18) calculates the required isolation degree, based on the required isolation degree of each task and the low latency requirement.
In this way, the low latency requirement recording unit 211 that records the low latency requirement required for the execution of each task is included, and the each-task-required isolation degree and core number calculation unit 221 (Figs. 16 to 18) can calculate a more accurate required isolation degree, by calculating a required isolation degree based on the required isolation degree of each task and the low latency requirement.
The task scheduler devices 200 and 200A (Figs. 16 to 18) include the each task load amount recording unit 212 that records the load amount required for the calculation of each task, the each-task-required isolation degree calculation unit (the each-task-required isolation degree and core number calculation unit 221, Figs. 16 to 18) calculates the number of physical cores required for execution, based on the load amount, and the core allocation decision unit 222 selects the required number of physical cores that satisfy the required isolation degree, based on the required isolation degree and the number of physical cores of each task.
In this way, the task scheduler devices 200 and 200A use the load amount for each task type as the number of required cores so that the each-task-required isolation degree and core number calculation unit 221 can derive the required isolation degree and core number table 340 (Fig. 24).
In the task scheduler device 200B (Fig. 32) according to <First Modification>, the task scheduler device 200B includes the each task dedicated instruction usage ratio recording unit 210 that records each task dedicated instruction usage ratio indicating the ratio of using the dedicated instruction in the CPU, in the execution of each task, the core allocation determination unit 220B, the core allocation decision unit 222 that selects the required number of physical cores, based on each task dedicated instruction usage ratio, the task processing unit 230, the task queue unit 240, and the core allocation unit 260, in the userland 60.

In this way, the task scheduler device 200B can achieve the effect of "the dedicated instruction processing contention in the CPU" in the first embodiment, that is, an effect of eliminating the processing contention in the same physical core and suppressing the processing performance insufficiency, by selecting the required number of physical cores, based on each task dedicated instruction usage ratio of the each task dedicated instruction usage ratio recording unit 210.

In the task scheduler device 200C (Fig. 34) according to <Second Modification>, the task scheduler device 200C includes the each task dedicated instruction usage ratio recording unit 210 that records each task dedicated instruction usage ratio indicating the ratio of using the dedicated instruction in the CPU, in the execution of each task, the low latency requirement recording unit 211 that records the low latency requirement, required for the execution of each task, the core allocation determination unit 220C, the core allocation decision unit 222, the task processing unit 230, the task queue unit 240, and the core allocation unit 260, in the userland 60.

In this way, the task scheduler device 200C can further improve the effect of "the dedicated instruction processing contention in the CPU" in the first embodiment, from the viewpoint of low latency, by selecting the required number of physical cores, based on each task dedicated instruction usage ratio of the each task dedicated instruction usage ratio recording unit 210 and the low latency requirement of the low latency requirement recording unit 211.

In the task scheduler device 200D (Fig. 36) according to <Third Modification>, the task scheduler device 200D includes the each task dedicated instruction usage ratio recording unit 210 that records each task dedicated instruction usage ratio indicating the ratio of using the dedicated instruction in the CPU, in the execution of each task, the each task load amount recording unit 212 that records the load amount required for the calculation of each task, the core allocation determination unit 220, the core allocation decision unit 222 that selects the required number of physical cores that satisfy the required isolation degree, based on the required isolation degree of each task, the task processing unit 230, the task queue unit 240, and the core allocation unit 260.

In this way, the task scheduler device 200D can accurately select the number of physical cores according to the load amount and further improve the effect of "the dedicated instruction processing contention in the CPU" in the first embodiment, by selecting the required number of physical cores, based on each task dedicated instruction usage ratio of the each task dedicated instruction usage ratio recording unit 210 and the load amount of the each task load amount recording unit 212.

In the task scheduler device 200E (Fig. 38) according to <Fourth Modification>, the task scheduler device 200E includes the each task dedicated instruction usage ratio recording unit 210 that records each task dedicated instruction usage ratio indicating the ratio of using the dedicated instruction in the CPU, in the execution of each task, the each-task-required isolation degree recording unit 213, the core allocation determination unit 220E, the each-task-required isolation degree and core number calculation unit 221E (required isolation degree calculation unit) that calculates the required isolation degree indicating how many percents of the single physical core the CPU core to be executed needs to occupy, the core allocation decision unit 222 that records the required isolation degree derived by the each-task-required isolation degree and core number calculation unit 221E (Fig. 38) in the each-task-required isolation degree recording unit 213 (Fig. 38), the task processing unit 230, the task queue unit 240, and the core allocation unit 260 that records the required isolation degree derived by the each-task-required isolation degree and core number calculation unit 221E (Fig. 38) in the each-task-required isolation degree recording unit 213 (Fig. 38).

In this way, in addition to the effects of the first embodiment, the task scheduler device 200E can satisfy that "the CPU processing performance, required for each task is allocated within a certain time" (satisfy "low latency requirement"), by calculating the required isolation degree, isolating the physical core, and avoiding the processing contention in the core, in the task with a high processing performance or the task in which the contention is likely to occur.

In the task scheduler devices 200 and 200A (Figs. 16 to 18), in a case where the required isolation degree is a predetermined maximum value, the core allocation decision unit 222 (Figs. 16 to 18) prohibits the execution of the another task in the same physical core and selects the single or the plurality of core numbers within a range where the required isolation degree does not exceed the maximum value and allocates the task, to the single physical core.

In this way, the core allocation decision unit 222 of the task scheduler devices 200 and 200A can select the required number of physical cores that satisfy the required isolation degree, based on the required isolation degree and the number of physical cores of each task.

In the task scheduler devices 200 and 200A (Figs. 16 to 18), the each-task-required isolation degree calculation unit (the each-task-required isolation degree and core number calculation unit 221, Figs. 16 to 18) performs indexation on the required isolation degree between zero to one while setting one as the maximum value (in the present embodiment, valid number is set to one decimal place, 1.0 is set as maximum value between 0.0 and 1.0), and in a case where the required isolation degree is one, the core allocation decision unit 222 (Figs. 16 to 18) prohibits the execution of the another task in the same physical core and selects the single or the plurality of core numbers so that the required isolation degree does not exceed one in total and allocates the task, to the single physical core.

In this way, the core allocation decision unit 222 of the task scheduler devices 200 and 200A can select the required number of physical cores that satisfy the required isolation degree, based on the required isolation degree and the number of physical cores of each task. For example, in a case where the required isolation degree is 1.0, it is possible to prohibit the execution of the another task in the same physical core and to select the single or the plurality of core numbers so that the required isolation degree does not exceed one in total and allocate the task to the single physical core.

Here, the mode for calculating the task isolation degree required for each task (Figs. 19 to 21 and 24) calculates the required isolation degree, isolates the physical core, and avoids the processing contention in the core, and then can select the plurality of core numbers and allocate the task to the logical core ("back core") that allows the execution of the another task in the same physical core until the required isolation degree becomes 1.0, and it is possible to more finely and effectively use the back core.

In the task scheduler devices 200 and 200A (Figs. 16 to 18), the each-task-required isolation degree calculation unit (the each-task-required isolation degree and core number calculation unit 221, Figs. 16 to 18) groups the priorities of the task execution for each task type as the task execution group in advance and stores the priority, and the core allocation decision unit 222 selects the core number corresponding to the CPU core to which the task execution group belongs and allocates the task.

In this way, the core allocation decision unit 222 (Figs. 16 to 18) of the task scheduler devices 200 and 200A can select the core number corresponding to the CPU core to which the task execution group belongs and allocate the task. For example, as illustrated in Fig. 28, the task execution group in Fig. 26 is satisfied by the five physical cores, and the number of cores can be reduced.

Note that the mode for setting the table in advance (Figs. 25 and 26) has an advantage that the processing amount in the task allocation is less than the mode for calculating the task isolation degree for each task (Figs. 19 to 21 and 24).

In the task scheduler devices 200 and 200A (Figs. 16 to 18), the core allocation decision unit 222 selects the core number for the pair of logical cores existing in the same physical core and allocates the task by the SMT.

In this way, the task scheduler devices 200 and 200A identify the task that requires the processing performance and the task that can use the SMT, by setting the table in advance, for the task (for example, L1 task). Then, for the task with a low latency requirement and a low processing performance and the task in which the contention is less likely to occur, the core (back core or the like) coexist by the SMT is allocated.

Note that, in the present embodiment, the task scheduler devices 200 and 200A (Figs. 16 to 18) have a configuration including each recording unit, as the each task dedicated instruction usage ratio recording unit 210, the low latency requirement recording unit 211, and the each task load amount recording unit 212. However, each recording unit is a name for convenience in order to clarify the components of the invention. The each-task-required isolation degree and core number calculation unit 221 may be any unit as long as it can acquire each task dedicated instruction usage ratio, the low latency requirement, and the task load amount and may be an each task dedicated instruction usage ratio acquisition unit, a low latency requirement acquisition unit, and a task load amount acquisition unit. In general, when information is acquired, the acquired information is stored.

[Hardware Configuration]

The task scheduler devices 100 and 100A (Figs. 2 and 3) according to the first embodiment and the task scheduler devices 200 and 200A to 200E according to the second embodiment (Figs. 16 to 18, 32, 34, 36, and 38) are implemented by a computer 900 having a configuration as illustrated in Fig. 40, for example.

Fig. 40 is a hardware configuration diagram illustrating an example of the computer 900 that implements functions of the task scheduler devices 100 and 100A (Figs. 2 and 3) and the task scheduler devices 200 and 200A to 200E according to the second embodiment (Figs. 16 to 18, 32, 34, 36, and 38).

The computer 900 includes a CPU 901, a ROM 902, a RAM 903, an HDD 904, a communication interface (I/F) 906, an input/output interface (I/F) 905, and a media interface (I/F) 907.

The CPU 901 operates based on a program stored in the ROM 902 or the HDD 904 and controls each unit of the task scheduler devices 100 and 100A (Figs. 2 and 3) and the task scheduler devices 200 and 200A to 200E according to the second embodiment (Figs. 16 to 18, 32, 34, 36, and 38). The ROM 902 stores a boot program to be executed by the CPU 901 when the computer 900 is activated, a program depending on hardware of the computer 900, and the like.

The CPU 901 controls, via the input/output I/F 905, an input device 910 such as a mouse or a keyboard, and an output device 911 such as a display. Via the input/output I/F 905, the CPU 901 acquires data from the input device 910, and outputs generated data to the output device 911. Note that a graphics processing unit (GPU) or the like may be used as a processor in conjunction with the CPU 901.

The HDD 904 stores a program to be executed by the CPU 901, data to be used by the program, and the like. The communication I/F 906 receives data from another device via a communication network (for example, a network (NW) 920), outputs the data to the CPU 901, and transmits data generated by the CPU 901 to another device via the communication network.

The media I/F 907 reads a program or data stored in a recording medium 912, and outputs the program or data to the CPU 901 via the RAM 903. The CPU 901 loads a program related to target processing from the recording medium 912 into the RAM 903 via the media I/F 907 and executes the loaded program. The recording medium 912 is an optical recording medium such as a digital versatile disc (DVD) or a phase change rewritable disk (PD), a magneto optical recording medium such as a magneto optical disk (MO), a magnetic recording medium, a conductor memory tape medium, a semiconductor memory, or the like.

For example, in a case where the computer 900 functions as the task scheduler devices 100 and 100A (Figs. 2 and 3) configured as a single device according to the first embodiment and the task scheduler devices 200 and 200A to 200E according to the second embodiment (Figs. 16 to 18, 32, 34, 36, and 38), the CPU 901 of the computer 900 implements the functions of the task scheduler devices 100 and 100A and the task scheduler devices 200 and 200A to 200E by executing the program loaded on the RAM 903. In addition, the HDD 904 stores data in the RAM 903. The CPU 901 reads the program related to the target processing from the recording medium 912 and executes the program. Additionally, the CPU 901 may read the program related to the target processing from another device via the communication network (NW 920).

Note that, among processing described in each of the above embodiments and each of the modifications, all or some of processing described as being automatically executed can be manually executed, or all or some of processing described as being manually executed can be automatically executed by a known method. In addition, processing procedures, control procedures, specific names, and information including various types of data and parameters illustrated in the specification and the drawings can be arbitrarily changed unless otherwise specified.

In addition, each component of each device that has been illustrated is functionally conceptual, and is not necessarily physically configured as illustrated. That is, a specific form of distribution and integration of individual devices is not limited to the illustrated form, and all or a part of the configuration can be functionally or physically distributed and integrated in any unit according to various loads, usage conditions, and the like.

Furthermore, some or all of the components, functions, processing units, processing means, and the like described above may be implemented by hardware, for example, by designing them in an integrated circuit. Furthermore, the individual components, functions, or the like described above may be implemented by software for interpreting and executing a program for causing a processor to implement the individual functions. Information such as a program, a table, or a file for implementing each function can be held in a recording device such as a memory, a hard disk, or a solid state drive (SSD), or in a recording medium such as an integrated circuit (IC) card, a secure digital (SD) card, or an optical disc.

Reference Signs List

11 physical core
21, 22 logical core
50 CPU
60 userland (userland)
100, 100A, 200, 200A, 200B, 200C, 200D, 200E task scheduler device
110 each application dedicated instruction ratio acquisition unit (dedicated instruction ratio acquisition unit)
120 core allocation determination unit
130 core allocation status recording unit
140 Port contention status monitoring unit
150 intra-CPU calculator configuration information recording unit
160, 260 core allocation unit
170 Port contention status acquisition unit
180 existing process core allocation change determination unit
210 each task dedicated instruction usage ratio recording unit
211 low latency requirement recording unit
212 each task load amount recording unit
213 each-task-required isolation degree recording unit
220, 220B, 220C, 220E core allocation determination unit
221, 221E each-task-required isolation degree and core number calculation unit (required isolation degree calculation unit)

222 core allocation decision unit
230 task processing unit
240 task queue unit
310, 320, 330data structure table
340 required isolation degree and core number table
360 first correspondence relationship table
370 second correspondence relationship table
1000 computing system

## Claims

**1.** A task scheduler device comprising:

a dedicated instruction ratio acquisition unit that acquires an execution ratio of a dedicated instruction specialized for specific calculation, of each application that operates on a server;
an intra-CPU calculator configuration information recording unit that records number of intra-CPU calculators as number of instructions executable at a same time;
a core allocation determination unit that determines a core allocation destination to a same physical core, using the execution ratio of the dedicated instruction from the dedicated instruction ratio acquisition unit and the number of the intra-CPU calculators from the intra-CPU calculator configuration information recording unit; and
a core allocation unit that allocates a logical core in which each process is operable, based on an identifier of the process and an identifier of the logical core, for the core allocation destination determined by the core allocation determination unit.

**2.** A task scheduler device comprising:

a dedicated instruction ratio acquisition unit that acquires an execution ratio of a dedicated instruction specialized for specific calculation, of each application that operates on a server;
an intra-CPU calculator configuration information recording unit that records number of intra-CPU calculators as number of instructions executable at a same time;
a core allocation determination unit that determines a core allocation destination to a same physical core, using the execution ratio of the dedicated instruction from the dedicated instruction ratio acquisition unit and the number of the intra-CPU calculators from the intra-CPU calculator configuration information recording unit;
a core allocation unit that allocates a logical core in which each process is operable, based on an identifier of the process and an identifier of the logical core, for the core allocation destination determined by the core allocation determination unit;
each task dedicated instruction usage ratio recording unit that records each task dedicated instruction usage ratio indicating a ratio of using a dedicated instruction in a CPU in execution of each task; and
a core allocation decision unit that selects a required number of physical cores, based on the each task dedicated instruction usage ratio.

**3.** The task scheduler device according to claim 1, wherein
the core allocation determination unit allocates each process to the logical core so that processes to be executed do not contend.

**4.** The task scheduler device according to claim 1, wherein
the core allocation determination unit allocates the logical core so as to make a combination in which performance between the dedicated instructions and performance between types of dedicated instructions do not contend.

**5.** The task scheduler device according to claim 1, wherein
the core allocation determination unit preferentially allocates a process for executing a general-purpose instruction, to the physical core to which a process for executing the dedicated instruction is allocated.

**6.** The task scheduler device according to claim 1, wherein
the core allocation determination unit selects a logical core in which a process with a lowest contention degree operates from among the logical cores for a newly activated process.

7. The task scheduler device according to claim 1, wherein
in a case in which a process in which instructions contend is executed, the core allocation determination unit allocates the process to another physical core and allocates a process in which instruction execution is less likely to contend to a remaining logical core.

8. The task scheduler device according to claim 2, comprising:

a low latency requirement recording unit that records a low latency requirement required for execution of each task, wherein
the core allocation decision unit
selects the required number of physical cores, based on the each task dedicated instruction usage ratio and the low latency requirement.

9. The task scheduler device according to claim 8, comprising:

each task load amount recording unit that records a load amount required for calculation of each task, wherein
the core allocation decision unit
selects the required number of physical cores, based on the each task dedicated instruction usage ratio and the load amount.

10. The task scheduler device according to claim 2, comprising:

each-task-required isolation degree calculation unit that calculates a required isolation degree indicating how many percents of a single physical core a CPU core to be executed needs to occupy, wherein
the core allocation decision unit
selects the required number of physical cores that satisfy a required isolation degree, based on the required isolation degree of the each task.

11. The task scheduler device according to claim 10, wherein
the core allocation decision unit prohibits execution of another task in the same physical core in a case in which the required isolation degree is a predetermined maximum value and selects a single or a plurality of core numbers within a range in which the required isolation degree does not exceed the predetermined maximum value and allocates a task to a single physical core.

12. The task scheduler device according to claim 10, wherein

the each-task-required isolation degree calculation unit performs indexation on the required isolation degree between zero and one while setting one as a maximum value, and
the core allocation decision unit prohibits execution of another task in the same physical core in a case in which the required isolation degree is one and selects a single or a plurality of core numbers so that the required isolation degree does not exceed one in total and allocates a task to a single physical core.

13. The task scheduler device according to claim 10, wherein

the each-task-required isolation degree calculation unit groups a priority of task execution for each task type into a task execution group in advance and stores the priority, and
the core allocation decision unit selects a core number corresponding to a CPU core to which the task execution group belongs, and allocates a task to the CPU core.

14. The task scheduler device according to claim 2, wherein
the core allocation decision unit selects a core number for a pair of logical cores existing in the same physical core through simultaneous multi-threading (SMT) and allocates a task to the pair of logical cores.

15. A task scheduling method by a task scheduler device using hardware multi-threading that makes a single physical core appear as a plurality of logical cores in a pseudo manner in a computing system for executing a dedicated instruction specialized for specific calculation, wherein

the task scheduler device executes

a step for acquiring an execution ratio of the dedicated instruction of each application that operates on a server;
a step for recording number of intra-CPU calculators as number of instructions executable at a same time;
a step for determining a core allocation destination to a same physical core, using the acquired execution ratio of the dedicated instruction and the number of the intra-CPU calculators; and
a step for allocating a logical core in which each process is operable, based on an identifier of the process and an identifier of the logical core for the determined core allocation destination.

**16.** A task scheduling method by a task scheduler device using hardware multi-threading that makes a single physical core appear as a plurality of logical cores in a pseudo manner in a computing system executing a dedicated instruction specialized for specific calculation, wherein

the task scheduler device executes
a step for acquiring an execution ratio of the dedicated instruction of each application that operates on a server;
a step for recording number of intra-CPU calculators as number of instructions executable at a same time;
a step for determining a core allocation destination to a same physical core using the acquired execution ratio of the dedicated instruction and the number of intra-CPU calculators;
a step for allocating a logical core in which each process is operable based on an identifier of the process and an identifier of the logical core for the determined core allocation destination;
a step for recording each task dedicated instruction usage ratio indicating a ratio of using a dedicated instruction in a CPU in execution of each task; and
a step for selecting a required number of physical cores that satisfy a required isolation degree, based on the each task dedicated instruction usage ratio.

**17.** A program for causing a computer to function as the task scheduler device according to any one of claims 1 to 14.

Fig. 1

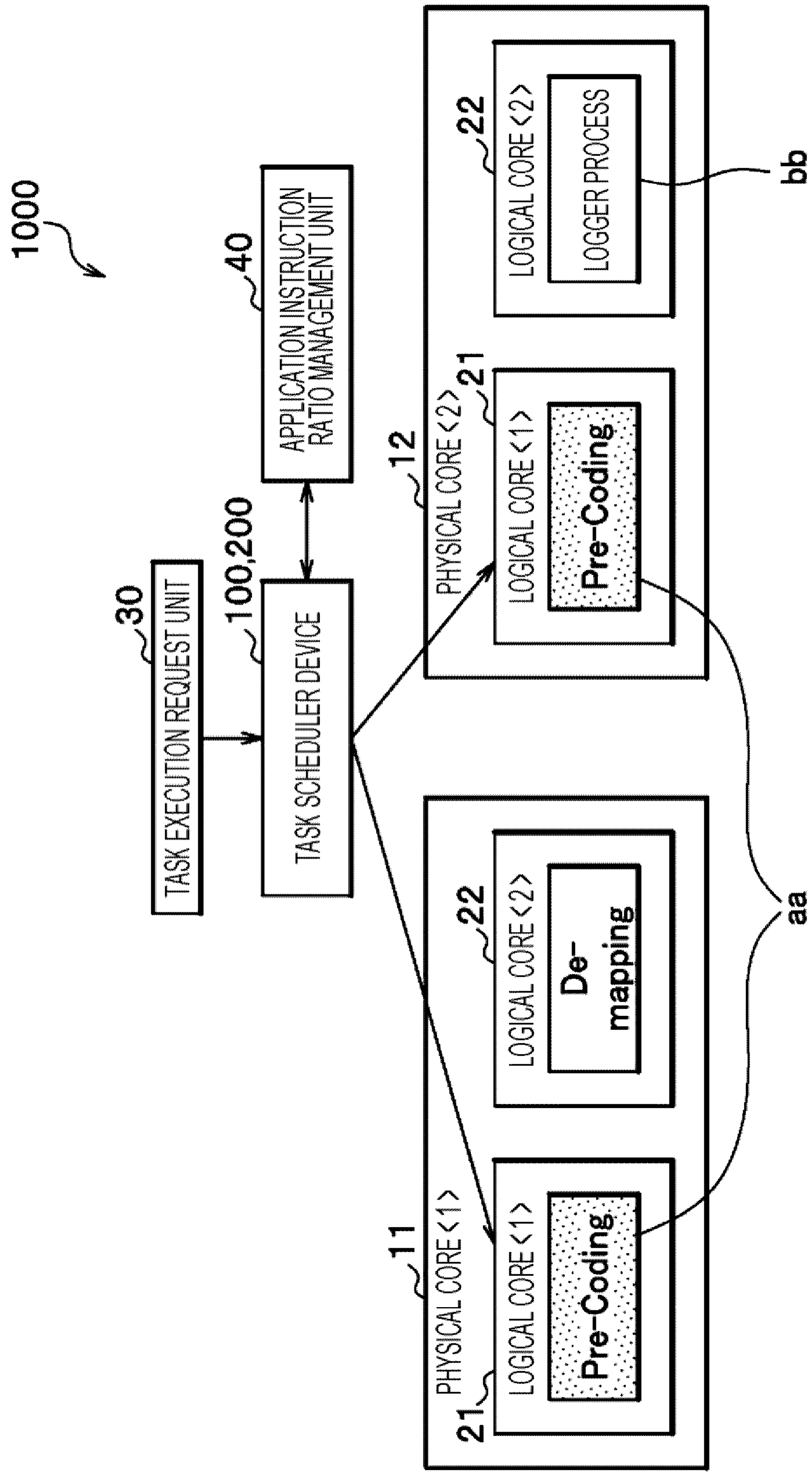
1000
30
TASK EXECUTION REQUEST UNIT
100,200
TASK SCHEDULER DEVICE
40
APPLICATION INSTRUCTION RATIO MANAGEMENT UNIT
11
PHYSICAL CORE <1>
21
LOGICAL CORE <1>
Pre-Coding
22
LOGICAL CORE <2>
De-mapping
12
PHYSICAL CORE <2>
21
LOGICAL CORE <1>
Pre-Coding
22
LOGICAL CORE <2>
LOGGER PROCESS
aa
bb

Fig. 2

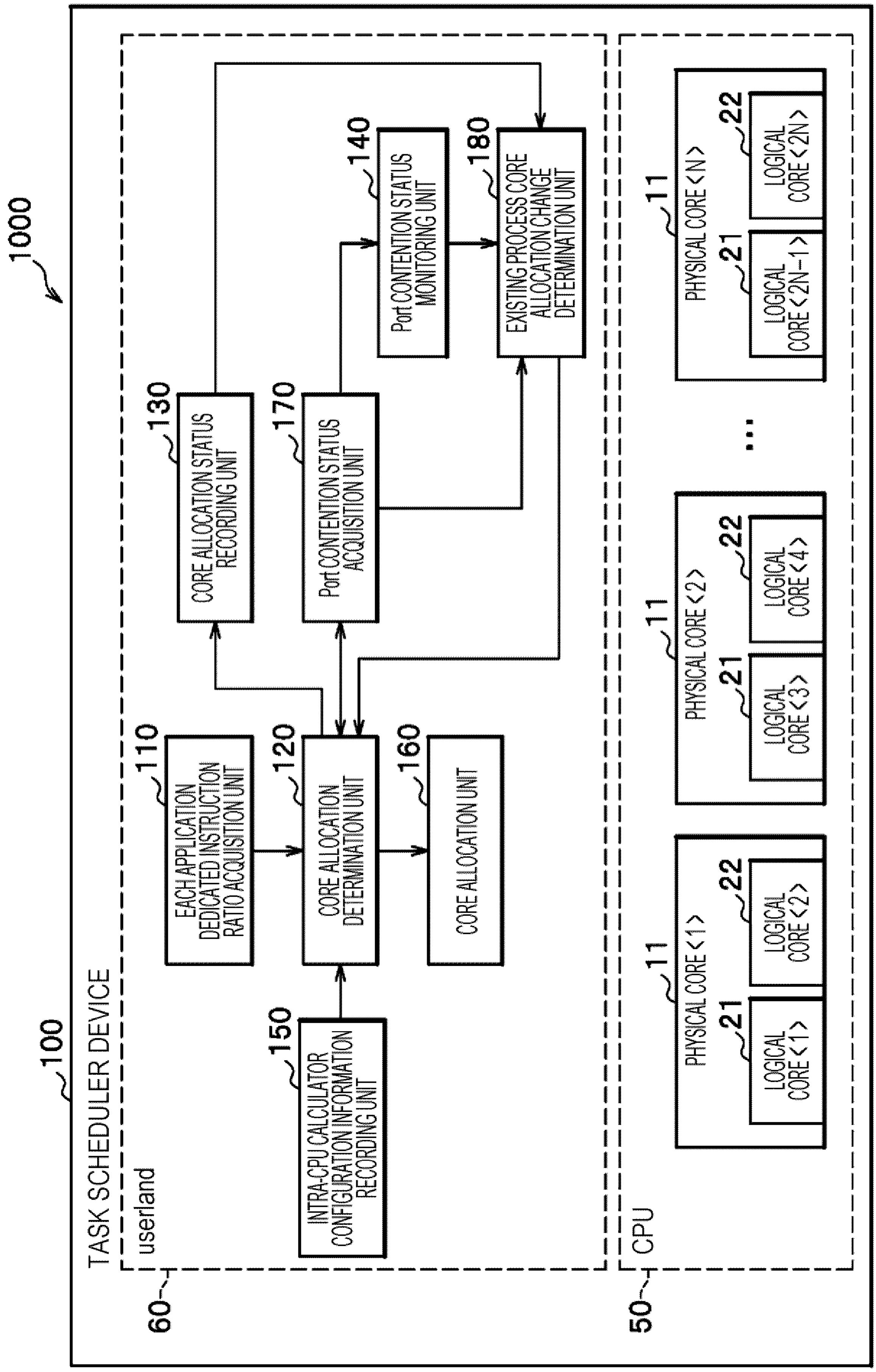
1000
100
TASK SCHEDULER DEVICE
60
userland
150
INTRA-CPU CALCULATOR CONFIGURATION INFORMATION RECORDING UNIT
110
EACH APPLICATION DEDICATED INSTRUCTION RATIO ACQUISITION UNIT
120
CORE ALLOCATION DETERMINATION UNIT
160
CORE ALLOCATION UNIT
130
CORE ALLOCATION STATUS RECORDING UNIT
170
Port CONTENTION STATUS ACQUISITION UNIT
140
Port CONTENTION STATUS MONITORING UNIT
180
EXISTING PROCESS CORE ALLOCATION CHANGE DETERMINATION UNIT
50
CPU
11
PHYSICAL CORE <1>
21
LOGICAL CORE <1>
22
LOGICAL CORE <2>
11
PHYSICAL CORE <2>
21
LOGICAL CORE <3>
22
LOGICAL CORE <4>
...
11
PHYSICAL CORE <N>
21
LOGICAL CORE <2N−1>
22
LOGICAL CORE <2N>

Fig. 3

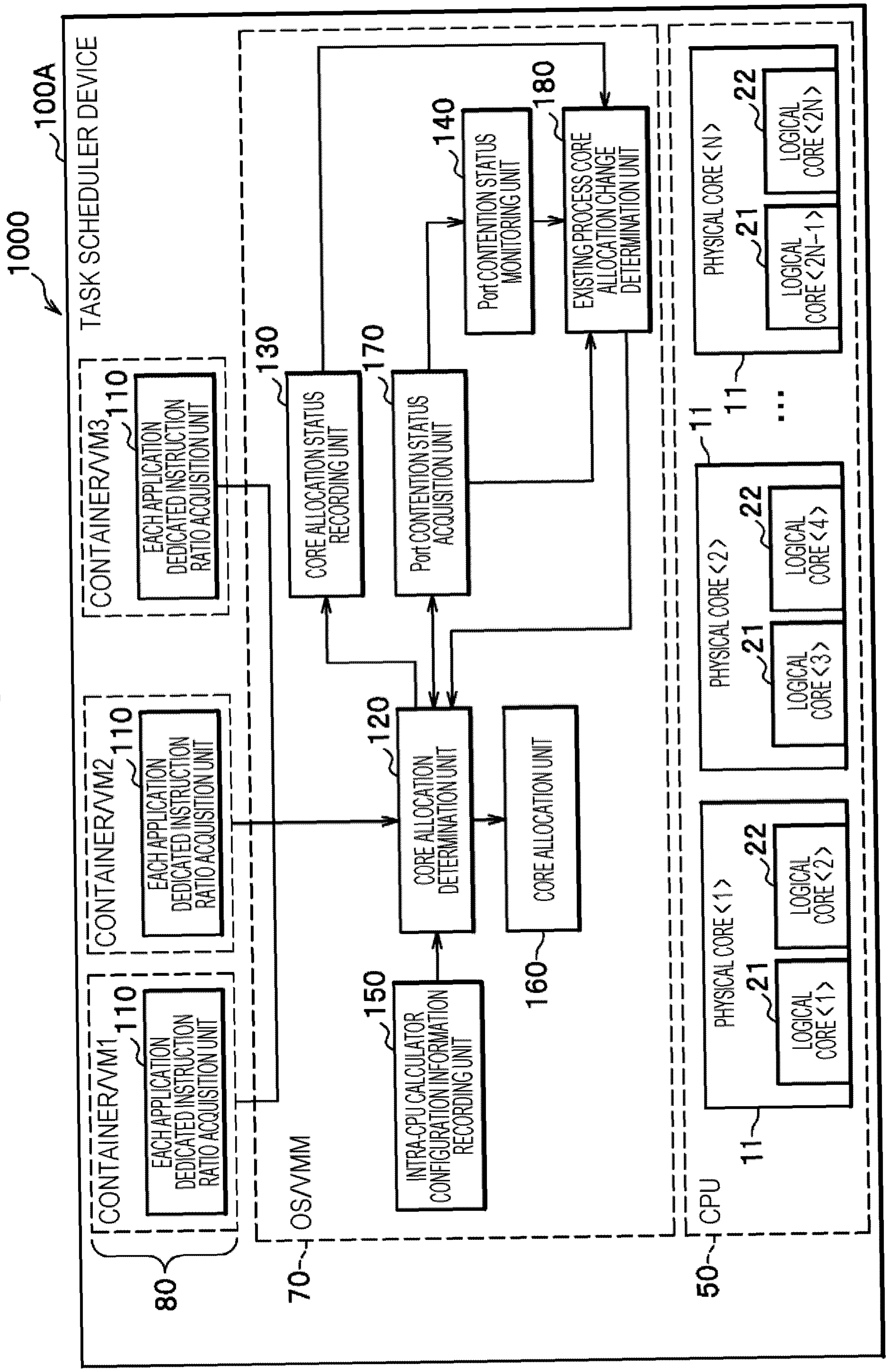
1000
TASK SCHEDULER DEVICE
100A
CONTAINER/VM1
CONTAINER/VM2
CONTAINER/VM3
110
EACH APPLICATION DEDICATED INSTRUCTION RATIO ACQUISITION UNIT
80
OS/VMM
70
130
CORE ALLOCATION STATUS RECORDING UNIT
170
Port CONTENTION STATUS ACQUISITION UNIT
140
Port CONTENTION STATUS MONITORING UNIT
180
EXISTING PROCESS CORE ALLOCATION CHANGE DETERMINATION UNIT
120
CORE ALLOCATION DETERMINATION UNIT
150
INTRA-CPU CALCULATOR CONFIGURATION INFORMATION RECORDING UNIT
160
CORE ALLOCATION UNIT
CPU
50
11
PHYSICAL CORE <1>
PHYSICAL CORE <2>
PHYSICAL CORE <N>
21
22
LOGICAL CORE <1>
LOGICAL CORE <2>
LOGICAL CORE <3>
LOGICAL CORE <4>
LOGICAL CORE <2N−1>
LOGICAL CORE <2N>
...

# Fig. 4

111

| APPLICATION NAME | INSTRUCTION TYPE | EXPECTED VALUE OF EXECUTION RATIO |
|---|---|---|
| Signal_proc_1 | VECTOR ADDITION | 0.3 |
| Signal_proc_1 | VECTOR MULTIPLICATION | 0.3 |
| Signal_proc_1 | GENERAL-PURPOSE INSTRUCTION | 0.4 |
| Signal_proc_2 | VECTOR ADDITION | 0.1 |
| Signal_proc_2 | VECTOR MULTIPLICATION | 0.7 |
| Signal_proc_2 | GENERAL-PURPOSE INSTRUCTION | 0.2 |
| Logger | GENERAL-PURPOSE INSTRUCTION | 1.0 |

Fig. 5

121

| APPLICATION 1 | APPLICATION 2 | CONTENTION DEGREE |
|---|---|---|
| Signal_proc_1 | Logger | 0.1 |
| Signal_proc_2 | Logger | 0.1 |
| Signal_proc_1 | Signal_proc_2 | 0.8 |

# Fig. 6

131

| EACH CORE IDENTIFIER (CORE ID) | PHYSICAL CORE NUMBER | ALLOCATED PROCESS IDENTIFIER |
|---|---|---|
| LOGICAL CORE 1 | PHYSICAL CORE 1 | 1.5 |
| LOGICAL CORE 2 | PHYSICAL CORE 1 | 1.5 |
| LOGICAL CORE 3 | PHYSICAL CORE 2 | 2 |
| LOGICAL CORE 4 | PHYSICAL CORE 2 | 2 |
| LOGICAL CORE 5 | PHYSICAL CORE 3 | 3 |
| LOGICAL CORE 6 | PHYSICAL CORE 3 | 3 |
| LOGICAL CORE 7 | PHYSICAL CORE 4 | 4 |
| LOGICAL CORE 8 | PHYSICAL CORE 4 | 4 |

# Fig. 7

151

| Port NUMBER | INSTRUCTION LIST |
|---|---|
| 0 | GENERAL-PURPOSE INSTRUCTION, VECTOR MULTIPLICATION, VECTOR ADDITION, VECTOR GENERAL-PURPOSE INSTRUCTION, ENCRYPTION RELATED INSTRUCTION |
| 1 | GENERAL-PURPOSE INSTRUCTION, VECTOR MULTIPLICATION, VECTOR ADDITION, VECTOR GENERAL-PURPOSE INSTRUCTION |
| 2 | MEMORY RELATED INSTRUCTION |
| 3 | MEMORY RELATED INSTRUCTION |
| 4 | MEMORY RELATED INSTRUCTION |
| 5 | GENERAL-PURPOSE INSTRUCTION, VECTOR MULTIPLICATION, VECTOR ADDITION, VECTOR GENERAL-PURPOSE INSTRUCTION, VECTOR SHIFT INSTRUCTION |
| 6 | GENERAL-PURPOSE INSTRUCTION |

# Fig. 8

152

| VARIOUS INSTRUCTIONS | MAXIMUM PARALLEL EXECUTION DEGREE |
| --- | --- |
| VECTOR ADDITION | 2 |
| VECTOR MULTIPLICATION | 2 |
| VECTOR SHIFT | 1 |
| VECTOR GENERAL-PURPOSE INSTRUCTION | 2 |
| ENCRYPTION RELATED INSTRUCTION | 1 |
| MEMORY RELATED INSTRUCTION | 2 |
| GENERAL-PURPOSE INSTRUCTION | 4 |

Fig. 9

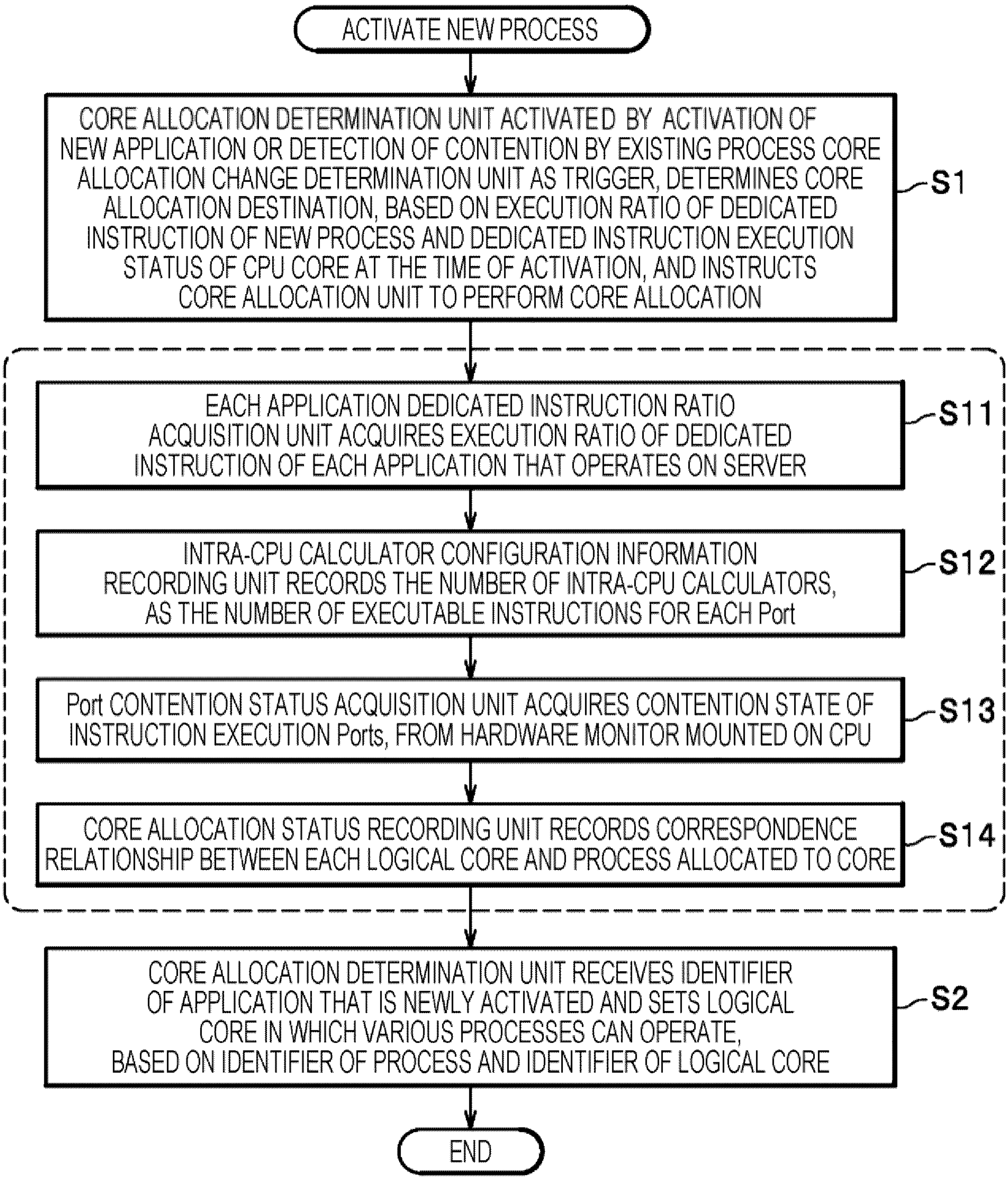
ACTIVATE NEW PROCESS
CORE ALLOCATION DETERMINATION UNIT ACTIVATED BY ACTIVATION OF NEW APPLICATION OR DETECTION OF CONTENTION BY EXISTING PROCESS CORE ALLOCATION CHANGE DETERMINATION UNIT AS TRIGGER, DETERMINES CORE ALLOCATION DESTINATION, BASED ON EXECUTION RATIO OF DEDICATED INSTRUCTION OF NEW PROCESS AND DEDICATED INSTRUCTION EXECUTION STATUS OF CPU CORE AT THE TIME OF ACTIVATION, AND INSTRUCTS CORE ALLOCATION UNIT TO PERFORM CORE ALLOCATION
S1
EACH APPLICATION DEDICATED INSTRUCTION RATIO ACQUISITION UNIT ACQUIRES EXECUTION RATIO OF DEDICATED INSTRUCTION OF EACH APPLICATION THAT OPERATES ON SERVER
S11
INTRA-CPU CALCULATOR CONFIGURATION INFORMATION RECORDING UNIT RECORDS THE NUMBER OF INTRA-CPU CALCULATORS, AS THE NUMBER OF EXECUTABLE INSTRUCTIONS FOR EACH Port
S12
Port CONTENTION STATUS ACQUISITION UNIT ACQUIRES CONTENTION STATE OF INSTRUCTION EXECUTION Ports, FROM HARDWARE MONITOR MOUNTED ON CPU
S13
CORE ALLOCATION STATUS RECORDING UNIT RECORDS CORRESPONDENCE RELATIONSHIP BETWEEN EACH LOGICAL CORE AND PROCESS ALLOCATED TO CORE
S14
CORE ALLOCATION DETERMINATION UNIT RECEIVES IDENTIFIER OF APPLICATION THAT IS NEWLY ACTIVATED AND SETS LOGICAL CORE IN WHICH VARIOUS PROCESSES CAN OPERATE, BASED ON IDENTIFIER OF PROCESS AND IDENTIFIER OF LOGICAL CORE
S2
END

Fig. 10

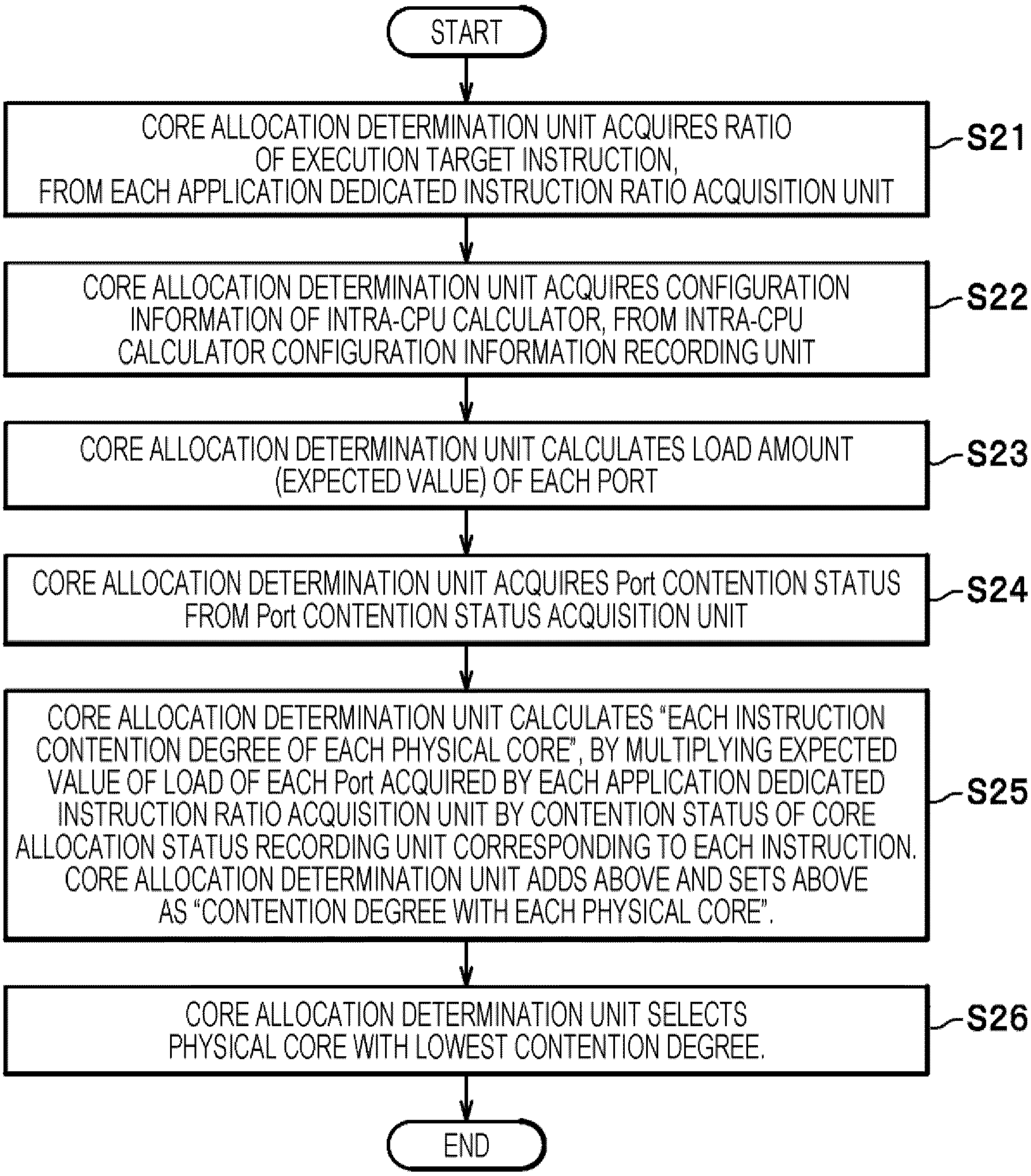
START
CORE ALLOCATION DETERMINATION UNIT ACQUIRES RATIO OF EXECUTION TARGET INSTRUCTION, FROM EACH APPLICATION DEDICATED INSTRUCTION RATIO ACQUISITION UNIT
S21
CORE ALLOCATION DETERMINATION UNIT ACQUIRES CONFIGURATION INFORMATION OF INTRA-CPU CALCULATOR, FROM INTRA-CPU CALCULATOR CONFIGURATION INFORMATION RECORDING UNIT
S22
CORE ALLOCATION DETERMINATION UNIT CALCULATES LOAD AMOUNT (EXPECTED VALUE) OF EACH PORT
S23
CORE ALLOCATION DETERMINATION UNIT ACQUIRES Port CONTENTION STATUS FROM Port CONTENTION STATUS ACQUISITION UNIT
S24
CORE ALLOCATION DETERMINATION UNIT CALCULATES "EACH INSTRUCTION CONTENTION DEGREE OF EACH PHYSICAL CORE", BY MULTIPLYING EXPECTED VALUE OF LOAD OF EACH Port ACQUIRED BY EACH APPLICATION DEDICATED INSTRUCTION RATIO ACQUISITION UNIT BY CONTENTION STATUS OF CORE ALLOCATION STATUS RECORDING UNIT CORRESPONDING TO EACH INSTRUCTION. CORE ALLOCATION DETERMINATION UNIT ADDS ABOVE AND SETS ABOVE AS "CONTENTION DEGREE WITH EACH PHYSICAL CORE".
S25
CORE ALLOCATION DETERMINATION UNIT SELECTS PHYSICAL CORE WITH LOWEST CONTENTION DEGREE.
S26
END

# Fig. 11

| INSTRUCTION TYPE | Port NUMBER | RATIO |
|---|---|---|
| GENERAL-PURPOSE INSTRUCTION | 0,1,5,6 | 0.4 |
| VECTOR-SHIFT | 5 | 0.6 |

cc

| Port NUMBER | LOAD AMOUNT [EXPECTED VALUE] |
|---|---|
| 0 | 0.1 [ = 0.4／4] |
| 1 | 0.1 [ = 0.4／4] |
| 5 | 0.7 [ = 0.6／1 + 0.4／4] |
| 6 | 0.1 [ = 0.4／4] |

# Fig. 12

| Port NUMBER | CURRENT CONTENTION DEGREE |
|---|---|
| 0 | 0.3 |
| 1 | 0.4 |
| [OMITTED] | |
| 5 | 0.2 |
| 6 | 1.0 |

Fig. 13

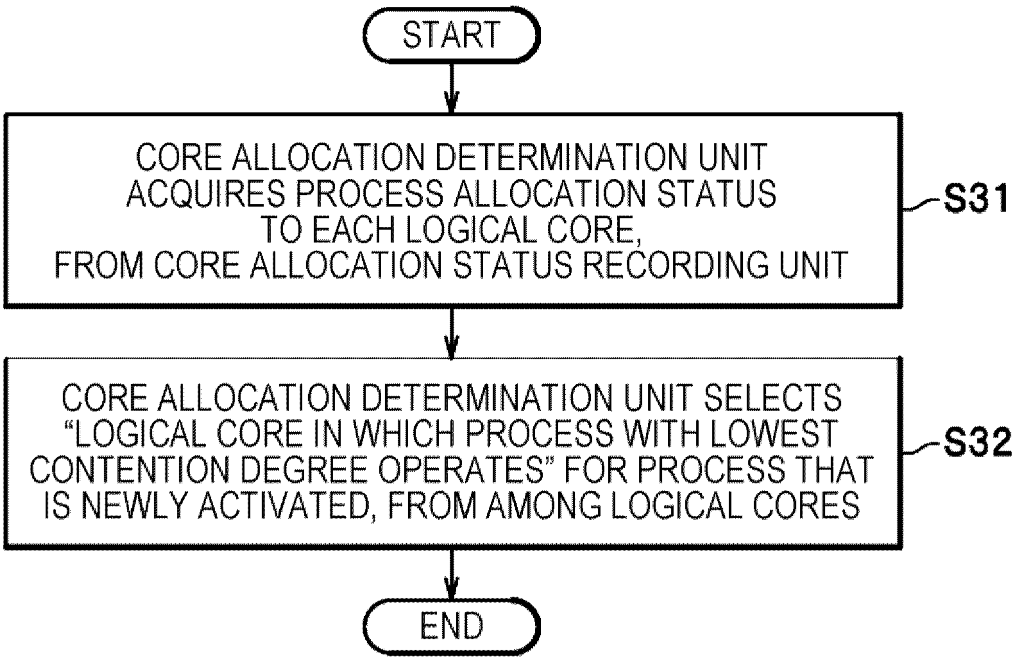
START
CORE ALLOCATION DETERMINATION UNIT ACQUIRES PROCESS ALLOCATION STATUS TO EACH LOGICAL CORE, FROM CORE ALLOCATION STATUS RECORDING UNIT
S31
CORE ALLOCATION DETERMINATION UNIT SELECTS "LOGICAL CORE IN WHICH PROCESS WITH LOWEST CONTENTION DEGREE OPERATES" FOR PROCESS THAT IS NEWLY ACTIVATED, FROM AMONG LOGICAL CORES
S32
END

Fig. 14

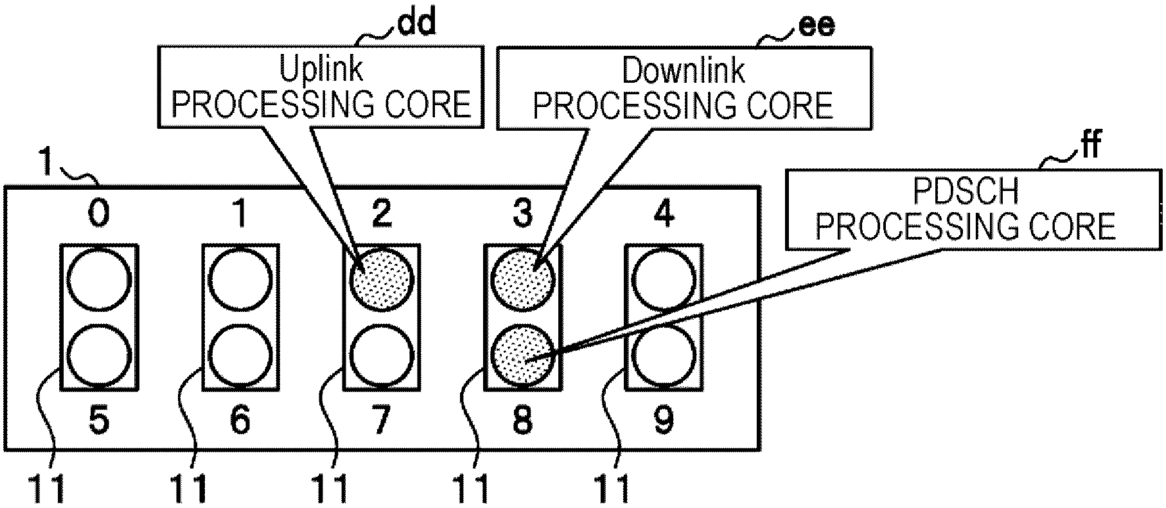
dd
Uplink
PROCESSING CORE
ee
Downlink
PROCESSING CORE
ff
PDSCH
PROCESSING CORE
1
0
1
2
3
4
5
6
7
8
9
11
11
11
11
11

# Fig. 15

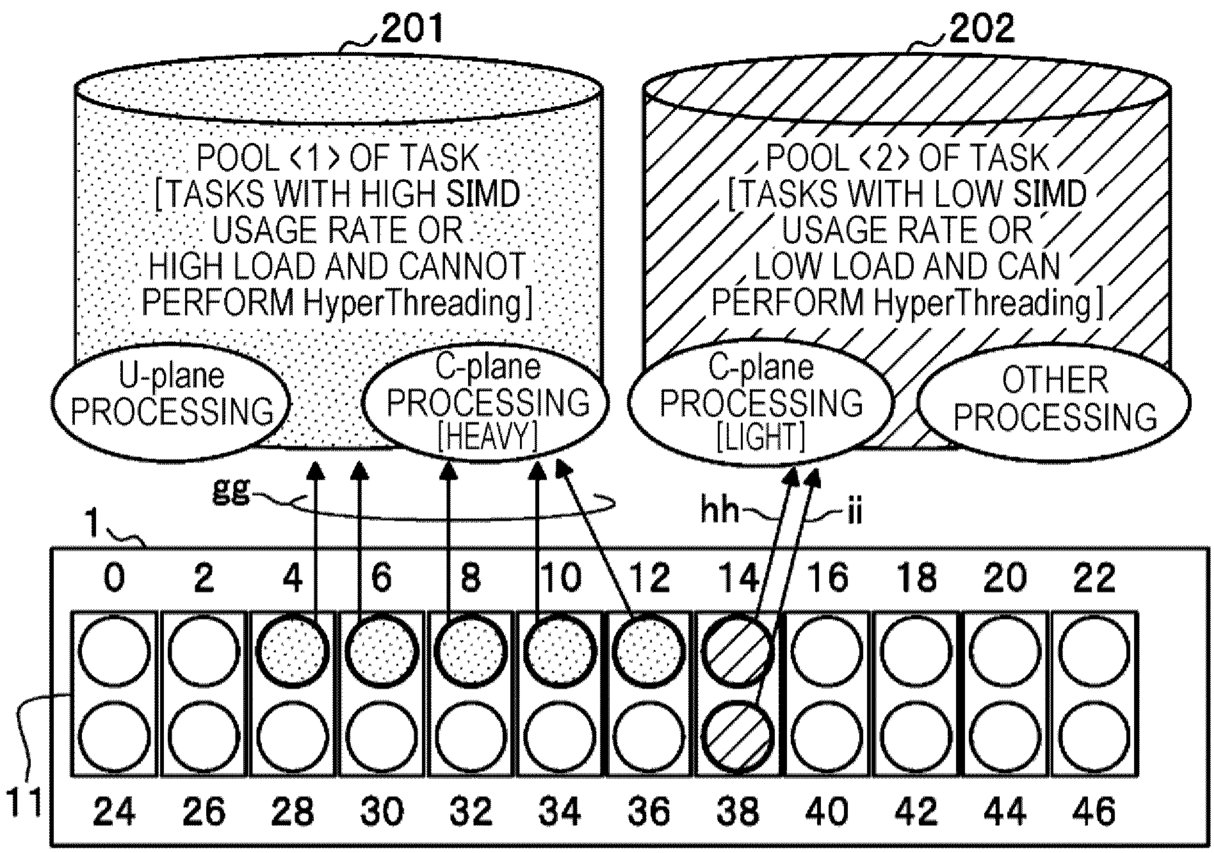
201
202
POOL ‹1› OF TASK
[TASKS WITH HIGH SIMD USAGE RATE OR HIGH LOAD AND CANNOT PERFORM HyperThreading]
POOL ‹2› OF TASK
[TASKS WITH LOW SIMD USAGE RATE OR LOW LOAD AND CAN PERFORM HyperThreading]
U-plane PROCESSING
C-plane PROCESSING [HEAVY]
C-plane PROCESSING [LIGHT]
OTHER PROCESSING
gg
hh
ii
1
11
0 2 4 6 8 10 12 14 16 18 20 22
24 26 28 30 32 34 36 38 40 42 44 46

Fig. 16

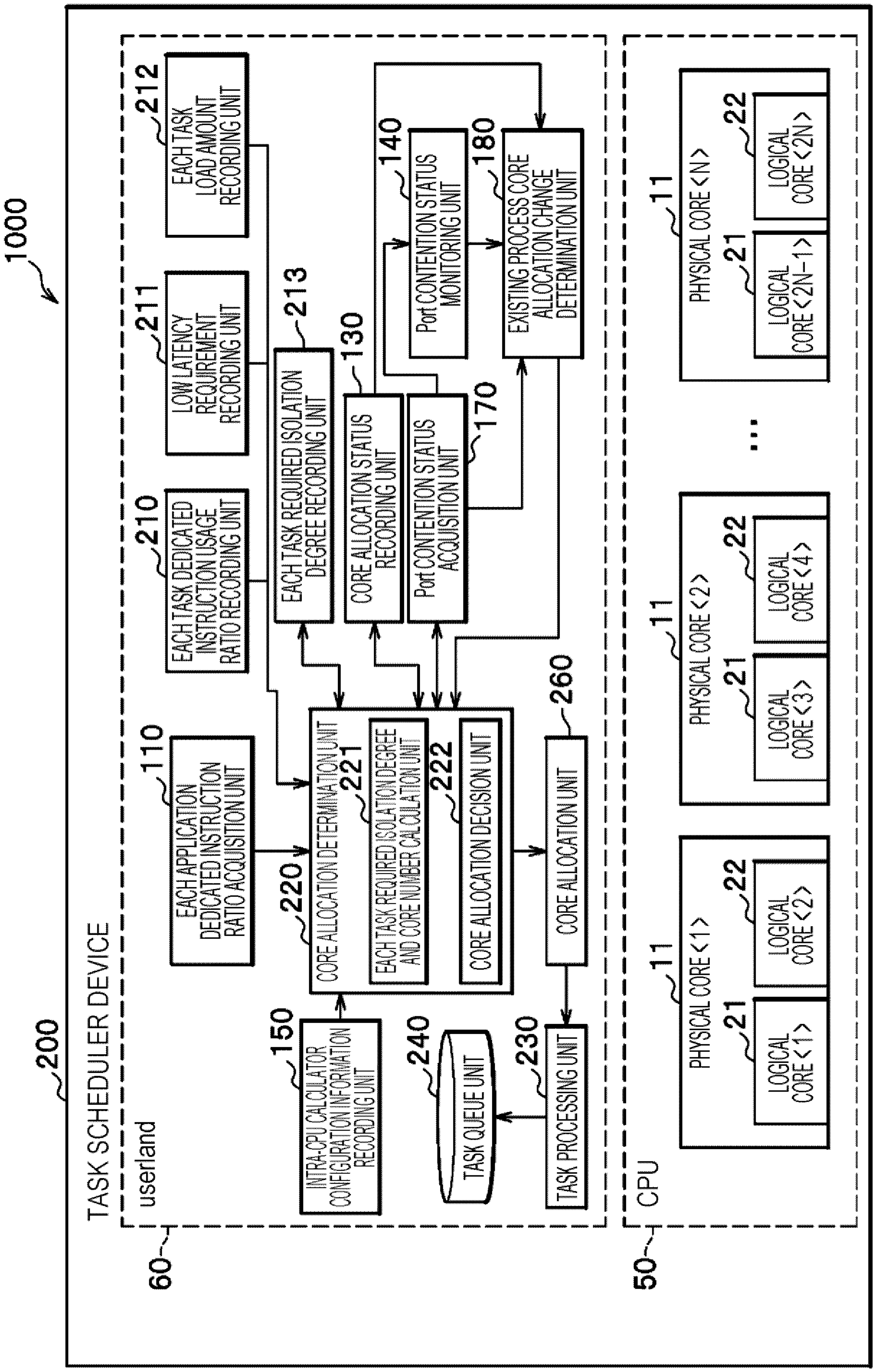
1000
200
TASK SCHEDULER DEVICE
60
userland
110
EACH APPLICATION DEDICATED INSTRUCTION RATIO ACQUISITION UNIT
210
EACH TASK DEDICATED INSTRUCTION USAGE RATIO RECORDING UNIT
211
LOW LATENCY REQUIREMENT RECORDING UNIT
212
EACH TASK LOAD AMOUNT RECORDING UNIT
213
EACH TASK REQUIRED ISOLATION DEGREE RECORDING UNIT
130
CORE ALLOCATION STATUS RECORDING UNIT
170
Port CONTENTION STATUS ACQUISITION UNIT
140
Port CONTENTION STATUS MONITORING UNIT
180
EXISTING PROCESS CORE ALLOCATION CHANGE DETERMINATION UNIT
150
INTRA-CPU CALCULATOR CONFIGURATION INFORMATION RECORDING UNIT
220
CORE ALLOCATION DETERMINATION UNIT
221
EACH TASK REQUIRED ISOLATION DEGREE AND CORE NUMBER CALCULATION UNIT
222
CORE ALLOCATION DECISION UNIT
260
CORE ALLOCATION UNIT
240
TASK QUEUE UNIT
230
TASK PROCESSING UNIT
50
CPU
11
PHYSICAL CORE <1>
21
LOGICAL CORE <1>
22
LOGICAL CORE <2>
11
PHYSICAL CORE <2>
21
LOGICAL CORE <3>
22
LOGICAL CORE <4>
...
11
PHYSICAL CORE <N>
21
LOGICAL CORE <2N−1>
22
LOGICAL CORE <2N>

Fig. 17

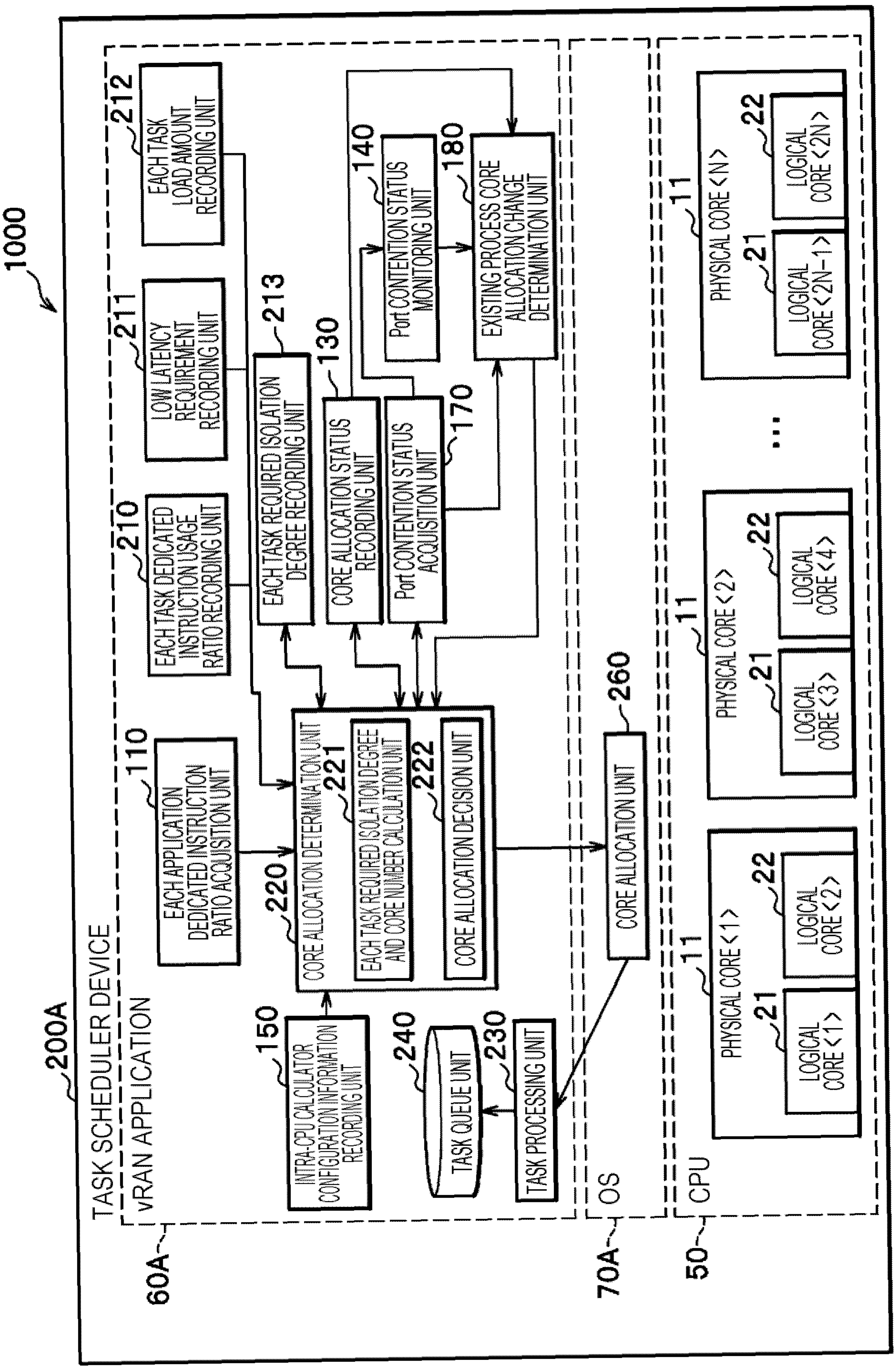
1000
200A
TASK SCHEDULER DEVICE
60A
vRAN APPLICATION
110
EACH APPLICATION DEDICATED INSTRUCTION RATIO ACQUISITION UNIT
210
EACH TASK DEDICATED INSTRUCTION USAGE RATIO RECORDING UNIT
211
LOW LATENCY REQUIREMENT RECORDING UNIT
212
EACH TASK LOAD AMOUNT RECORDING UNIT
213
EACH TASK REQUIRED ISOLATION DEGREE RECORDING UNIT
130
CORE ALLOCATION STATUS RECORDING UNIT
170
Port CONTENTION STATUS ACQUISITION UNIT
140
Port CONTENTION STATUS MONITORING UNIT
180
EXISTING PROCESS CORE ALLOCATION CHANGE DETERMINATION UNIT
220
CORE ALLOCATION DETERMINATION UNIT
221
EACH TASK REQUIRED ISOLATION DEGREE AND CORE NUMBER CALCULATION UNIT
222
CORE ALLOCATION DECISION UNIT
150
INTRA-CPU CALCULATOR CONFIGURATION INFORMATION RECORDING UNIT
240
TASK QUEUE UNIT
230
TASK PROCESSING UNIT
70A
OS
260
CORE ALLOCATION UNIT
50
CPU
11
PHYSICAL CORE <1>
21
LOGICAL CORE <1>
22
LOGICAL CORE <2>
11
PHYSICAL CORE <2>
21
LOGICAL CORE <3>
22
LOGICAL CORE <4>
...
11
PHYSICAL CORE <N>
21
LOGICAL CORE <2N−1>
22
LOGICAL CORE <2N>

Fig. 18

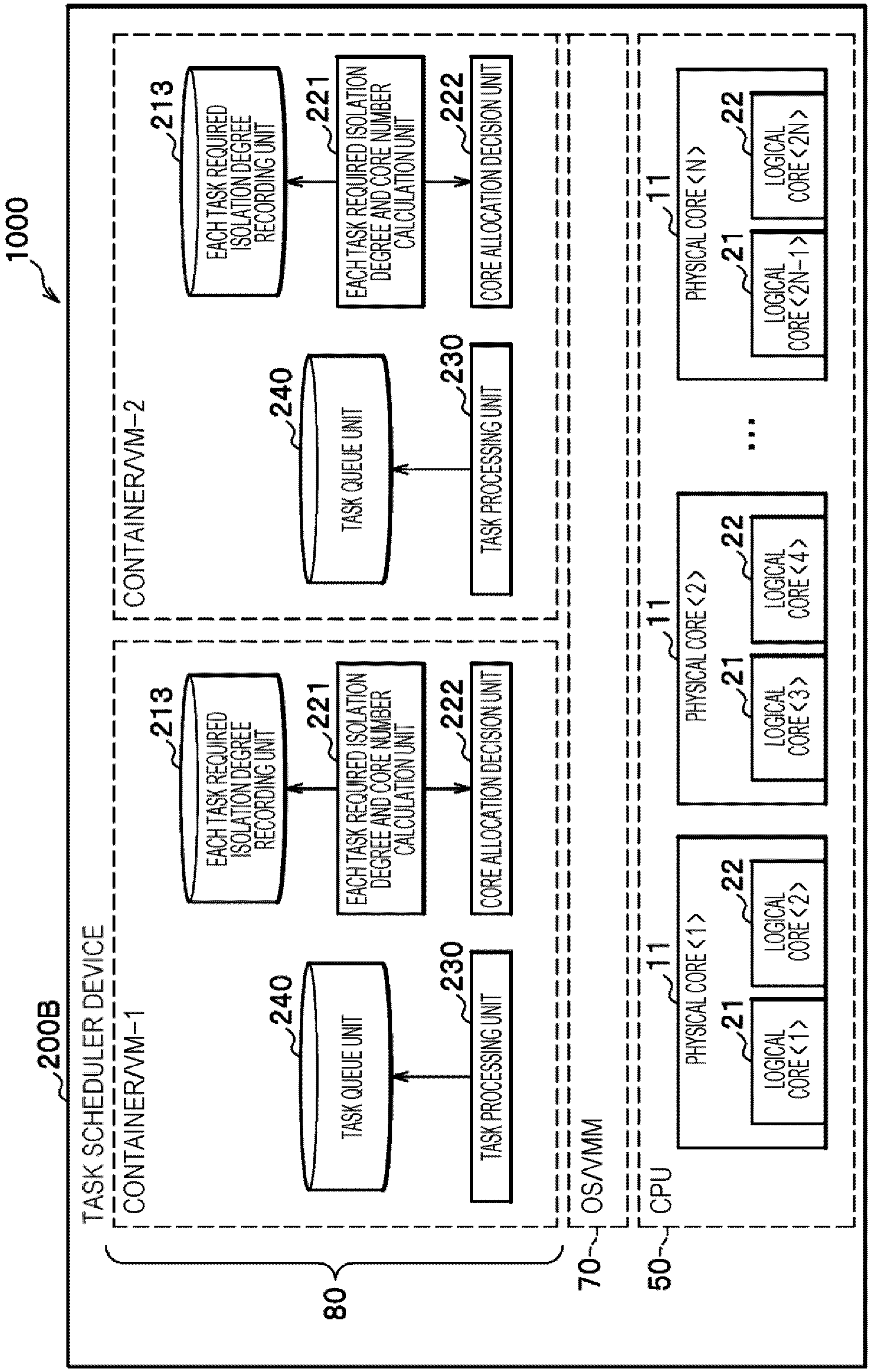
1000
200B
TASK SCHEDULER DEVICE
CONTAINER/VM-1
240
TASK QUEUE UNIT
230
TASK PROCESSING UNIT
213
EACH TASK REQUIRED ISOLATION DEGREE RECORDING UNIT
221
EACH TASK REQUIRED ISOLATION DEGREE AND CORE NUMBER CALCULATION UNIT
222
CORE ALLOCATION DECISION UNIT
CONTAINER/VM-2
240
TASK QUEUE UNIT
230
TASK PROCESSING UNIT
213
EACH TASK REQUIRED ISOLATION DEGREE RECORDING UNIT
221
EACH TASK REQUIRED ISOLATION DEGREE AND CORE NUMBER CALCULATION UNIT
222
CORE ALLOCATION DECISION UNIT
80
70
OS/VMM
50
CPU
11
PHYSICAL CORE<1>
21
LOGICAL CORE<1>
22
LOGICAL CORE<2>
11
PHYSICAL CORE<2>
21
LOGICAL CORE<3>
22
LOGICAL CORE<4>
11
PHYSICAL CORE<N>
21
LOGICAL CORE<2N-1>
22
LOGICAL CORE<2N>

Fig. 19

310

| TASK TYPE | RATIO OF DEDICATED INSTRUCTION |
|---|---|
| 1. USER DATA PROCESSING [HIGH PARALLEL CALCULATION DEGREE] | 0.8 |
| 2. USER DATA PROCESSING [LOW PARALLEL CALCULATION DEGREE] | 0.2 |
| 3. CONTROL DATA PROCESSING | 0.8 |
| 4. SYNCHRONIZATION SIGNAL PROCESSING | 0.3 |
| 5. CONFIGURATION PROCESSING | 0.1 |

# Fig. 20

320

| TASK TYPE | EACH TASK LOW LATENCY REQUIREMENT [1.0 IS HIGH, 0.0 IS LOW] |
|---|---|
| 1. USER DATA PROCESSING [HIGH PARALLEL CALCULATION DEGREE] | 1.0 |
| 2. USER DATA PROCESSING [LOW PARALLEL CALCULATION DEGREE] | 0.8 |
| 3. CONTROL DATA PROCESSING | 0.5 |
| 4. SYNCHRONIZATION SIGNAL PROCESSING | 0.3 |
| 5. CONFIGURATION PROCESSING | 0.1 |

# Fig. 21

330

| TASK TYPE | LOAD AMOUNT [IN RANGE OF ONE TO FIVE, ONE IS SMALL, FIVE IS LARGE] |
|---|---|
| 1. USER DATA PROCESSING [HIGH PARALLEL CALCULATION DEGREE] | 4 |
| 2. USER DATA PROCESSING [LOW PARALLEL CALCULATION DEGREE] | 3 |
| 3. CONTROL DATA PROCESSING | 2 |
| 4. SYNCHRONIZATION SIGNAL PROCESSING | 1 |
| 5. CONFIGURATION PROCESSING | 1 |

# Fig. 22

340

| TASK TYPE | REQUIRED ISOLATION DEGREE [WHETHER OR NOT ANOTHER TASK CAN BE EXECUTED IN SAME PHYSICAL CORE] | THE NUMBER OF REQUIRED CORES |
|---|---|---|
| 1. USER DATA PROCESSING [HIGH PARALLEL CALCULATION DEGREE] | 0.8 | 4 |
| 2. USER DATA PROCESSING [LOW PARALLEL CALCULATION DEGREE] | 0.2 | 3 |
| 3. CONTROL DATA PROCESSING | 0.5 | 2 |
| 4. SYNCHRONIZATION SIGNAL PROCESSING | 0.1 | 1 |
| 5. CONFIGURATION PROCESSING | 0.1 | 1 |

# Fig. 23

350

| TASK TYPE | THE NUMBER OF REQUIRED CORES | REQUIRED ISOLATION DEGREE [WHETHER OR NOT SMT COEXISTENCE IS POSSIBLE] |
|---|---|---|
| 1. USER DATA PROCESSING [HIGH PARALLEL CALCULATION DEGREE] | 5 | 1.0 |
| 2. USER DATA PROCESSING [LOW PARALLEL CALCULATION DEGREE] | 2 | 0.0 |
| 3. CONTROL DATA PROCESSING | 5 | 1.0 |
| 4. SYNCHRONIZATION SIGNAL PROCESSING | 1 | 0.0 |
| 5. CONFIGURATION PROCESSING | 1 | 0.0 |

# Fig. 24

310

| TASK TYPE | RATIO OF DEDICATED INSTRUCTION |
|---|---|
| 1. USER DATA PROCESSING [HIGH PARALLEL CALCULATION DEGREE] | 0.8 |
| 2. USER DATA PROCESSING [LOW PARALLEL CALCULATION DEGREE] | 0.2 |
| 3. CONTROL DATA PROCESSING | 0.8 |
| 4. SYNCHRONIZATION SIGNAL PROCESSING | 0.3 |
| 5. CONFIGURATION PROCESSING | 0.1 |

320

| TASK TYPE | EACH TASK LOW LATENCY REQUIREMENT [1.0 IS HIGH, 0.0 IS LOW] |
|---|---|
| 1. USER DATA PROCESSING [HIGH PARALLEL CALCULATION DEGREE] | 1.0 |
| 2. USER DATA PROCESSING [LOW PARALLEL CALCULATION DEGREE] | 0.8 |
| 3. CONTROL DATA PROCESSING | 0.5 |
| 4. SYNCHRONIZATION SIGNAL PROCESSING | 0.3 |
| 5. CONFIGURATION PROCESSING | 0.1 |

330

| TASK TYPE | LOAD AMOUNT [IN RANGE OF ONE TO FIVE, ONE IS SMALL, FIVE IS LARGE] |
|---|---|
| 1. USER DATA PROCESSING [HIGH PARALLEL CALCULATION DEGREE] | 4 |
| 2. USER DATA PROCESSING [LOW PARALLEL CALCULATION DEGREE] | 3 |
| 3. CONTROL DATA PROCESSING | 2 |
| 4. SYNCHRONIZATION SIGNAL PROCESSING | 1 |
| 5. CONFIGURATION PROCESSING | 1 |

jj

kk

ll

340

| TASK TYPE | REQUIRED ISOLATION DEGREE REQUIRED ISOLATION DEGREE INDICATES HOW MANY PERCENTS OF SINGLE PHYSICAL CORE NEEDS TO BE OCCUPIED | THE NUMBER OF REQUIRED CORES |
|---|---|---|
| 1. USER DATA PROCESSING [HIGH PARALLEL CALCULATION DEGREE] | 0.8 | 4 |
| 2. USER DATA PROCESSING [LOW PARALLEL CALCULATION DEGREE] | 0.2 | 3 |
| 3. CONTROL DATA PROCESSING | 0.5 | 2 |
| 4. SYNCHRONIZATION SIGNAL PROCESSING | 0.1 | 1 |
| 5. CONFIGURATION PROCESSING | 0.1 | 1 |

Fig. 25

360

| TASK TYPE | TASK EXECUTION GROUP |
|---|---|
| 1. USER DATA PROCESSING [HIGH PARALLEL CALCULATION DEGREE] | ISOLATED AND HIGH PRIORITY GROUP |
| 2. USER DATA PROCESSING [LOW PARALLEL CALCULATION DEGREE] | ISOLATED AND HIGH PRIORITY GROUP |
| 3. CONTROL DATA PROCESSING | MIDDLE PRIORITY GROUP |
| 4. SYNCHRONIZATION SIGNAL PROCESSING | LOW PRIORITY GROUP |
| 5. CONFIGURATION PROCESSING | LOW PRIORITY GROUP |

# Fig. 26

370

| TASK EXECUTION GROUP | CORRESPONDING CORE NUMBER |
|---|---|
| ISOLATED AND HIGH PRIORITY GROUP | 0,1,2,3 |
| MIDDLE PRIORITY GROUP | 4,10 |
| LOW PRIORITY GROUP | 6 |

# Fig. 27

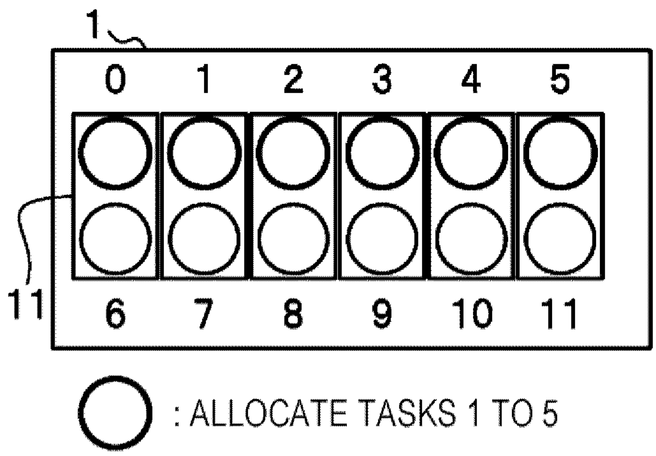

# Fig. 28

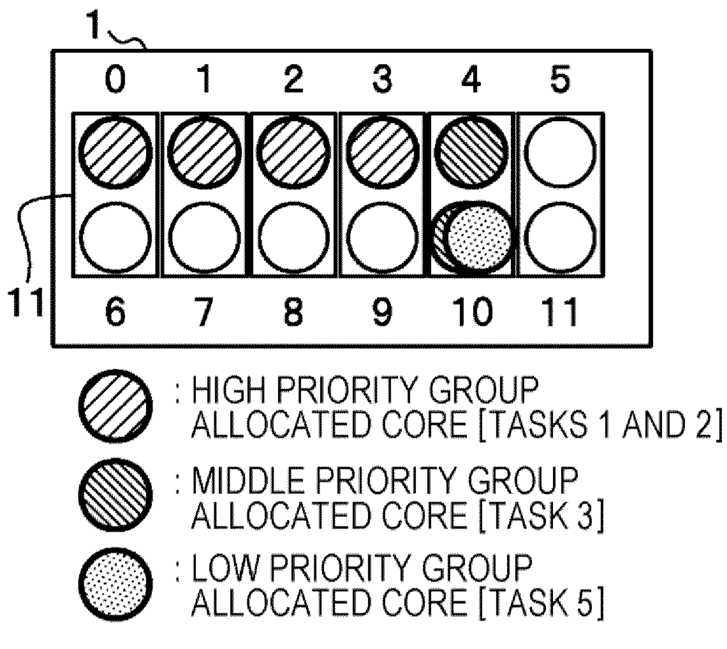
1
0 1 2 3 4 5
11
6 7 8 9 10 11
: HIGH PRIORITY GROUP ALLOCATED CORE [TASKS 1 AND 2]
: MIDDLE PRIORITY GROUP ALLOCATED CORE [TASK 3]
: LOW PRIORITY GROUP ALLOCATED CORE [TASK 5]

Fig. 29

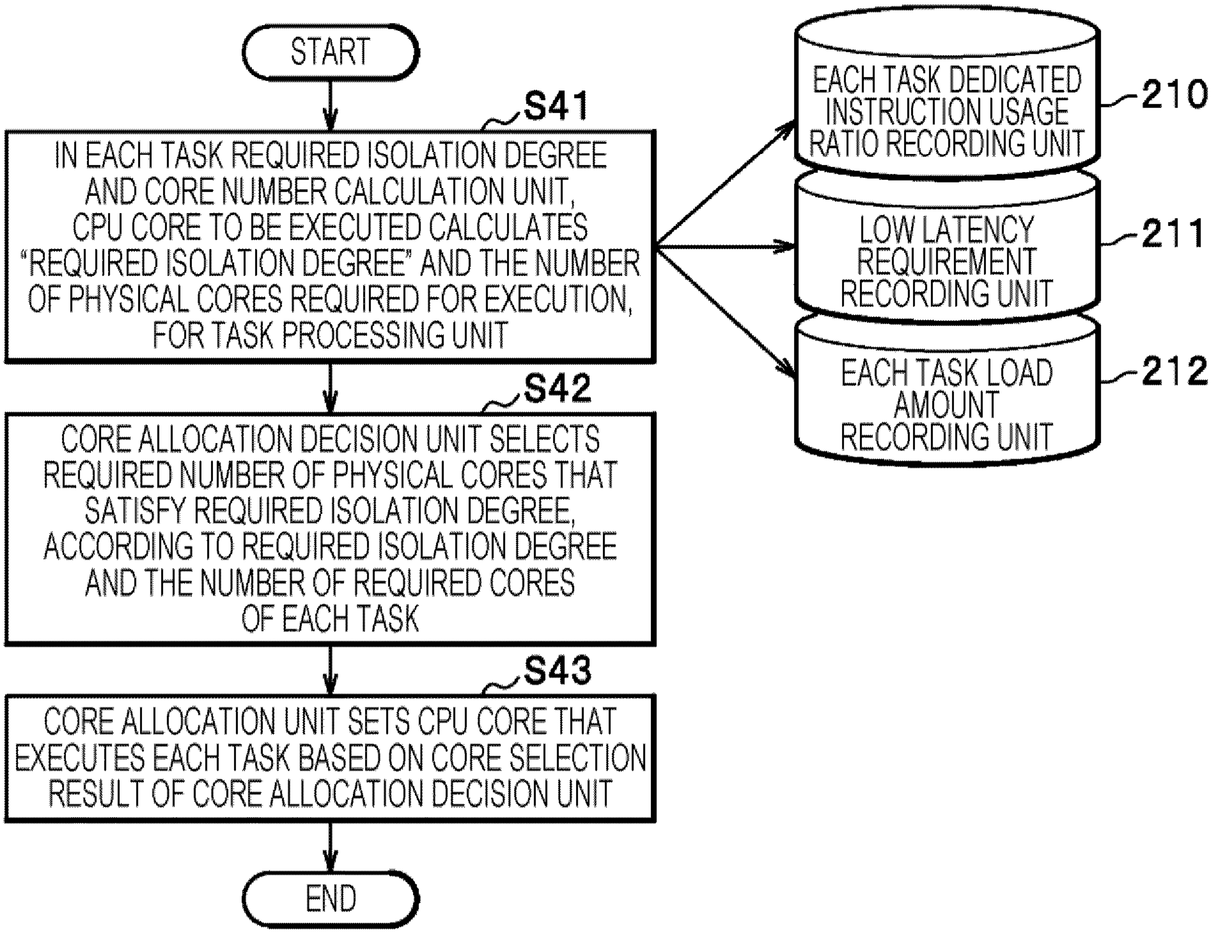
START
S41
IN EACH TASK REQUIRED ISOLATION DEGREE AND CORE NUMBER CALCULATION UNIT, CPU CORE TO BE EXECUTED CALCULATES "REQUIRED ISOLATION DEGREE" AND THE NUMBER OF PHYSICAL CORES REQUIRED FOR EXECUTION, FOR TASK PROCESSING UNIT
S42
CORE ALLOCATION DECISION UNIT SELECTS REQUIRED NUMBER OF PHYSICAL CORES THAT SATISFY REQUIRED ISOLATION DEGREE, ACCORDING TO REQUIRED ISOLATION DEGREE AND THE NUMBER OF REQUIRED CORES OF EACH TASK
S43
CORE ALLOCATION UNIT SETS CPU CORE THAT EXECUTES EACH TASK BASED ON CORE SELECTION RESULT OF CORE ALLOCATION DECISION UNIT
END
EACH TASK DEDICATED INSTRUCTION USAGE RATIO RECORDING UNIT
210
LOW LATENCY REQUIREMENT RECORDING UNIT
211
EACH TASK LOAD AMOUNT RECORDING UNIT
212

# Fig. 30

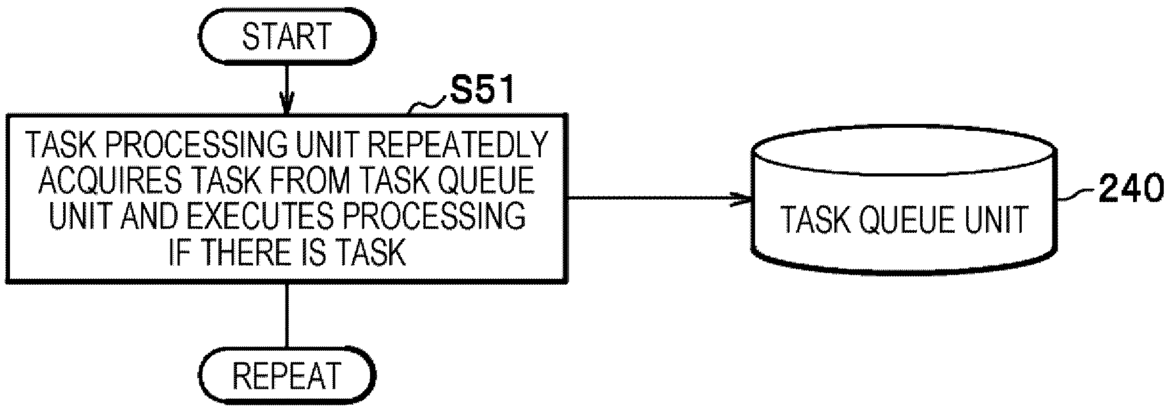
START
S51
TASK PROCESSING UNIT REPEATEDLY ACQUIRES TASK FROM TASK QUEUE UNIT AND EXECUTES PROCESSING IF THERE IS TASK
TASK QUEUE UNIT
240
REPEAT

Fig. 31

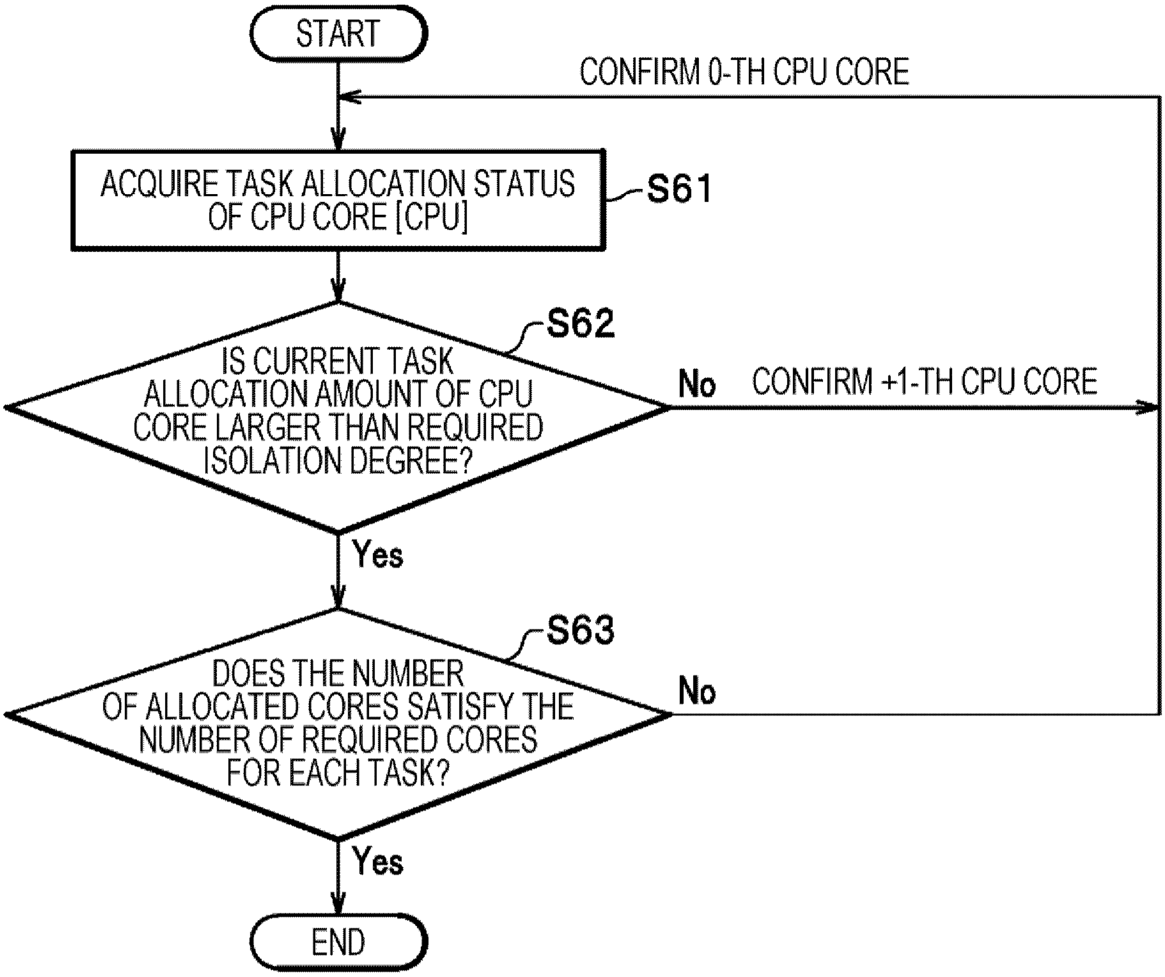
START
CONFIRM 0-TH CPU CORE
ACQUIRE TASK ALLOCATION STATUS OF CPU CORE [CPU]
S61
S62
IS CURRENT TASK ALLOCATION AMOUNT OF CPU CORE LARGER THAN REQUIRED ISOLATION DEGREE?
No
CONFIRM +1-TH CPU CORE
Yes
S63
DOES THE NUMBER OF ALLOCATED CORES SATISFY THE NUMBER OF REQUIRED CORES FOR EACH TASK?
No
Yes
END

Fig. 32

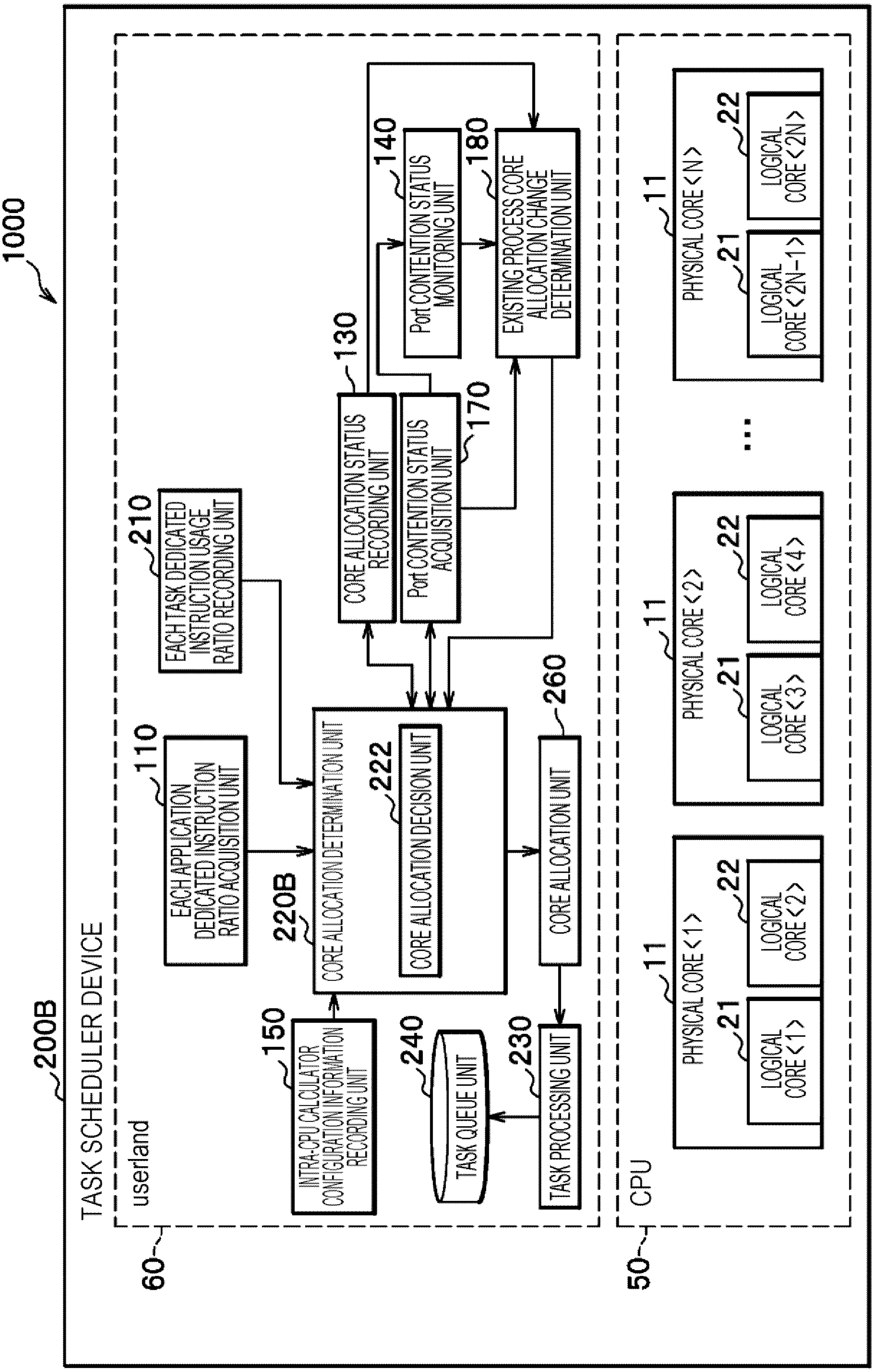
1000
200B
TASK SCHEDULER DEVICE
60
userland
150
INTRA-CPU CALCULATOR CONFIGURATION INFORMATION RECORDING UNIT
110
EACH APPLICATION DEDICATED INSTRUCTION RATIO ACQUISITION UNIT
210
EACH TASK DEDICATED INSTRUCTION USAGE RATIO RECORDING UNIT
220B
CORE ALLOCATION DETERMINATION UNIT
222
CORE ALLOCATION DECISION UNIT
130
CORE ALLOCATION STATUS RECORDING UNIT
170
Port CONTENTION STATUS ACQUISITION UNIT
140
Port CONTENTION STATUS MONITORING UNIT
180
EXISTING PROCESS CORE ALLOCATION CHANGE DETERMINATION UNIT
240
TASK QUEUE UNIT
230
TASK PROCESSING UNIT
260
CORE ALLOCATION UNIT
50
CPU
11
PHYSICAL CORE <1>
21
LOGICAL CORE <1>
22
LOGICAL CORE <2>
11
PHYSICAL CORE <2>
21
LOGICAL CORE <3>
22
LOGICAL CORE <4>
...
11
PHYSICAL CORE <N>
21
LOGICAL CORE <2N−1>
22
LOGICAL CORE <2N>

Fig. 33

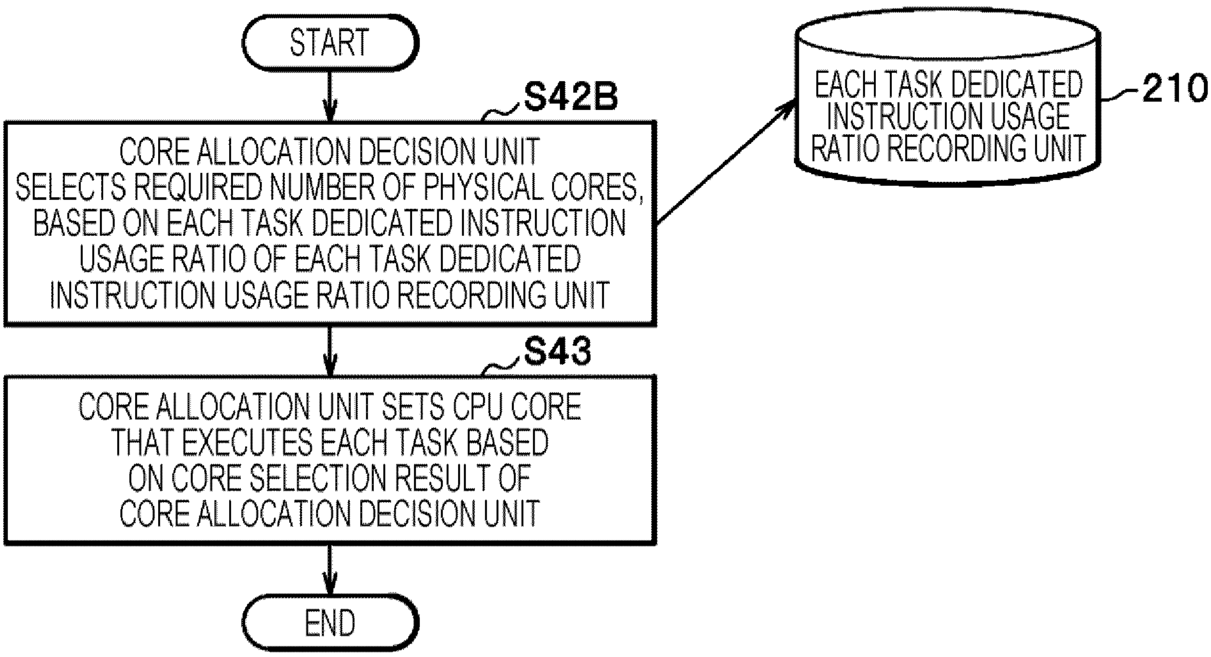
START
S42B
CORE ALLOCATION DECISION UNIT SELECTS REQUIRED NUMBER OF PHYSICAL CORES, BASED ON EACH TASK DEDICATED INSTRUCTION USAGE RATIO OF EACH TASK DEDICATED INSTRUCTION USAGE RATIO RECORDING UNIT
EACH TASK DEDICATED INSTRUCTION USAGE RATIO RECORDING UNIT
210
S43
CORE ALLOCATION UNIT SETS CPU CORE THAT EXECUTES EACH TASK BASED ON CORE SELECTION RESULT OF CORE ALLOCATION DECISION UNIT
END

Fig. 34

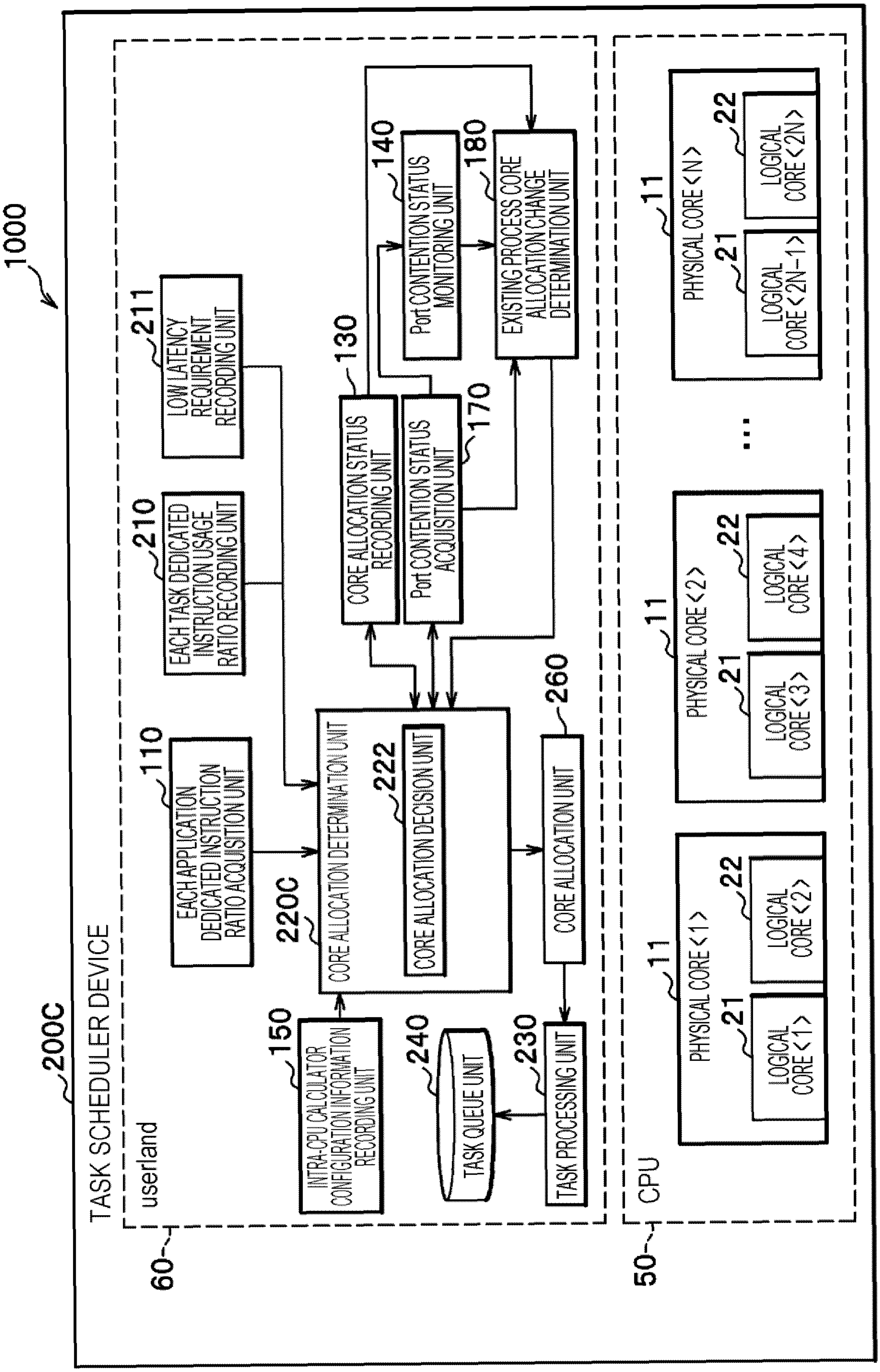
1000
200C
TASK SCHEDULER DEVICE
userland
60
110
EACH APPLICATION DEDICATED INSTRUCTION RATIO ACQUISITION UNIT
210
EACH TASK DEDICATED INSTRUCTION USAGE RATIO RECORDING UNIT
211
LOW LATENCY REQUIREMENT RECORDING UNIT
130
CORE ALLOCATION STATUS RECORDING UNIT
170
Port CONTENTION STATUS ACQUISITION UNIT
140
Port CONTENTION STATUS MONITORING UNIT
180
EXISTING PROCESS CORE ALLOCATION CHANGE DETERMINATION UNIT
220C
CORE ALLOCATION DETERMINATION UNIT
222
CORE ALLOCATION DECISION UNIT
260
CORE ALLOCATION UNIT
150
INTRA-CPU CALCULATOR CONFIGURATION INFORMATION RECORDING UNIT
240
TASK QUEUE UNIT
230
TASK PROCESSING UNIT
50
CPU
11
PHYSICAL CORE <1>
21
LOGICAL CORE <1>
22
LOGICAL CORE <2>
11
PHYSICAL CORE <2>
21
LOGICAL CORE <3>
22
LOGICAL CORE <4>
...
11
PHYSICAL CORE <N>
21
LOGICAL CORE <2N-1>
22
LOGICAL CORE <2N>

Fig. 35

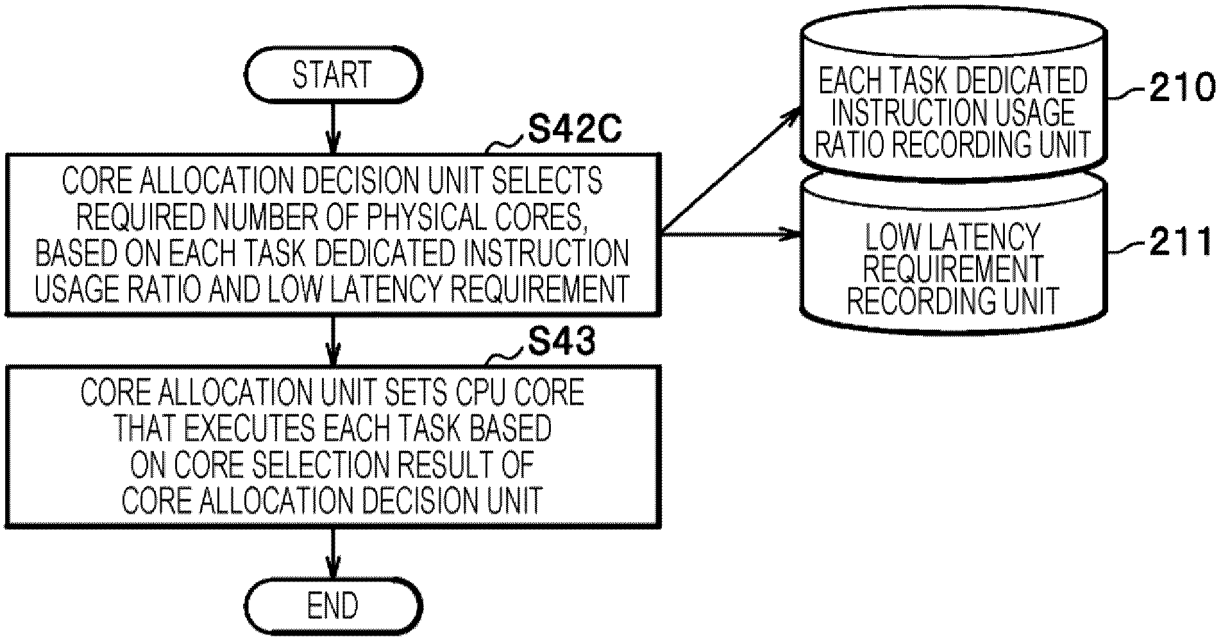
START
S42C
CORE ALLOCATION DECISION UNIT SELECTS REQUIRED NUMBER OF PHYSICAL CORES, BASED ON EACH TASK DEDICATED INSTRUCTION USAGE RATIO AND LOW LATENCY REQUIREMENT
EACH TASK DEDICATED INSTRUCTION USAGE RATIO RECORDING UNIT
210
LOW LATENCY REQUIREMENT RECORDING UNIT
211
S43
CORE ALLOCATION UNIT SETS CPU CORE THAT EXECUTES EACH TASK BASED ON CORE SELECTION RESULT OF CORE ALLOCATION DECISION UNIT
END

Fig. 36

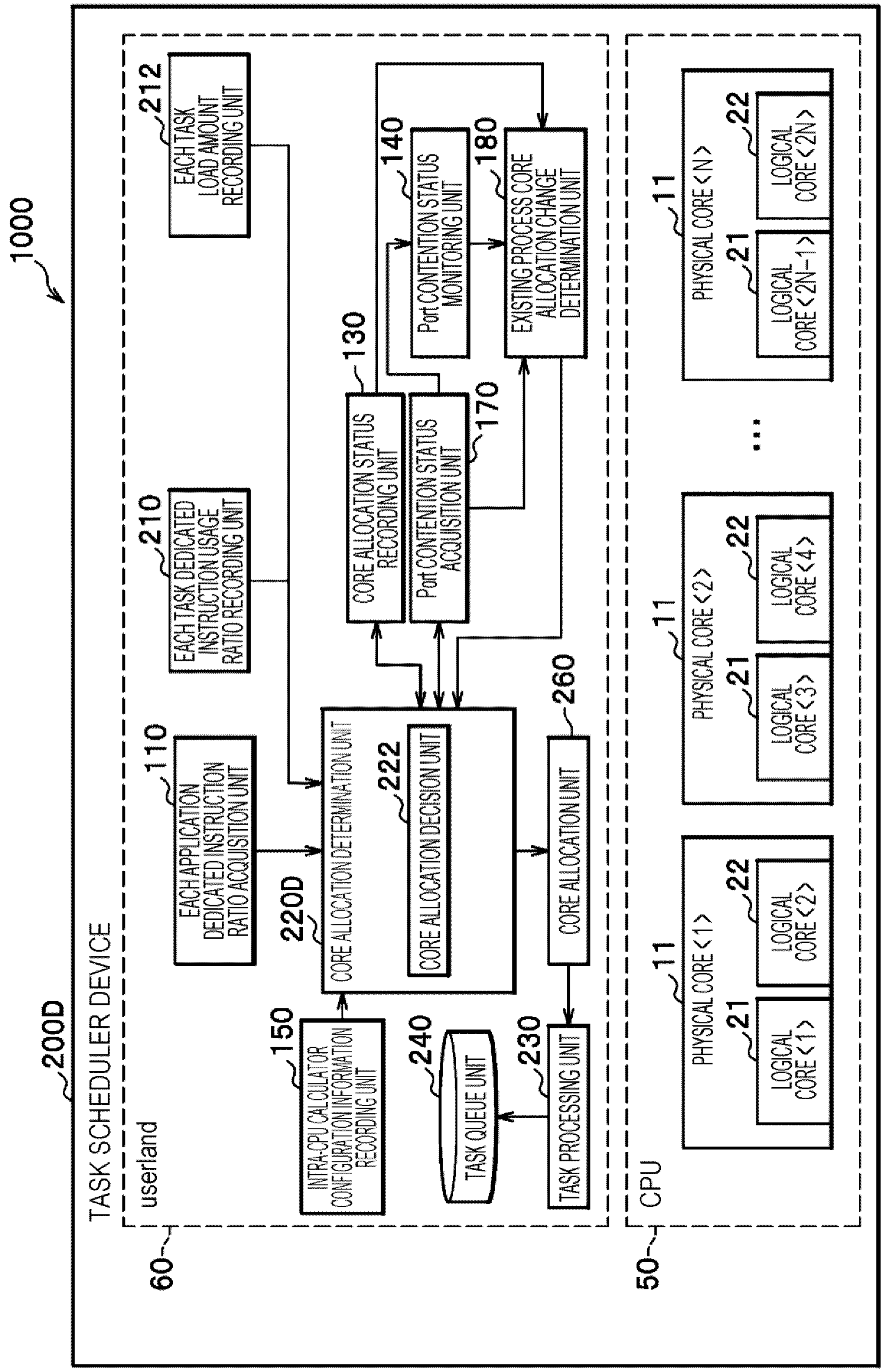
1000
200D
TASK SCHEDULER DEVICE
60
userland
150
INTRA-CPU CALCULATOR CONFIGURATION INFORMATION RECORDING UNIT
240
TASK QUEUE UNIT
230
TASK PROCESSING UNIT
110
EACH APPLICATION DEDICATED INSTRUCTION RATIO ACQUISITION UNIT
220D
CORE ALLOCATION DETERMINATION UNIT
222
CORE ALLOCATION DECISION UNIT
260
CORE ALLOCATION UNIT
210
EACH TASK DEDICATED INSTRUCTION USAGE RATIO RECORDING UNIT
130
CORE ALLOCATION STATUS RECORDING UNIT
170
Port CONTENTION STATUS ACQUISITION UNIT
140
Port CONTENTION STATUS MONITORING UNIT
180
EXISTING PROCESS CORE ALLOCATION CHANGE DETERMINATION UNIT
212
EACH TASK LOAD AMOUNT RECORDING UNIT
50
CPU
11
PHYSICAL CORE <1>
21
LOGICAL CORE <1>
22
LOGICAL CORE <2>
11
PHYSICAL CORE <2>
21
LOGICAL CORE <3>
22
LOGICAL CORE <4>
...
11
PHYSICAL CORE <N>
21
LOGICAL CORE <2N-1>
22
LOGICAL CORE <2N>

# Fig. 37

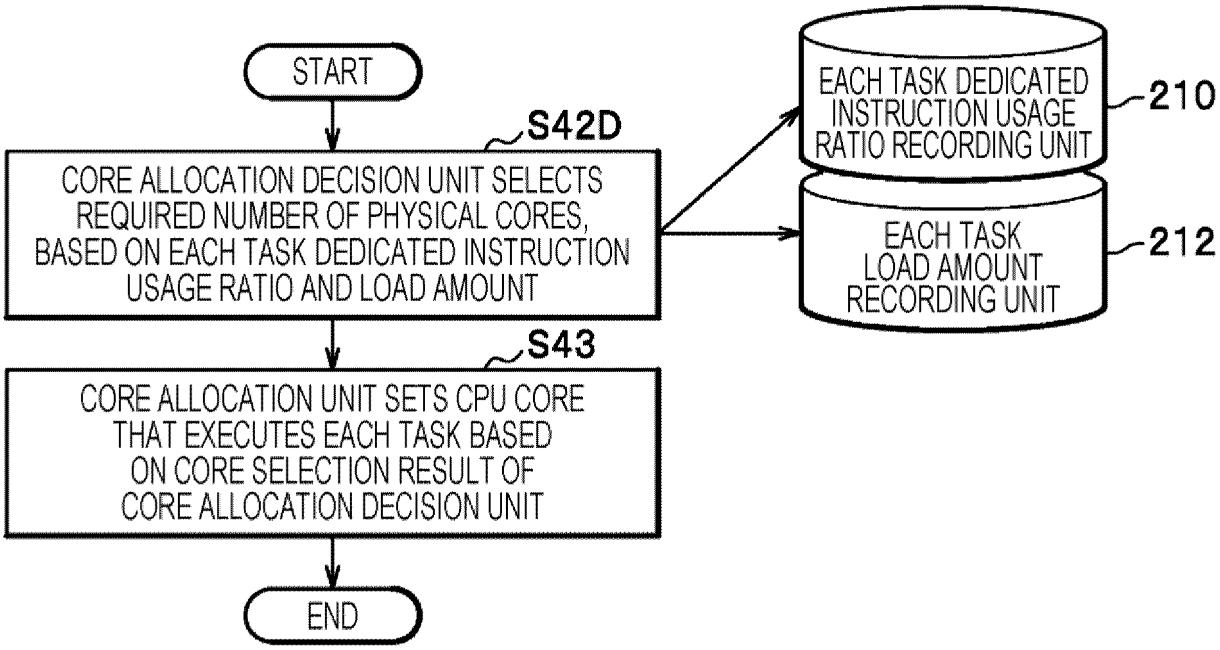
START
S42D
CORE ALLOCATION DECISION UNIT SELECTS REQUIRED NUMBER OF PHYSICAL CORES, BASED ON EACH TASK DEDICATED INSTRUCTION USAGE RATIO AND LOAD AMOUNT
EACH TASK DEDICATED INSTRUCTION USAGE RATIO RECORDING UNIT
210
EACH TASK LOAD AMOUNT RECORDING UNIT
212
S43
CORE ALLOCATION UNIT SETS CPU CORE THAT EXECUTES EACH TASK BASED ON CORE SELECTION RESULT OF CORE ALLOCATION DECISION UNIT
END

Fig. 38

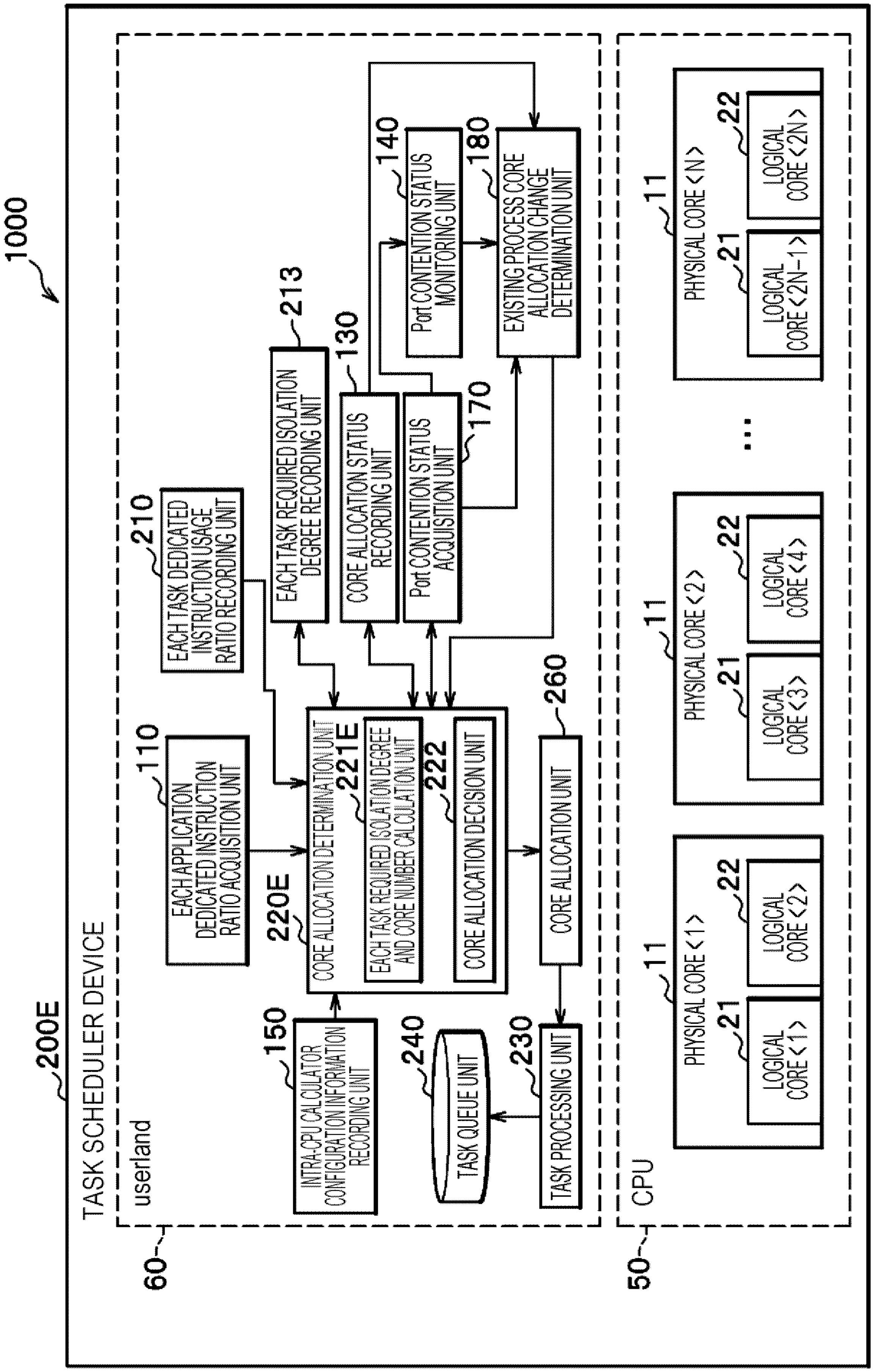
1000
200E
TASK SCHEDULER DEVICE
userland
60
110
EACH APPLICATION DEDICATED INSTRUCTION RATIO ACQUISITION UNIT
210
EACH TASK DEDICATED INSTRUCTION USAGE RATIO RECORDING UNIT
213
EACH TASK REQUIRED ISOLATION DEGREE RECORDING UNIT
130
CORE ALLOCATION STATUS RECORDING UNIT
170
Port CONTENTION STATUS ACQUISITION UNIT
140
Port CONTENTION STATUS MONITORING UNIT
180
EXISTING PROCESS CORE ALLOCATION CHANGE DETERMINATION UNIT
150
INTRA-CPU CALCULATOR CONFIGURATION INFORMATION RECORDING UNIT
220E
CORE ALLOCATION DETERMINATION UNIT
221E
EACH TASK REQUIRED ISOLATION DEGREE AND CORE NUMBER CALCULATION UNIT
222
CORE ALLOCATION DECISION UNIT
260
CORE ALLOCATION UNIT
240
TASK QUEUE UNIT
230
TASK PROCESSING UNIT
50
CPU
11
PHYSICAL CORE <1>
21
LOGICAL CORE <1>
22
LOGICAL CORE <2>
PHYSICAL CORE <2>
LOGICAL CORE <3>
LOGICAL CORE <4>
...
PHYSICAL CORE <N>
LOGICAL CORE <2N−1>
LOGICAL CORE <2N>

Fig. 39

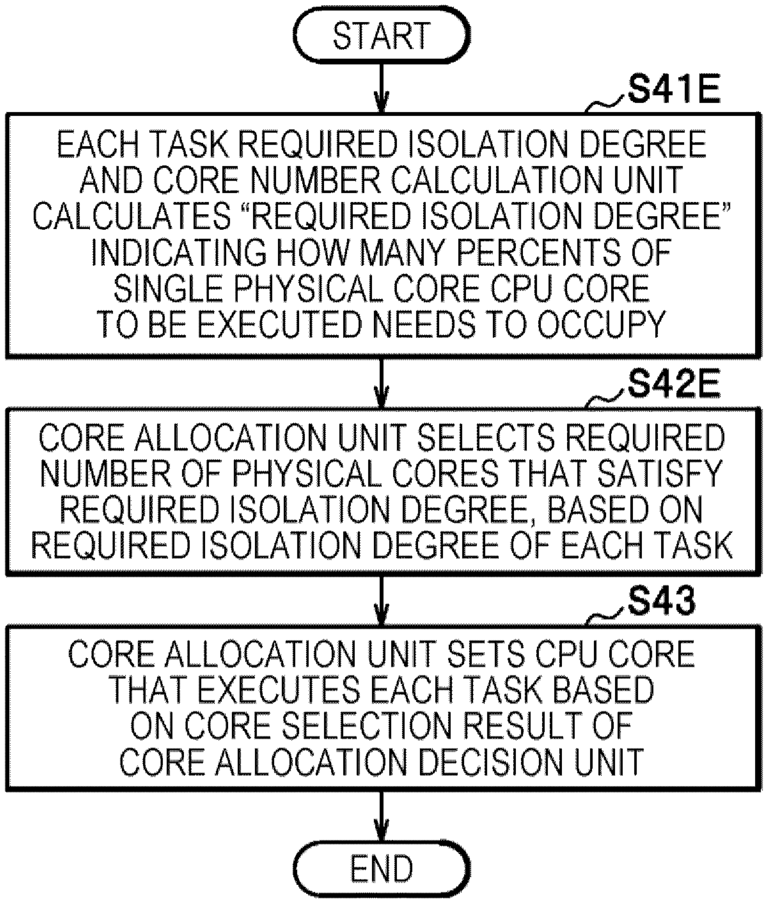
START
S41E
EACH TASK REQUIRED ISOLATION DEGREE AND CORE NUMBER CALCULATION UNIT CALCULATES "REQUIRED ISOLATION DEGREE" INDICATING HOW MANY PERCENTS OF SINGLE PHYSICAL CORE CPU CORE TO BE EXECUTED NEEDS TO OCCUPY
S42E
CORE ALLOCATION UNIT SELECTS REQUIRED NUMBER OF PHYSICAL CORES THAT SATISFY REQUIRED ISOLATION DEGREE, BASED ON REQUIRED ISOLATION DEGREE OF EACH TASK
S43
CORE ALLOCATION UNIT SETS CPU CORE THAT EXECUTES EACH TASK BASED ON CORE SELECTION RESULT OF CORE ALLOCATION DECISION UNIT
END

Fig. 40

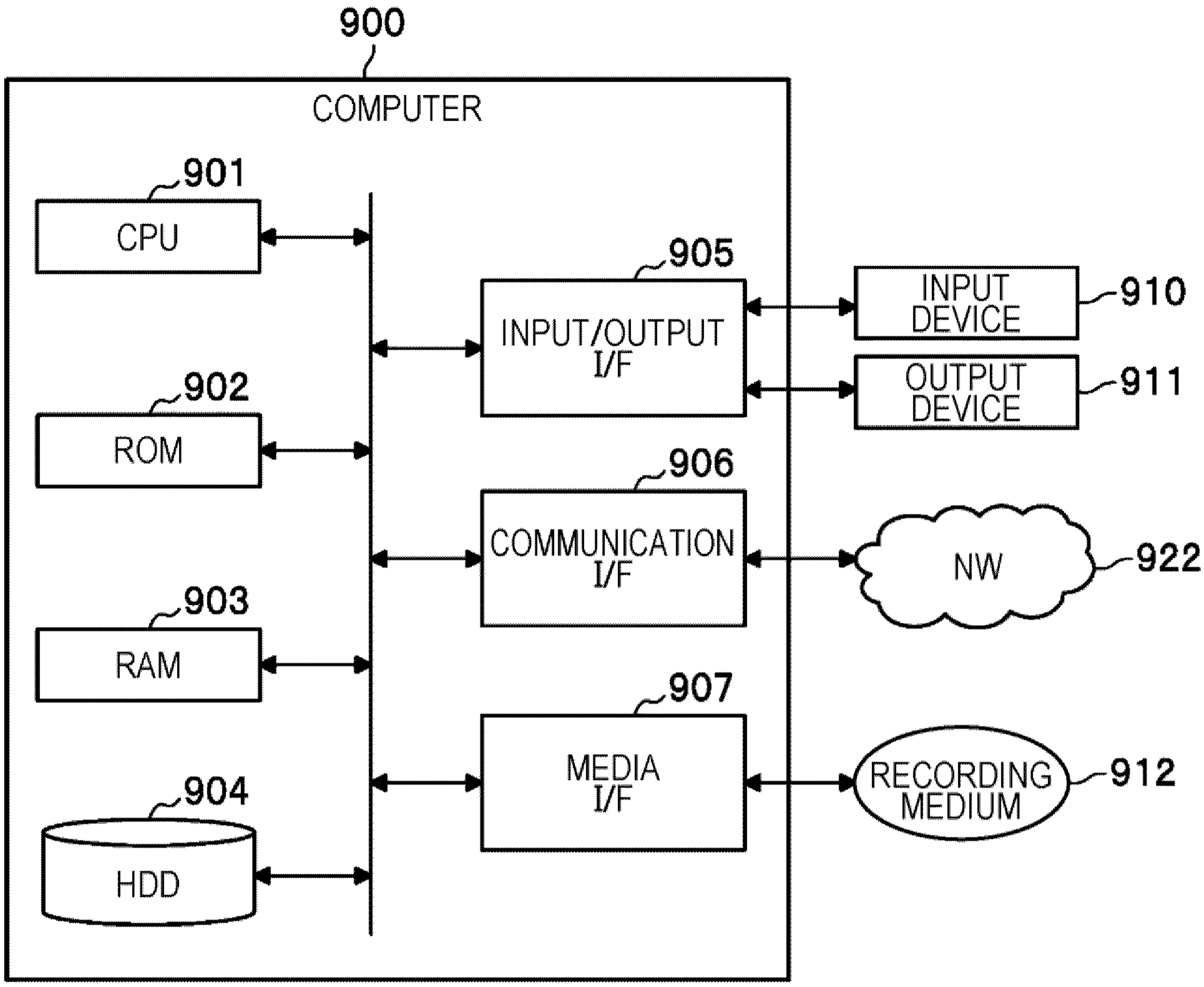
900
COMPUTER
901
CPU
902
ROM
903
RAM
904
HDD
905
INPUT/OUTPUT I/F
906
COMMUNICATION I/F
907
MEDIA I/F
INPUT DEVICE
910
OUTPUT DEVICE
911
NW
922
RECORDING MEDIUM
912

Fig. 41

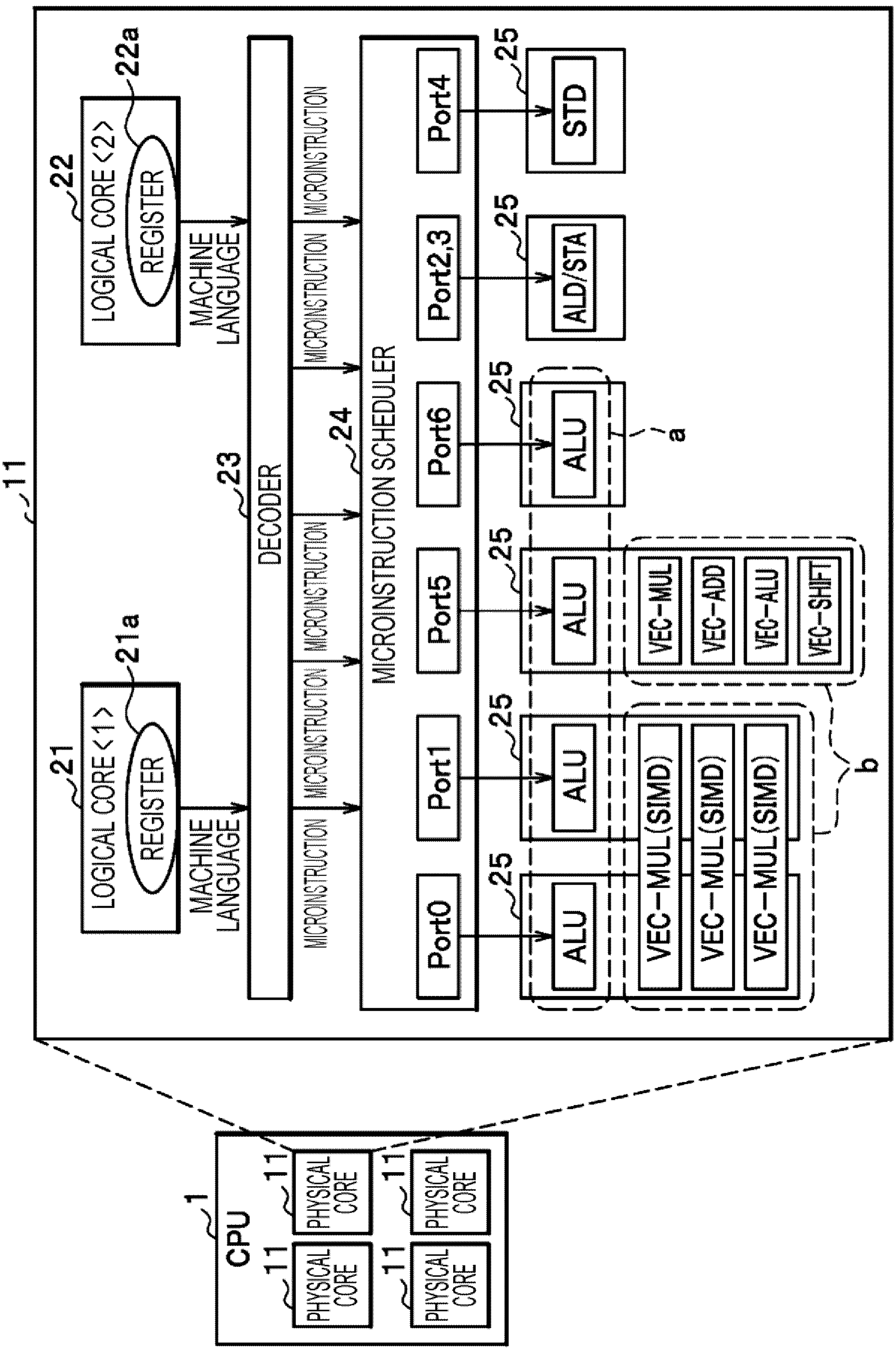
11
21
LOGICAL CORE <1>
REGISTER
21a
22
LOGICAL CORE <2>
REGISTER
22a
MACHINE LANGUAGE
MACHINE LANGUAGE
DECODER
23
MICROINSTRUCTION
MICROINSTRUCTION SCHEDULER
24
Port0
Port1
Port5
Port6
Port2,3
Port4
25
ALU
ALU
ALU
ALU
ALD/STA
STD
a
VEC−MUL(SIMD)
VEC−MUL(SIMD)
VEC−MUL(SIMD)
VEC−MUL
VEC−ADD
VEC−ALU
VEC−SHIFT
b
CPU
1
PHYSICAL CORE
11

Fig. 42

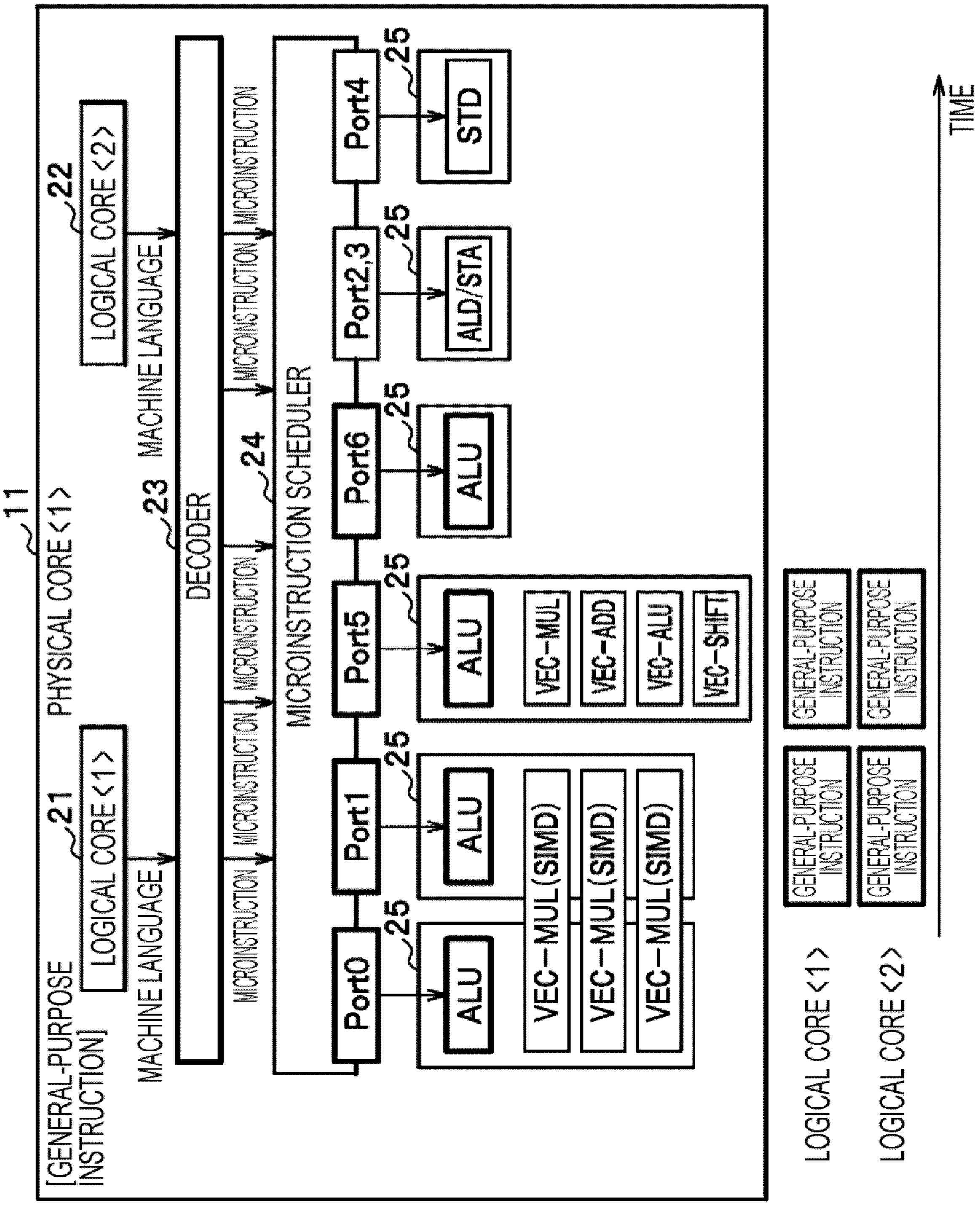
11
PHYSICAL CORE <1>
[GENERAL-PURPOSE INSTRUCTION]
21
LOGICAL CORE <1>
22
LOGICAL CORE <2>
MACHINE LANGUAGE
MACHINE LANGUAGE
23
DECODER
MICROINSTRUCTION
MICROINSTRUCTION
MICROINSTRUCTION
MICROINSTRUCTION
MICROINSTRUCTION
24
MICROINSTRUCTION SCHEDULER
25
Port0
Port1
Port5
Port6
Port2,3
Port4
ALU
ALU
ALU
ALU
ALD/STA
STD
VEC-MUL(SIMD)
VEC-MUL(SIMD)
VEC-MUL(SIMD)
VEC-MUL
VEC-ADD
VEC-ALU
VEC-SHIFT
LOGICAL CORE <1>
LOGICAL CORE <2>
GENERAL-PURPOSE INSTRUCTION
GENERAL-PURPOSE INSTRUCTION
GENERAL-PURPOSE INSTRUCTION
GENERAL-PURPOSE INSTRUCTION
TIME

# Fig. 43

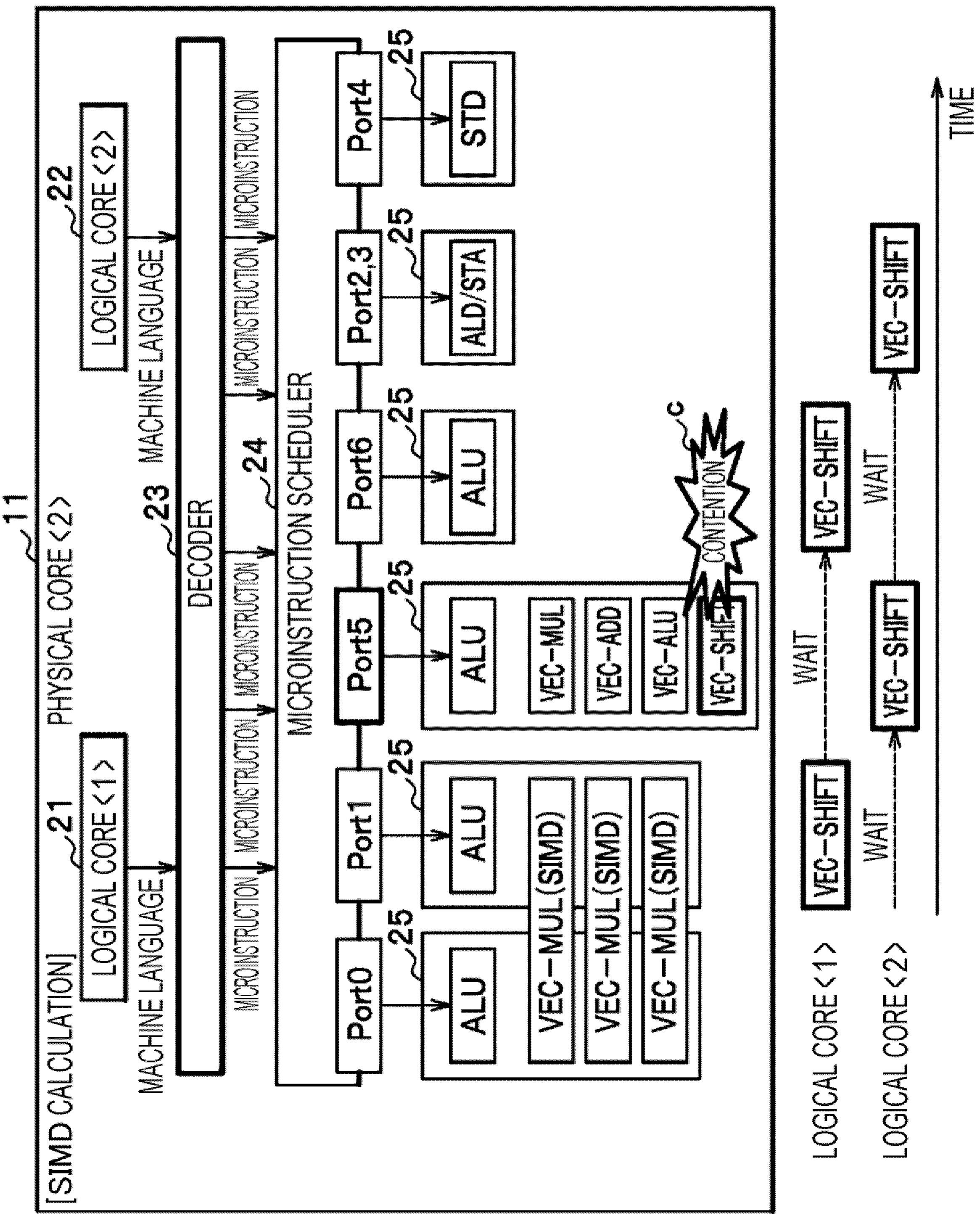
[SIMD CALCULATION]
11
PHYSICAL CORE〈2〉
21
LOGICAL CORE〈1〉
22
LOGICAL CORE〈2〉
MACHINE LANGUAGE
MACHINE LANGUAGE
23
DECODER
MICROINSTRUCTION
MICROINSTRUCTION
MICROINSTRUCTION
MICROINSTRUCTION
MICROINSTRUCTION
MICROINSTRUCTION
24
MICROINSTRUCTION SCHEDULER
Port0
Port1
Port5
Port6
Port2,3
Port4
25
ALU
VEC−MUL(SIMD)
VEC−MUL(SIMD)
VEC−MUL(SIMD)
ALU
VEC−MUL
VEC−ADD
VEC−ALU
VEC−SHIFT
ALD/STA
STD
c
CONTENTION
LOGICAL CORE〈1〉
LOGICAL CORE〈2〉
VEC−SHIFT
WAIT
TIME

Fig. 44

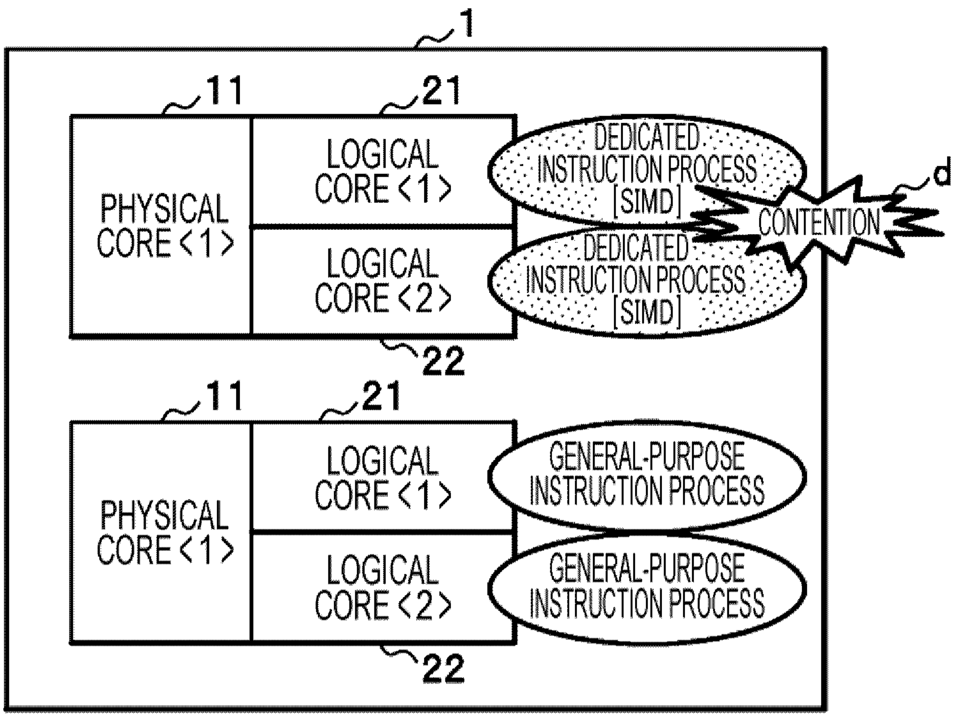
1
11
21
PHYSICAL CORE <1>
LOGICAL CORE <1>
DEDICATED INSTRUCTION PROCESS [SIMD]
d
CONTENTION
LOGICAL CORE <2>
DEDICATED INSTRUCTION PROCESS [SIMD]
22
11
21
PHYSICAL CORE <1>
LOGICAL CORE <1>
GENERAL-PURPOSE INSTRUCTION PROCESS
LOGICAL CORE <2>
GENERAL-PURPOSE INSTRUCTION PROCESS
22

# INTERNATIONAL SEARCH REPORT

International application No.
**PCT/JP2023/043343**

**A. CLASSIFICATION OF SUBJECT MATTER**

***G06F 9/48***(2006.01)i; ***G06F 9/46***(2006.01)i; ***G06F 9/50***(2006.01)i
FI: G06F9/48 300H; G06F9/46 410; G06F9/50 150A

According to International Patent Classification (IPC) or to both national classification and IPC

**B. FIELDS SEARCHED**

Minimum documentation searched (classification system followed by classification symbols)

G06F9/48; G06F9/46; G06F9/50

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 07-013963 A (HITACHI, LTD.) 17 January 1995 (1995-01-17) abstract | 1-17 |
| A | US 2021/0208932 A1 (INTERNATIONAL BUSINESS MACHINES CORP.) 08 July 2021 (2021-07-08) paragraphs [0033], [0037], [0047] | 1-17 |
| A | JP 2020-503593 A (INTEL CORPORATION) 30 January 2020 (2020-01-30) paragraphs [0162], [0238]-[0244], [0256], [1049], [1060] | 1-17 |
| A | JP 2020-144737 A (FUJITSU LIMITED) 10 September 2020 (2020-09-10) paragraphs [0113]-[0127] | 1-17 |
| A | KR 10-2011-0070299 A (ELECTRONICS AND TELECOMMUNICATIONS RESEARCH INSTITUTE) 24 June 2011 (2011-06-24) paragraphs [0003], [0025]-[0027], [0030] | 2, 8-14, 16-17 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 February 2024** | **20 February 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

INTERNATIONAL SEARCH REPORT

International application No.
PCT/JP2023/043343

C. DOCUMENTS CONSIDERED TO BE RELEVANT

| Category* | Citation of document, with indication, where appropriate, of the relevant passages | Relevant to claim No. |
|---|---|---|
| A | JP 2017-011385 A (KONICA MINOLTA, INC.) 12 January 2017 (2017-01-12) paragraphs [0036], [0042]-[0044] | 2, 8-14, 16-17 |
| A | JP 2019-179397 A (DENSO CORPORATION) 17 October 2019 (2019-10-17) paragraphs [0026]-[0031], [0045]-[0052] | 2, 8-14, 16-17 |
| P, A | CN 116089089 A (LENOVO (BEIJING) CO., LTD.) 09 May 2023 (2023-05-09) paragraphs [0070], [0071], [0088], [0089], [0094], [0097], [0098], [0125], [0129], [0160] | 2, 8-14, 16-17 |

Form PCT/ISA/210 (second sheet) (July 2022)

**INTERNATIONAL SEARCH REPORT**
**Information on patent family members**

International application No.
**PCT/JP2023/043343**

| Patent document cited in search report | Publication date (day/month/year) | Patent family member(s) | Publication date (day/month/year) |
|---|---|---|---|
| JP 07-013963 A | 17 January 1995 | (Family: none) | |
| US 2021/0208932 A1 | 08 July 2021 | (Family: none) | |
| JP 2020-503593 A | 30 January 2020 | WO 2018/125250 A1<br>paragraphs [0162], [0238]-[0244], [0256], [1049], [1060]<br>KR 10-2019-0093568 A<br>CN 110121698 A<br>US 2019/0347125 A1 | |
| JP 2020-144737 A | 10 September 2020 | US 2020/0285510 A1<br>paragraphs [0152]-[0166] | |
| KR 10-2011-0070299 A | 24 June 2011 | (Family: none) | |
| JP 2017-011385 A | 12 January 2017 | (Family: none) | |
| JP 2019-179397 A | 17 October 2019 | (Family: none) | |
| CN 116089089 A | 09 May 2023 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- *Linux CFS Scheduler, The Linux Kernel6.2.0*, 01 March 2023, https://www.kernel.org/doc/html/latest/scheduler/sched-design-CFS.html
- *srsRAN workerpool*, 01 November 2023, https://docs.srsran.com/projects/project/en/latest/knowledge _base/source/gnb_components/source/index.html